# EUROPÄISCHE PATENTSCHRIFT

(11) **EP 0 344 251 B1**
(45) Veröffentlichungstag und Bekanntmachung des Hinweises auf die Patenterteilung: **08.09.1993**
(21) Anmeldenummer: 88910024.4
(22) Anmeldetag: 21.11.1988
(51) Int. Cl.: G03B 23/02

(54) **VORRICHTUNG ZUM ZYKLISCHEN UMSCHICHTEN EINES BLATTSTAPELS**
DEVICE FOR CYCLIC MODIFICATION OF THE DISTRIBUTION OF A PILE OF SHEETS
MODIFICATION CYCLIQUE DE LA DISTRIBUTION D'UNE PILE DE FEUILLES

(30) Priorität: 21.11.1987 DE 3739500
(43) Veröffentlichungstag der Anmeldung: 06.12.1989
(73) Patentinhaber: Licinvest AG, CH-7002 Chur (CH)
(72) Erfinder: ACKERET, Peter, CH-8700 Küsnacht (CH)
(74) Vertreter: Sparing Röhl Henseler Patentanwälte
(86) Internationale Anmeldenummer: EP8801053
(87) Internationale Veröffentlichungsnummer: WO8904991

(56) Entgegenhaltungen:
- WO-A-86/03029
- FR-A- 2 403 574
- FR-A- 2 454 112

## Beschreibung

Die Erfindung betrifft eine Vorrichtung für das zyklische Umschichten eines Stapels im wesentlichen rechteckiger Blätter mit den im Oberbegriff des Patentanspruchs 1 genannten Merkmalen. Eine solche, kurz als "Blattwechsler" bezeichnete Vorrichtung ist aus dem Dokument WO 86/03029 bekannt.

Bei dem bekannten Blattwechsler wird die Anpreßeinrichtung von Blattfedern gebildet, die beim Auseinanderziehen der Rahmenteile von am zweiten Rahmenteil angebrachten Kufen gesteuert werden, welche auf die Blattfedern auflaufen. Das macht den bekannten Blattwechsler schwergängig und führt zu Verschleiß, da aus Kostengründen die Rahmenteile selbst aus möglichst preisgünstigem Kunststoff gespritzt werden.

Aufgabe der Erfindung ist es, einen leichtgängigen und verschleißarmen Blattwechsler gleicher Gattung zu schaffen. Die erfindungsgemäß dafür vorgesehenen Merkmale sind im Patentanspruch 1 zusammengefaßt; die von ihm abhängenden Ansprüche definieren bevorzugte Ausgestaltungen des erfindungsgemäßen Konzepts.

Es ist darauf hinzuweisen, daß aus dem Dokument FR-A-2 403 574 ein Blattwechsler bekannt ist, bei dem Metallschienen, auf einer Federanordnung abgestützt, als Anpreßeinrichtung dienen. Auf den Schienen sind Streifen aus einem Material angebracht, das mit der freiliegenden Seite des zu vereinzelnden Blattes einen hohen Reibungskoeffizienten definiert, wodurch das Einzelblatt von den Schienen festgehalten werden soll, wenn die Rahmenteile auseinandergezogen werden. Beim Zusammenschieben der Rahmenteile soll der Stapelmitnehmer das abgetrennte Einzelblatt von den Schienen abschälen. Auch hier werden die Schienen von Kufen des zweiten Rahmenteils gesteuert.

Weitere Einzelheiten von Blattwechslern sind in den Dokumenten WO 86/03019, WO 86/03018, WO 86/03022, WO 86/03028 und WO 03030 beschrieben.

Weitere Merkmale und Vorteile der Erfindung ergeben sich aus den Unteransprüchen beziehungsweise aus der Beschreibung von Ausführungsbeispielen.

Ausführungsbeispiele der Erfindung werden nachstehend unter Bezugnahme auf die beigefügten Zeichnungen im einzelnen erläutert.
Fig. 1 stellt perspektivisch eine Federschiene und mit ihr zusammenwirkende Bauteile des Gehäuses dar,
Fig. 2 zeigt schematisch einen Querschnitt im Bereich der Schiene im Zusammenwirken mit dem Separatorschuh,
Fig. 3 ist ein Längsschnitt durch den Separatorschuh,
Fig. 3a zeigt den Schuh in Perspektive,
Fig. 4 ist ein Schnitt senkrecht zur Schieberbewegungsrichtung über die Breite des Schiebers,
Fig. 5 zeigt analog Fig. 2 die Verhältnisse beim Schiebereinschub,
Fig. 6 zeigt analog Fig. 5 die Positionen der Teile in Höhe des Separatorschuhs beim Einschub,
Fig. 7 stellt in schematischer Seitenansicht die Position des Schuhs und der Schiene mit nur wenigen Blättern im Wechsler dar,
Fig. 8 stellt in schematisiertem Längsschnitt die relative Lage der Teile bei eingeschobenem Schieber dar,
Fig. 9 zeigt analog den Beginn des Auszugs,
Fig. 10 zeigt analog eine etwas spätere Phase,
Fig. 11 stellt im Detail, in schematisierter Längsschnittdarstellung, die Anlaufphase des Umschichtvorgangs im Zusammenwirken zwischen Separator und Schienen dar,
Fig. 12 zeigt eine nächste Phase in analoger Darstellung,
Fig. 13 Zeigt eine spätere Phase,
Fig. 14 eine darauffolgende Phase,
Fig. 15 die nächste Phase,
Fig. 16 zeigt analog den vorangehenden Figuren die relative Position der Teile bei ausgezogenem Schieber,
Fig. 17 zeigt im Detail die Endstellung des Separators relativ zu den Schienen,
Fig. 18 bis 20 entsprechen den Figuren 8 bzw. 16 bzw. 15 bei einer alternativen Gestaltung der Schienen,
Fig. 21 zeigt das frontseitige Ende einer Schiene aus Fig. 18 - 20,
Fig. 22 ist ein Längsschnitt durch den geschlossenen Wechsler zur Erläuterung des Gehäuseaufbaus,
Fig. 23 ist ein Teilschnitt senkrecht zur Schnittebene der Fig. 22 in gegenüber dieser Figur vergrößerter Darstellung,
Fig. 24 bis 29 zeigen das Verhalten der Hilfsfedern in verschiedenen Phasen und Betriebsarten des Wechslers,
Fig. 30 und 31 zeigen in zwei unterschiedlichen Phasen die Wirkungsweise einer alternativen Ausführungsform der Halteeinrichtung für das Einzelblatt,
Fig. 32 bis 34 zeigen schematisch eine weitere Konstruktion für die Halterung eines Einzelblatts,
Fig. 35 bis 37 zeigen im Teilschnitt unter zwei zueinander senkrechten Ebenen die Auslöseeinrichtung für die Stapelgesamtentnahme,
Fig. 38, 39 zeigen in schematisiertem Längsschnitt die Wirkungsweise dieses Organs,
Fig. 40 zeigt perspektivisch einen Wechsler, und anhand dieser Figur soll zunächst generell die Arbeitsweise des Wechslers erläutert werden,
Fig. 41a, b illustrieren ein Problem, das bei gewölbten Blättern auftritt,
Fig. 41c und 42 zeigen eine Schienenform zur Behebung dieses Problems,
Fig. 43 bis 46 zeigen vier Phasen des beginnenden Wechselvorgangs am anderen Ende der Schienen des abgewandelten Ausführungsbeispiels,
Fig. 47 stellt in perspektivischer Teilansicht das abgewandelte Schienenverankerungssystem dar,
Fig. 48 zeigt in schematisierter Vertikalschnittdarstellung die Lage der zusammenwirkenden Teile bei zusammengeschobenen Rahmenteilen,
Fig. 49 zeigt in analoger Darstellung die Situation bei teilweise auseinandergezogenen Rahmenteilen,
Fig. 50 zeigt in Teilperspektive die Elemente für die Inaktivierung des Wechselvorgangs,
Fig. 50a zeigt das Zusammenwirken von Schiene, Separator und Schieber in teilperspektivischer Darstellung,
Fig. 51 zeigt in perspektivischer Darstellung das Drahtbiegeteil, das in die Schiene nach Fig. 50 eingefügt ist,
Fig. 52 verdeutlicht die Montage des Drahtbiegeteiles,
Fig. 53 zeigt in stark vergrößertem Maßstab die Wirkungsweise des Inaktivierungsbügels,
Fig. 54 zeigt im Querschnitt durch die Schiene die Lage und Halterung des Drahtbügels,
Fig. 55 bis 58 zeigen vier Phasen der Inaktivierung des Systems,
Fig. 59 zeigt in Draufsicht auf die Bodenseite des Gehäuses die Anordnung des Inaktivierungssystems,
Fig. 60 ist ein Schnitt in Höhe der Linie 60-60 aus Fig. 59,
Fig. 61A-61C zeigen Details des Inaktivierungssystems in Funktion,
Fig. 62 stellt in vergrößerter Darstellung ein weiter abgewandeltes Ausführungsbeispiel in Teilschnitt-Vertikalansicht dar,
Fig. 63 und 64 zeigen den Ablauf bei beginnendem Schieberauszug,
Fig. 65 zeigt analog Fig. 62 eine weitere Ausführungsform, und
Fig. 66 zeigt noch eine weitere Alternative in analoger Darstellung.

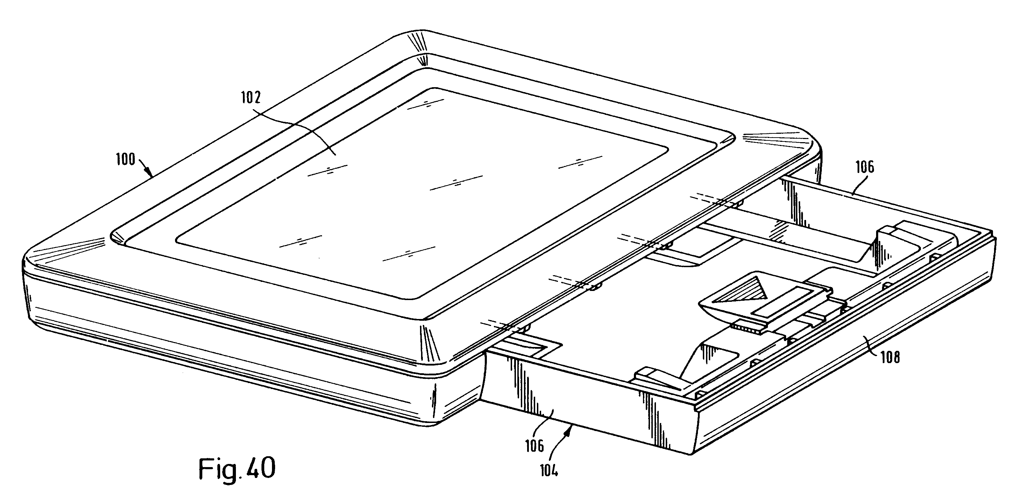

Der Wechsler gemäß Fig. 40 ähnelt einem konventionellen Bilderrahmen zum Aufhängen oder Aufstellen. Er umfaßt ein Gehäuse 100, das auf seiner Oberseite (soweit im folgenden die Begriffe "oben" bzw. "unten" benutzt werden, beziehen sie sich immer auf die Position relativ zum Gehäuse, gleichgültig, wie dieses selbst im Raum angeordnet ist) ein Sichtfenster 102 in Form einer transparenten Scheibe 102 aufweist. Prallel zu dessen Ebene ist aus dem Gehäuse ein Schieber 104 herauszieh- und hineinschiebbar, und bei jeder vollständigen Hinundherbewegung des Schiebers erfolgt im Normalbetrieb ein Blattwechsel, das heißt, ein im Wechsler untergebrachter Stapel von Blättern, beispielsweise Fotoabzüge, wird derart zyklisch umgeschichtet, daß beim Herausziehen des Schiebers das unterste Blatt des Stapels im Gehäuse festgehalten wird, während der Schieber den Reststapel aus da Gehäuse heraus mitnimmt; beim Wiedereinschub des Schiebers wird das Blatt auf dem Reststapel abgelegt. Im Innern des Gehäuses befindet sich eine Stapelandruckanordnung, die bei eingeschobenem Schieber den Stapel nach oben drückt und beim Auszug des Schiebers nach unten gedrückt wird. Das geschieht mittels eines hinteren und inneren Querstegs des Schiebers, der - weil er das Einzelblatt vom Reststapel trennt - als "Separator" bezeichnet wird; der Schieber umfaßt im übrigen zwei parallele seitliche Holme 106 mit L-förmigem Querschnitt und eine Frontbaugruppe 108; da der Schieber unten offen ist, kann die im Gehäuse befestigte Andruckanordnung auf die von den Holmen des Schiebers getragenen Blätter einwirken.

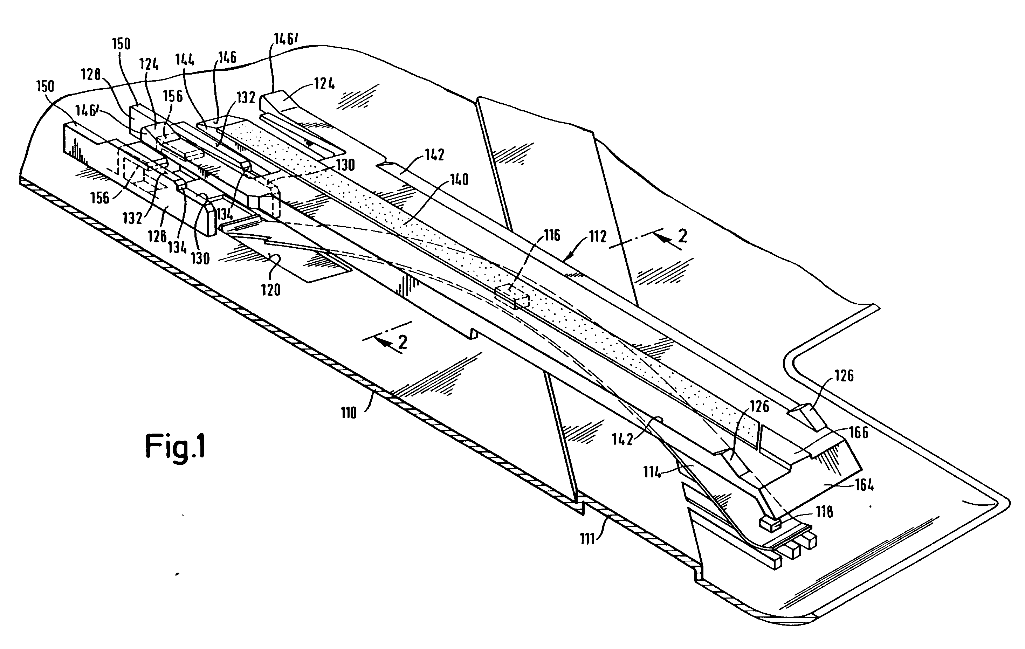

Man erkennt in Fig. 1 die Bodenplatte 110 des Wechslergehäuses, wobei die eingesenkte Nut 111 dazu dient, einen Ständer zum Aufstellen des Wechslers nach Art eines Aufstellrahmens versenkt und ausklappabar unterzubringen. Ein Blattstapel (nicht dargestellt) wird von einer Andruckanordnung gegen das im Gehäuse vorgesehene Sichtfenster 102 gedrückt, solange der Schieber 104 vollständig in das Gehäuse eingeschoben ist.

Die Andruckanordnung umfaßt zwei zueinander und zur Bewegungsrichtung des Schiebers 104 parallele Schienen 112, die jeweils auf einer zugeordneten Blattfeder 114 befestigt sind. Hierfür weist die Schiene, die aus Kunststoff gespritzt ist, einen Nietfortsatz 116 auf, der bei der Montage durch einen entsprechenden Durchbruch der metallischen Blattfeder gesteckt und hinter diesem breitgequetscht wird. Ein Ende der Blattfeder 114 wird auf einen Positionierzapfen 118 am Boden 110 des Wechslergehäuses gesteckt, während das andere, freie Ende der Blattfeder zwar seitlich durch die Wandungen einer Nut 120 im Gehäuseboden abgestützt ist, sich aber in Längsrichtung ("längs" bedeutet hier und im folgenden "in Richtung der Schieberbeweung"; "quer" bedeutet senkrecht zu längs) der Schiene bewegen kann. Die Blattfeder ist zu einem nach oben gewölbten Bogen geformt, und etwa in dessen Mitte ist die Schiene 112 befestigt. Da beide Schienen und die zugehörigen Federn und Gehäuseteile spiegelsymmetrisch gleich bezüglich der Mittellängsebene des Wechslers ausgebildet sind, genügt es, nur eine Hälfte der Andruckanordnung im einzelnen zu erläutern.

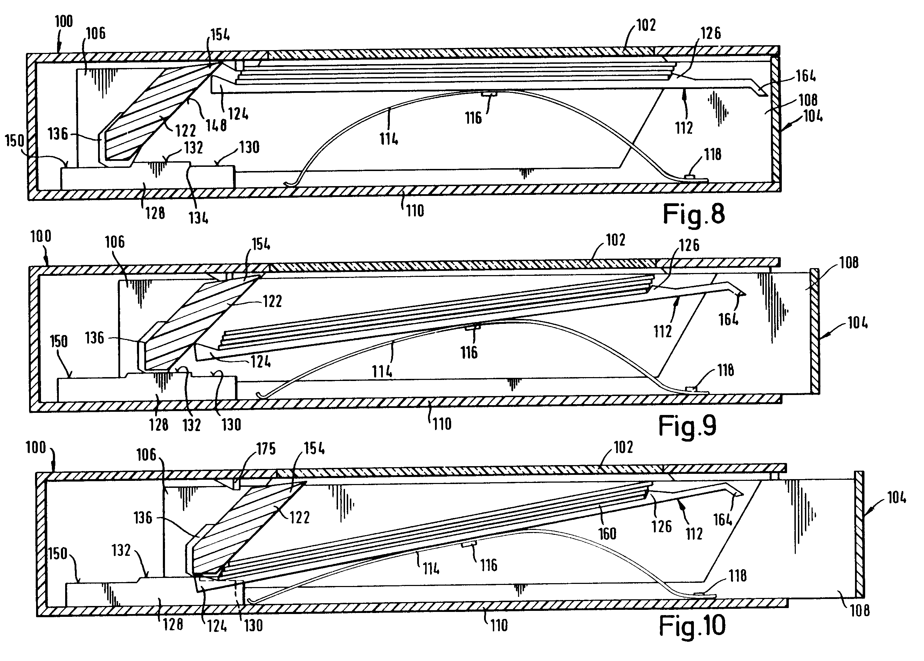

Beim Herausziehen des Schiebers 104 läuft dessen Separator 122 auf die beiden äußeren Zinken 124 am inneren Ende der Schiene 112 auf ("innen" bedeutet "der Schieberfront abgewandt", "außen" bedeutet "nahe der Gehäuseöffnung, durch die sich der Schieber bewegt") und drückt sie gegen die Kraft der Blattfeder 114 nach unten. Der von den Schienen 124 abgestützte Blattstapel (Fig. 10) entfernt sich dabei ebenfalls vom Sichtfenster 102, und der Separator nimmt ihn mit nach außen mit Ausnahme des untersten Blattes, das auf den Schienen festgehalten wird. Hierfür sind die folgenden Maßnahmen getroffen:
Zunächst weist die Schiene nahe ihrem äußeren Ende angeformte, hochstehende Fortsätze 126 auf, an denen sich die untersten Blätter des Stapels abstützen, so daß sie gegenüber der Separatorbewegung gebremst werden. Nahe dem inneren Schienenende sind an den Gehäuseboden 110 beidseits der Zinken 124 hochstehende schmale Leisten 128 angeformt, die eine gehäusebodenparallele Supportfläche 130 sowie eine Sperrfläche 132 parallel dazu aufweisen, voneinander durch eine Stufe 134 getrennt. Sobald die Schienen 112 vom Separator niedergedrückt werden, legt sich die innere Kante des untersten Blattes im Stapel auf die Supportflächen 130. Die Stufe 134 hat eine Höhe, die größer ist als die Dicke eines Blattes, aber kleiner als die Dicke zweier Blätter, so daß diese Blattkante des untersten Blattes geschützt liegt hinter den Stufen und vom Separator überlaufen wird. Das nächstunterste Blatt hingegen wird vom Separator mitgenommen und rutscht dabei von den Fortsätzen 126 ab. An der den Schienen zugekehrten Seite des Separators sind federvorgespannte Schuhe 136 mit Röllchen 138 montiert, wie noch im einzelnen zu erläutern. Die Röllchen haben eine Breite etwa gleich der eines Haftbelagstreifens 140, der auf jeder Schiene mittig angebracht ist.

Der Haftbelag wird so bezeichnet, weil er aus einem Material besteht, das mit dem Material der zu wechselnden Blätter einen deutlich höheren Reibungskoeffizienten aufweist, als dieses Material mit sich selbst (das heißt, die Reibung zwischen dem untersten Blatt und dem Haftbelag ist viel höher als die zwischen dem untersten Blatt und dem ihm im Stapel unmittelbar benachbarten). Der Haftbelag kann nur aus einer Aufrauhung des Schienenmaterials bestehen, aber auch aus einer Spezialbeschichtung eines Elastomers oder dergleichen. Die von unten wirkende Kraft der Feder 114 preßt das unterste Blatt mit dem Haftbelag gegen das zugeordnete Röllchen, so daß das Blatt festgeklemmt gehalten wird.

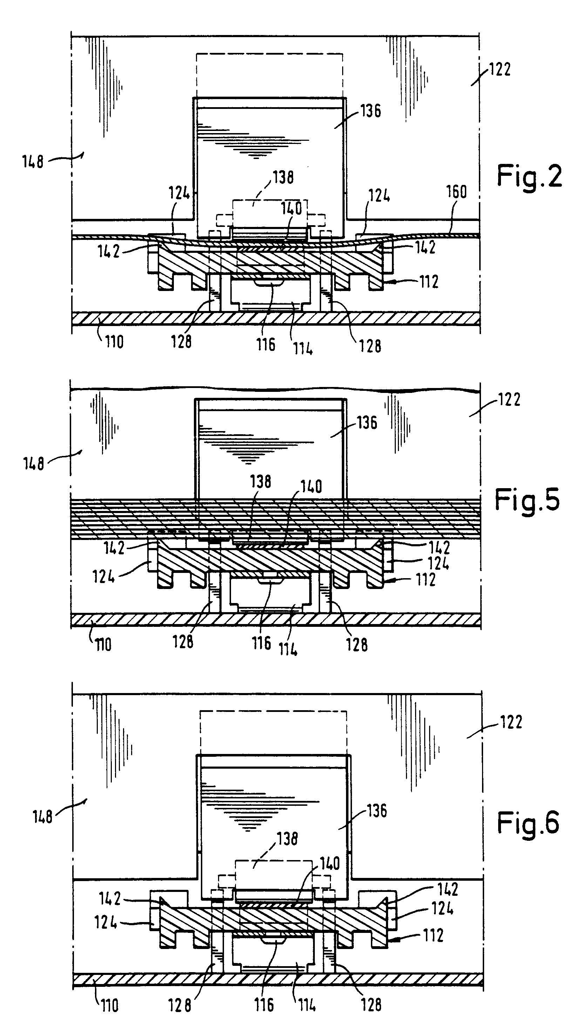

Der Schienenquerschnitt nach Fig. 2 läßt die Wirkung von zwei seitlichen, hochstehenden Rippen 142 erkennen: Die Oberseite des Haftbelags liegt eingesenkt gegenüber der Ebene, die von den Rippen definiert wird und auf der das Einzelblatt liegt, und das Röllchen verformt das Blatt, wie in Fig. 2 (übertrieben) dargestellt. Das ist von Bedeutung für den Rückschub des Schiebers, bei dem ja das Einzelblatt sich oben nahe dem Sichtfenster befindet und der Reststapel längs der Schienen wieder in das Gehäuse hineintransportiert wird: Die Röllchen des Separators laufen dann vorweg auf den Haftbelägen (Fig. 6), während das dann unterste Blatt des Reststapels mittels der Rippen 142 von den Haftbelägen 140 distanziert wird, so daß diese den ungebremsten Einschub des Reststapels gewährleisten (Fig. 5).

Fig. 6 läßt erkennen, daß das Röllchen 138 schmaler ist als der Schuh 136, der seinerseits breit genug ist, daß er sich bei vollständig eingeschobenem Schieber innerhalb der Zinken 124 und beidseits der mittleren Zunge 144 der Schiene, auf der der Haftbelag endet, auf die Sperrflächen 132 setzt und unter Federkraft an diesen anliegt, wenn am Schieber gezogen wird. Der Schuh einerseits, die Supportflächen andererseits begrenzen so einen Durchlaßspalt für das Einzelblatt, und die Spalthöhe wird von der Stufe 134 bestimmt. Erst wenn die betreffende Kante des Einzelblatts in den Durchlaßspalt ragt, läuft das Röllchen sanft auf die schräge Auflaufkante 146 am freien Ende der Zunge 144 auf; genauer gesagt, legt sich diese Zunge sanft von unten an das Röllchen an, weil das Schienenende durch Auftreffen des Separators 122 beidseits des Schuhs auf die verdickten Enden 146' der Zinken 124 die Schiene "zu weit" niedergedrückt hatte.

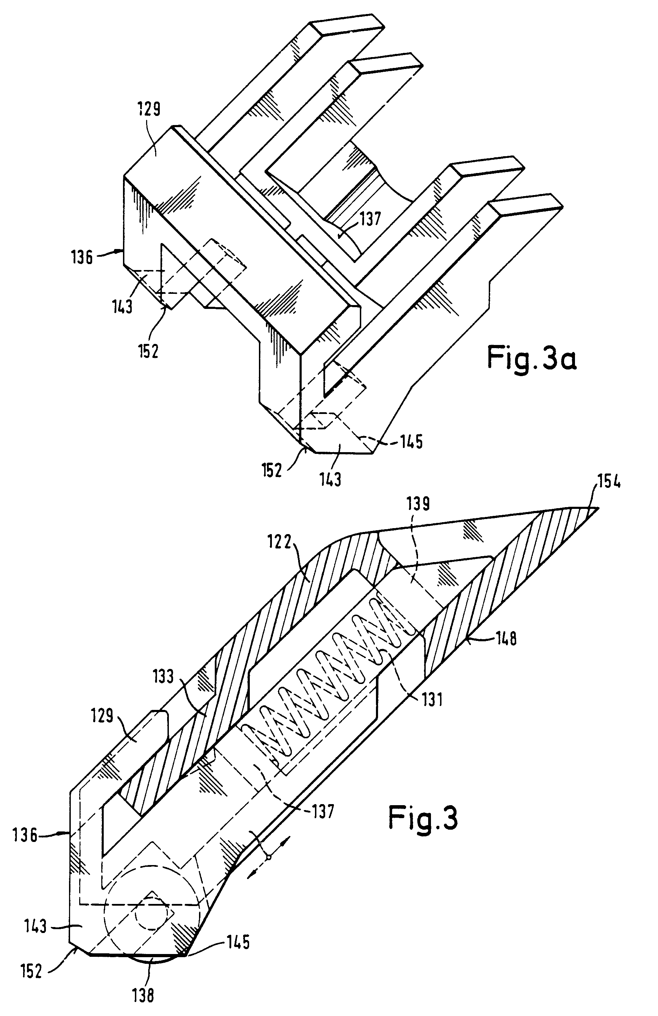

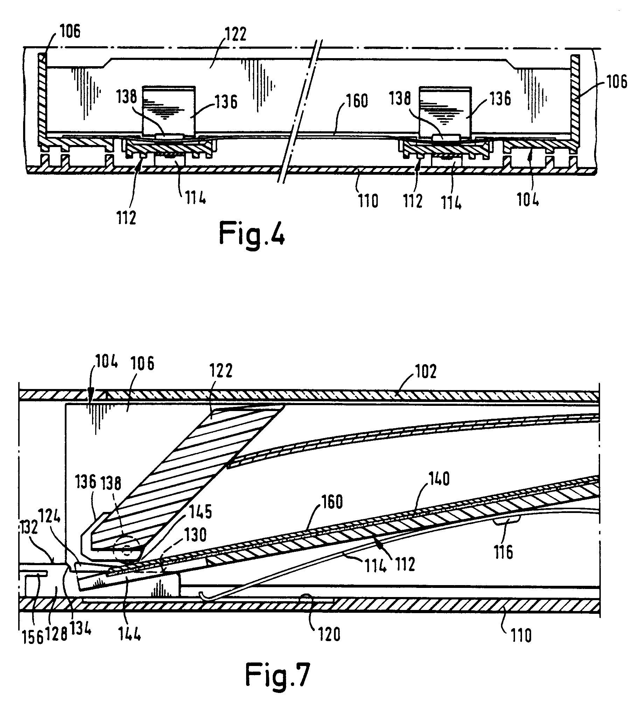

Wie Fig. 3 und 3a erkennen lassen, bildet der Schuh 136 mit dem vorzugsweise aus Metall bestehenden Röllchen eine Baugruppe, die in dem Separator beweglich geführt ist. Zwischen einem Quersteg 137 des Schuhs und einer an den Separator angeformten Abstützung 139 ist eine Schraubendruckfeder 131 mit Vorspannung eingefügt. Beidseits der Feder weist der Separator abgekröpfte Fortsätze 133 auf, die eine Deckfläche 129 des Schuhs untergreifen und den Schuh mittels einer Einschnappnase gegen Herausfallen sichern; der Schuh ist jedoch gegen die Federvorspannung um eine begrenzte Strecke in einer Richtung etwa parallel zur schrägen Auflauffläche 148 des Separators verlagerbar. Das Röllchen 138 ist von unten in die Lagerböckchen 143 des Schuhs eingefügt und in nicht dargestellter Weise gegen Herausfallen gesichert. Diese Sicherungen gegen Herausfallen sind nicht betriebsnotwendig, sondern vereinfachen die Montage. - Die beim Schieberauszug vor dem Röllchen laufende Kante 145 des Schuhs ist gegenüber dem Röllchen soweit zurückgesetzt, daß sie auch dann nicht das Einzelblatt berühren kann, wenn sich nur wenige Blätter im Wechsler befinden und die Schienen deshalb stark geneigt gegen die Ebene des Sichtfensters stehen (Fig. 7).

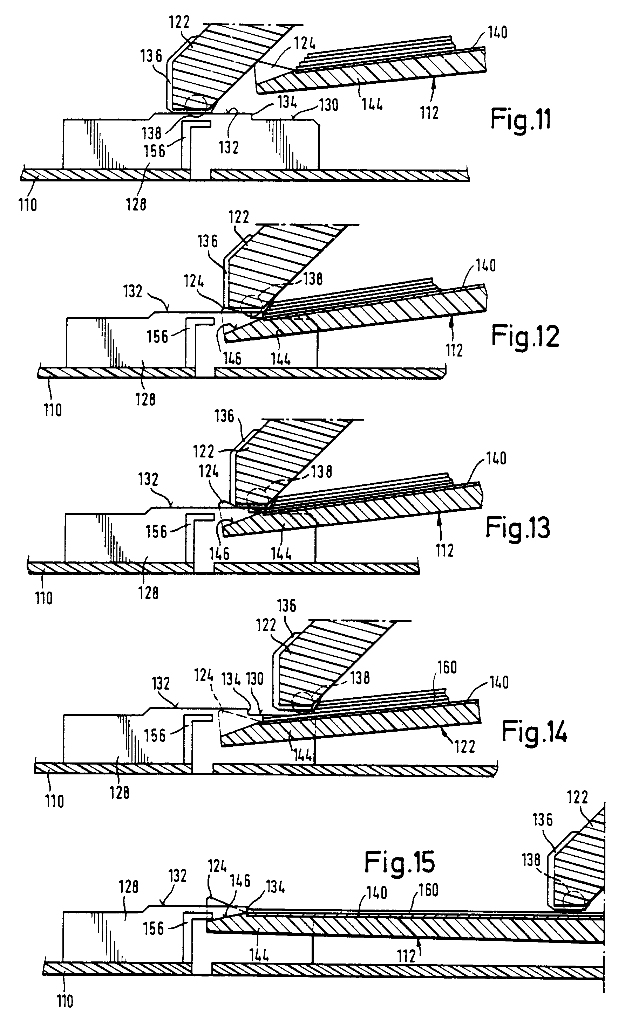

Fig. 8 bis 10 zeigen in schematischer Seitenansicht die Vorgänge in der Startphase des Blattwechsels, während Fig. 11 bis 15 dies ausschnittweise im Detail zeigen.

Ruhephase: Fig. 8. Die Schuhe 136 sitzen noch nicht auf den Sperrflächen 132 auf, sondern stützen sich mit Anschlägen am Separator ab, da die Sperrflächen 132 an ihrem den Stufen 134 abgekehrten Ende ebenfalls eine Abstufung 150 aufweisen. Diese ist abgeschrägt, damit der Schuh auflaufen kann, ebenso wie die Stufe 134 und die Supportfläche 130 Auflaufschrägen besitzen, die mit einer entsprechenden Abschrägung 152 des Schuhs zusammenwirken. Die Abmessungen sind so getroffen, daß bei vollständig eingeschobenem Schieber der Schuh gerade hinter der Schräge der Abstufung 150 zu liegen kommt, so daß sich der Wechsler nicht von allein öffnen kann, sondern eine gewisse (wenn auch geringe) Zugkraft auf den Schieber ausgeübt werden muß.

Die Oberkante 154 des Separators steht gerade vor den Verdickungen der Zinken 124, doch können sich die Schienen noch frei unter der Wirkung der Federn 114 gegen das Fenster bewegen bzw. einen eingelegten Stapel gegen dieses drücken.

Vorbereitungsphase: Fig. 9 und 11. Der Schieber ist um wenige Millimeter herausgezogen worden. Die Schrägfläche 148 des Separators 122 ist auf die Zinken 124 aufgelaufen und hat diese etwas nach unten gedrückt. Die Blattfeder 114 wird dabei etwas gestreckt, und da sie an ihrem äußeren Ende am Gehäuseboden festgelegt ist, wandert ihr inneres Ende entgegen dem Schieberauszug, und auch die Schienen verlagern sich relativ zu ihrer Ausgangslage.

Trennphase: Fig. 12. Die vor dem Röllchen laufende Kante des Schuhs 136 überläuft die ihm zugekehrte Endquerkante des untersten Blattes im Stapel.

Beginn der Haltephase: Fig. 13. Die Schuhe haben die Supportfläche überlaufen, die Röllchen 138 haben sich auf die Schräge 146 gesetzt; der Separator schiebt den Reststapel vor sich her. Wie deutlich Fig. 10 entnehmbar, sind die Blattfedern 114 noch weiter gestreckt worden, und die Schienen sind noch weiter in Richtung nach innen verlagert worden.

Haltephase: Fig. 14, 15. Der Separator nähert sich immer mehr der Verbindungsstelle zwischen Schiene und Blattfeder. Die Blattfeder wird fast völlig gestreckt, und die Schräge 146 der inneren mittleren Schienenzunge ragt unter Haken 156, die innen an die Stege 128 angeformt sind. Ohne diese Haken würde sich das innere Ende der Schienen 112, sobald der Separator über einen Kippunkt nahe der Schienenmitte hinausbewegt worden ist, unter der Wirkung der Blattfedern 114 wieder anheben; so jedoch bleiben die Schienen niedergedrückt, bis der Schieber seine äußere Endlage erreicht hat, und auch auf dem Einwärtsweg des Schiebers bis jenseits des Kippunkts von dessen Hub.

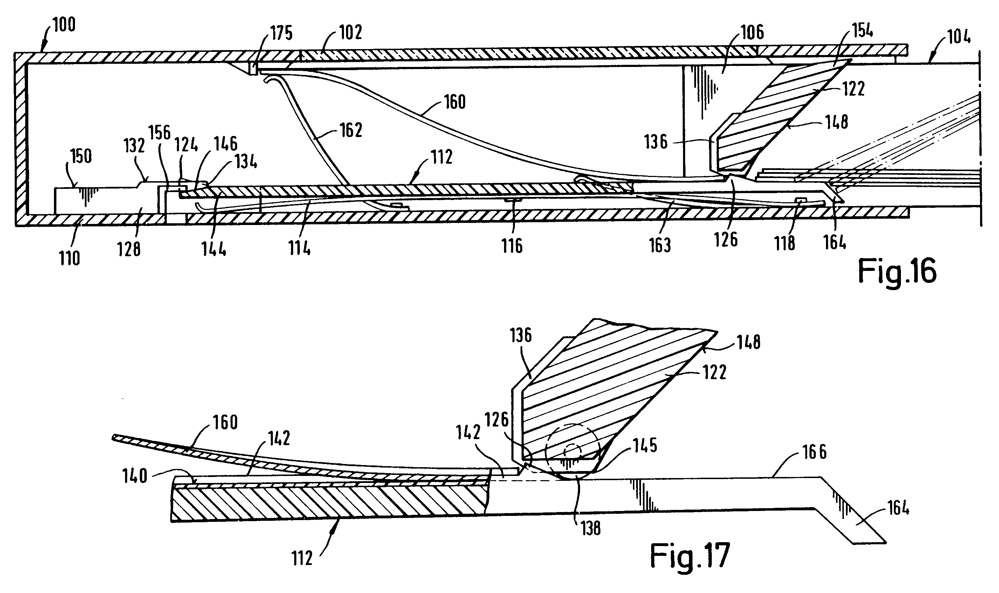

Die Situation kurz vor der äußeren Enldage des Schiebers ist in Figuren 16 und 17 dargestellt. Man erkennt, daß die Röllchen 138 die äußere Querkante des Einzelblattes 160 bereits überlaufen haben, so daß dieses nicht mehr klemmend gehalten wird, sondern unter dem inneren Ende des Schuhs 136 liegt.

Nahe dem äußeren Ende der Schienen 112 weisen diese einen nach unten abgekröpften Fortsatz 164 auf, der bis dicht zum Gehäuseboden 110reicht, diesen aber nicht berührt (da sonst die Schiene zwischen Separator und Boden geklemmt würde). Dieser Fortsatz verhindert, daß beim Einfüllen von Blättern deren Führungskante unter die Schienen geraten kann.

Kurz vor dem äußeren Ende der Schienen 112 endet auch deren Haftbelag 140. Dessen Ende ist schräg abgeschnitten, und davor weist die Schiene eine entsprechend schräg endende Erhöhung 166 auf, deren Höhe jedoch nicht konstant ist, sondern von einer Längsseite zur andern abfällt. Auf diese Weise wird sichergestellt, daß das Röllchen ohne Ruck von dem Haftbelag ab- und auf diesen aufrollt, obwohl dieser merkbare Dickentoleranzen besitzt.

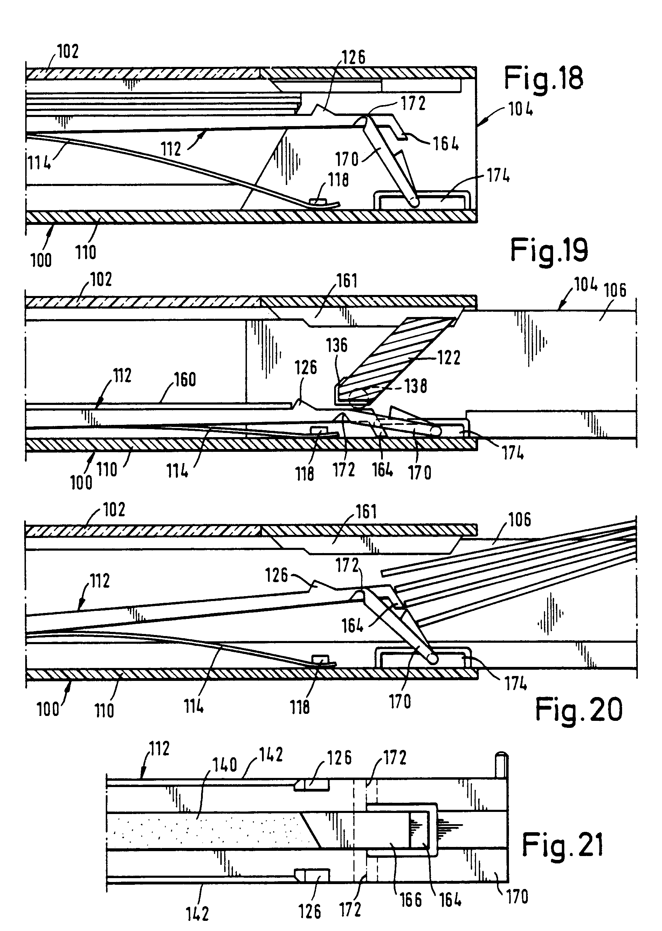

Die Figuren 18 - 21 zeigen eine alternative Gestaltung der Schienen. Anstelle des starr angeformten Fortsatzes 164 ist hier ein beweglicher Fortsatz 170 über ein sogenanntes Filmgelenk 172 mit dem Schienenkörper verbunden und mittels einer Geradführung 174 am Gehäuseboden geführt. Fig. 20 zeigt die Situation, bei der der Schieber nur unvollständig gezogen ist, so daß die Federschienen noch mit ihrem äußeren Ende hochstehen; wenn jetzt versucht wird, Blätter einzufüllen, verhindert der Fortsatz zuverlässig, daß Blätter unter die Schienen gelangen können. In diesem Fall wäre die Schiene aus einem entsprechenden Kunststoff zu fertigen, bei dem das Filmgelenk einer Dauerwechselbeanspruchung gewachsen ist, etwa Polypropylen.

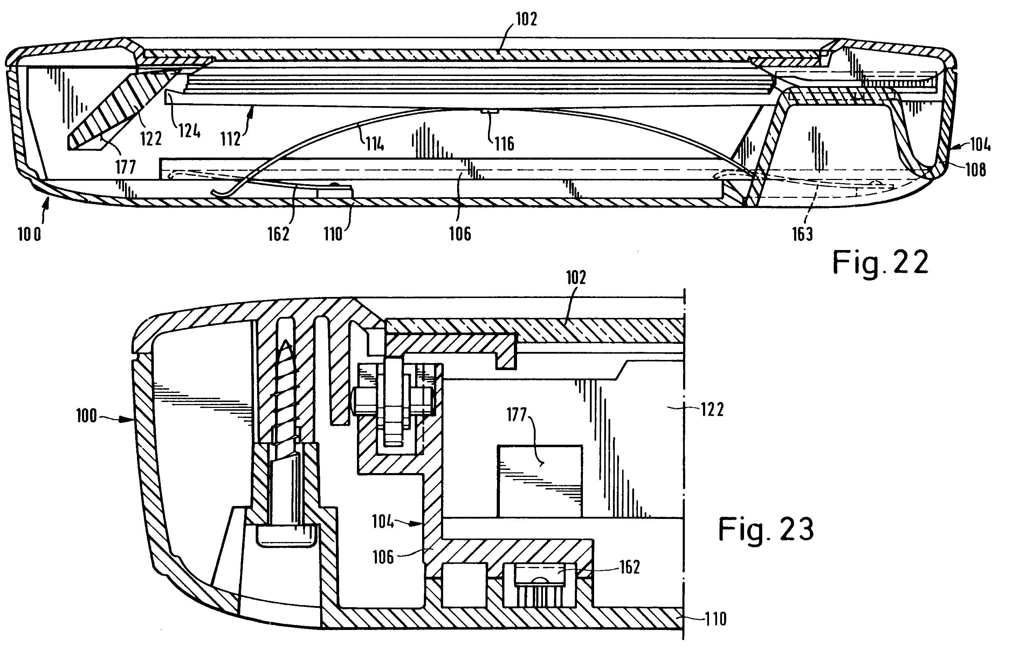

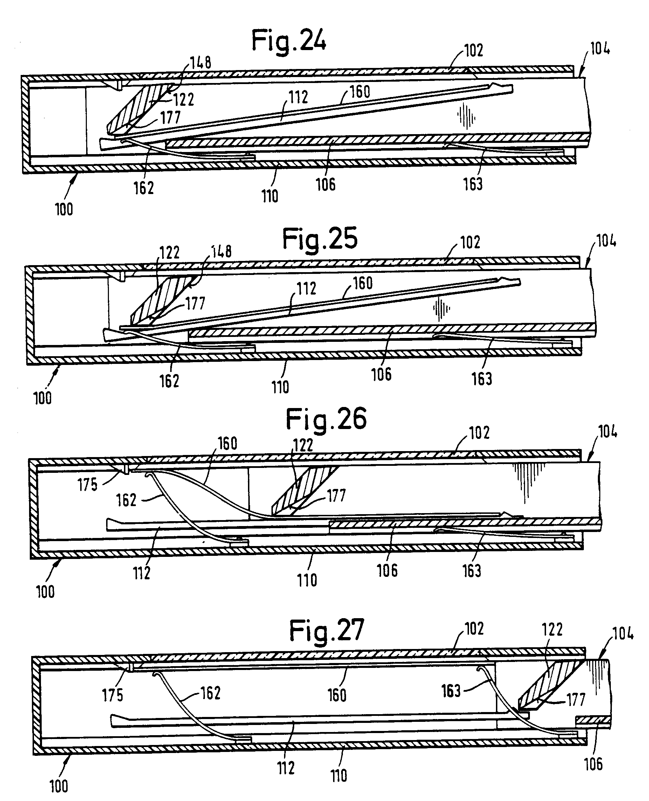

Fig. 22 und 23 lassen deutlicher die Ausbildung und Anordnung der Hilfsfedern 162 und 163 erkennen. Dies sind relativ weiche Blattfedern, die mit einem Ende am Gehäuseboden befestigt sind, und zwar unter den Schieberholmen 106, so daß sie bei eingeschobenem Schieber niedergedrückt sind. Wird der Schieber gezogen (Fig. 24 - 27), so hebt zuerst die innere Hilfsfeder 162 die innere Endkante des Einzelblatts vor einen Anschlag 175, und wenn der Schieber ganz gezogen ist, wird auch die vordere Kante des Einzelblatts gehoben, so daß es vor der Oberseite des Separators 122 liegt und den Spalt zwischen diesem und der Gehäuseoberseite passieren kann, wenn der Schieber zurückgeschoben wird.

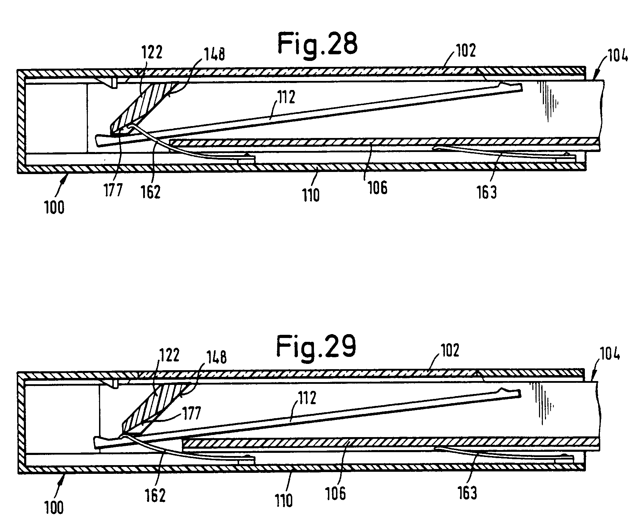

Solange der Wechsler mit Blättern gefüllt ist, läuft bei beginnendem Schieberhub der Separator auf das unterste Blatt auf, und dieses drückt die seitlich neben den Schienen liegenden Hilfsfedern mit unter den Separator. Ist der Wechsler jedoch nicht gefüllt, stehen die Hilfsfedern frei nach oben. Damit sie in diesem Falle trotzdem vom Separator niedergedrückt werden können, weist dieser entsprechende Einschnitte 177 mit einem Keilwinkel auf, der ausreicht, die freien Federenden abgleiten zu lassen, wie dies in Fig. 28 und 29 angedeutet ist.

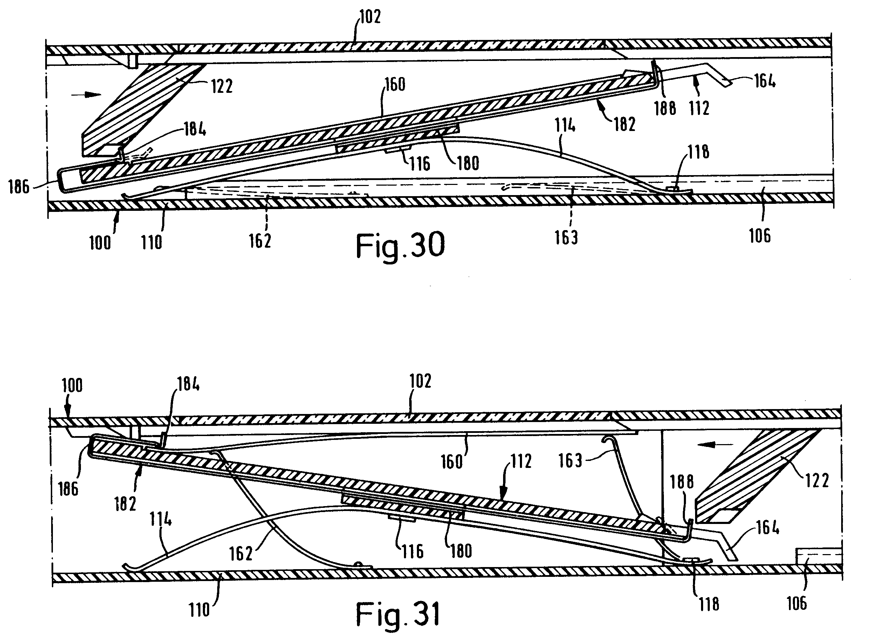

Fig. 30 und 31 zeigen eine alternative Möglichkeit, das Einzelblatt auf den Schienen 112 zu halten. An die Unterseite der Schienen ist eine Gleitführung 180 angeformt, in der in Richtung der Schieberbewegung begrenzt verlagerbar eine Blechklammer 182 eingelegt ist. In der Startphase (Fig. 30) läuft der Separator 122 zunächst auf einen hochstehenden Federhaken 184 der Klammer auf und nimmt diese um eine begrenzte Strecke mit, bis nämlich das abgewinkelte Anschlagstück 186 auf das hintere Ende der Schiene auftrifft. Dabei wird die Klammer mit ihrem Federhakenende über die innere Blattquerkante geschoben und hält diese fest. Der Federhaken weicht bei weiterem Schieberhub federnd aus. Nahe der äußeren Endposition des Schiebers überläuft der Separator einen äußeren Federhaken der Klammer. Beim Zurückschieben des Schiebers drückt der Separator die Klammer wieder in ihre Ausgangslage zurück, indem er auf diesen äußeren Federhaken 188 aufläuft, bis die Klammer am vorderen Schienenende anschlägt. Das Blatt ist jetzt freigegeben und kann von den Hilfsfedern 162 gehoben werden. Beim weiteren Einschub weicht der Federhaken 188 nach innen aus (gestrichelt angedeutet), und entsprechendes gilt für den inneren Federhaken 184.

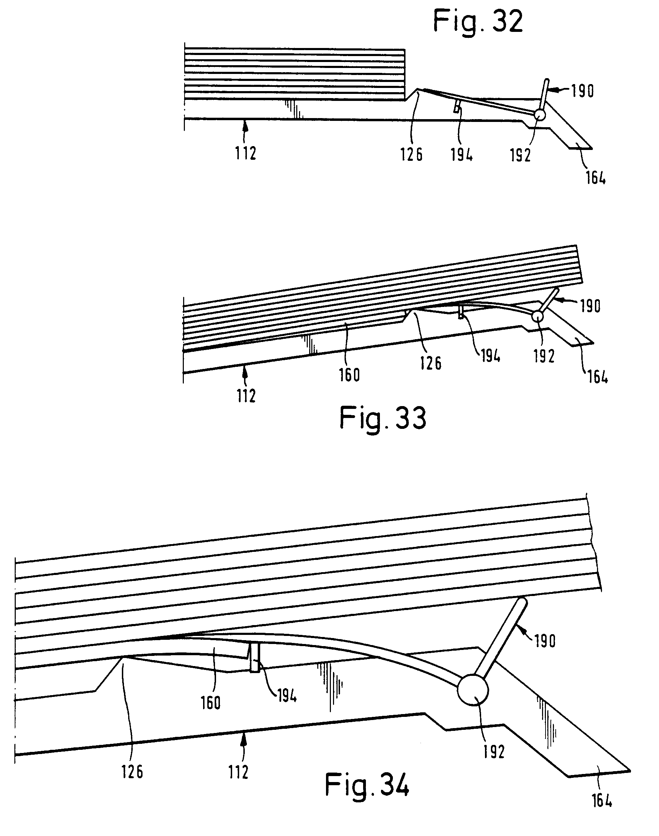

Fig. 32 - 34 stellen eine weitere Alternative für das Festhalten des Einzelblattes dar. Nahe dem äußeren Ende der Schiene 112 ist an dieser ein Klappwinkel 190 um einen Drehpunkt 192 schwenkbar angelenkt. Ausgehend von der Ruhelage (Fig. 32) wird zunächst das Einzelblatt 160 an den Fortsätzen 126 gebremst, während der Reststapel den einwärts gekehrten Arm des Klappwinkels überläuft, der schneidenartig angeschärft ist, und nach einem geringen Hub des Schiebers auf den hochstehenden zweiten Arm des Klappwinkels trifft. Der Klappwinkel wird dabei ausgelenkt, doch kann der schneidenartige Arm nicht den Reststapel heben, so daß er federnd deformiert wird. Nun wird auch das Einzelblatt über die Fortsätze 126 geschoben (Fig. 34), bis seine äußere Querkante auf die Anschlagnase 194 des Klappwinkels trifft. Der angeschärfte Fortsatz wird dabei über der Querkante angedrückt gehalten, solange noch der Reststapel bewegt wird. Wenn auch der Separator die Nase 194 passiert hat, kann der Klappwinkelarm hochfedern und das Einzelblatt freigeben. Beim Rücklauf wird der Klappwinkel wieder in seine Ausgangsposition zurückverlagert.

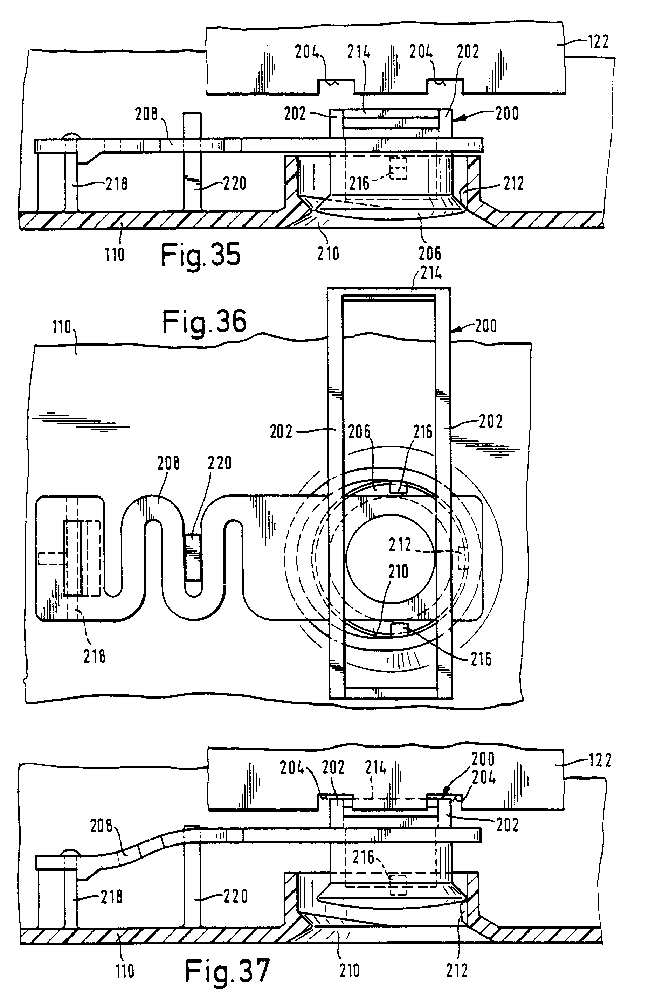

Die Fig. 35 - 39 illustrieren die Mittel, die dazu dienen, die Wechselfunktion auszuschalten, so daß beim Ziehen des Schiebers der gesamte Stapel von ihm aus dem Gehäuse heraustransportiert wird.

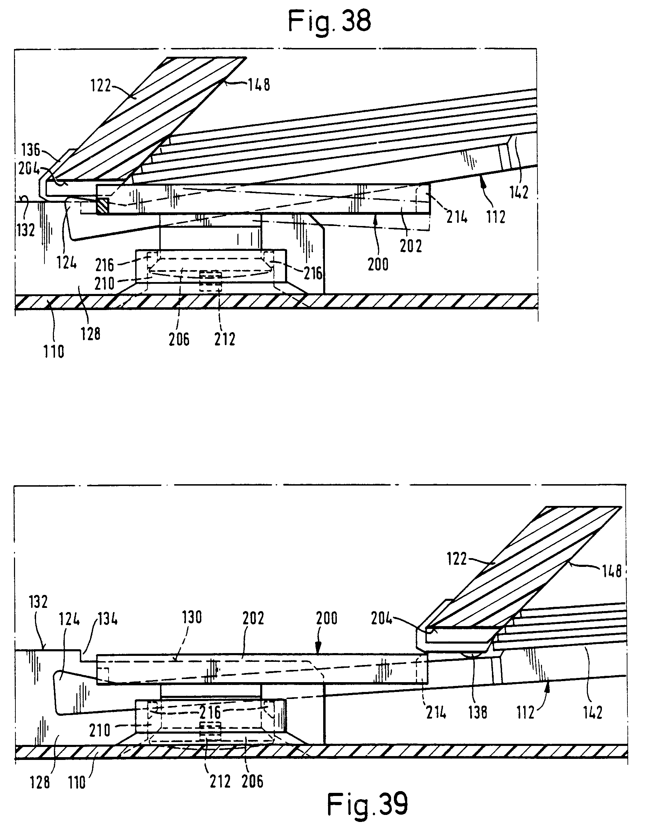

Diese Mittel umfassen einen Rahmen 200, dessen Längsstreben 202 von unten in Aussparungen 204 an der Unterseite des Separators 122 verlagert werden und dabei die vor dem Separator liegenden Blattkanten so weit anheben (Fig. 38), daß das unterste Blatt nicht in den Durchlaßspalt unter dem Schuh 136 gelangen kann; auch dieses Blatt wird also vom Schieber mitgenommen (Fig. 39). Der Rahmen sitzt auf einem Knopf 206, der seinerseits über eine Kunststoffeder 208 am Gehäuseboden 110 festgelegt ist und durch einen Durchbruch 210 im Gehäuseboden manuell verlagerbar ist.

Die Ruhelage des Knopfes, in der die Wechselfunktion "eingeschaltet" ist, ist in Fig. 35 dargestellt. Drückt man auf den Knopf, so springt er unter Kompression der Feder 208 über die Sperrkante 212 des Gehäusedurchbruchs 210 in die in Fig. 37 gezeigte Stellung, in der der Rahmen 200 den Wechsel blockiert. Wenn nun beim Herausziehen des Schiebers der Separator auf die Querstrebe 214 des Rahmens 200 aufläuft, wird dieser und mit ihm der Knopf 206 verkantet, so daß der Knopf in seine Ausgangslage zurückspringen kann, wobei die Kippbewegung um einen Anschlag 216 erfolgt. Die Feder 208 ist an einem Sockel 218, der vom Gehäuseboden 110 hochragt, befestigt und an einer Rippe 220 geführt, so daß der Rahmen auch bei gedrücktem Knopf die in Fig. 37 dargestellte gehäusebodenparallele Lage einnimmt.

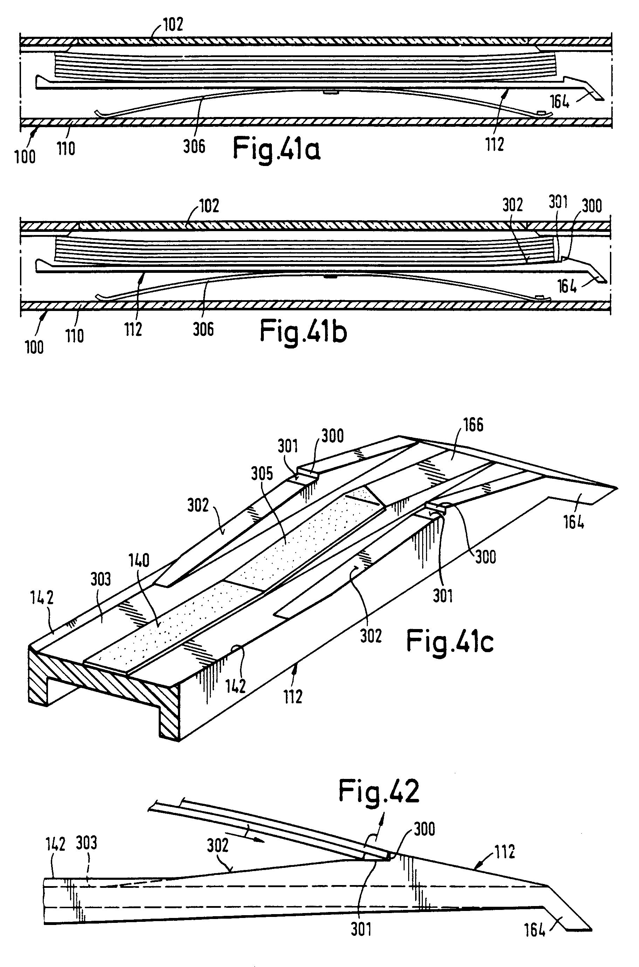

Fig. 41a, b,c und 42 zeigen ein Schienenende einer alternativen Ausführungsform. Es ist erwünscht, das Einzelblatt mit möglichst großer Kraft im Gehäuse zu halten, und am besten "greift" ein an der Blattkante anliegender "Haken", der sich etwa senkrecht zur Blattebene erstreckt. Der Haken darf aber nur eine Höhe höchstens gleich der Dicke eines Blattes haben, bei Fotoabzügen also etwa 0,25 mm, damit das zweitunterste Blatt und alle weiteren ihn überlaufen können. Wenn alle Blätter ganz eben sind, funktioniert ein solches System. Diese Voraussetzung ist aber nicht immer gegeben, weil sich z.B. Fotoabzüge je nach Luftfeuchtigkeitwölben, beispielsweise um eine Querachse; ein solch kurzer Haken kann dann das unterste Blatt nicht fassen (Fig. 41a). Der von den Federn 306 auf die Schiene ausgeübte Druck reicht nicht aus, um die aufliegenden Blätter einzuebnen und damit den Haken in Eingriff mit dem untersten Blatt zu bringen. Deshalb ist ein Schienenprofil gemäß Fig. 41b bevorzugt. Fig. 41c zeigt das Schienenende in vergrößerter Darstellung, Fig. 42 illustriert ein Funktionsdetail. Der Doppelhaken 300 erstreckt sich senkrecht von einem kurzen Plateau 301 nach oben. Es bildet das Ende einer schräg ansteigenden Rampe 302, die von der ebenen Oberseite 303 der Schiene ausgeht. Das aufliegende, konkav gewölbte Blattfolgt der Rampe und wird vom Haken erfaßt. Wenn zufällig das abzutrennende Blatt etwas kürzer ist als das unmittelbar folgende, wird es vom Separatorschuh in Richtung zum Haken mitgenommen und wirft das darüberliegende selbst dann ab, wenn dieses konvex ist (Fig. 42); dabei gleitet seine Führungskante längs des Plateaus 301. Dieses Plateau verhindert außerdem, daß die führende Kante des zweituntersten Blatts vom Haken vorübergehend erfaßt und beschädigt wird, wenn die Schiene -- weil nur wenige Blätter im Wechsler sind -- extrem schräg steht.

Der Haftbelag 140 weist ebenfalls eine ansteigende Rampe 305 parallel zur Rampe 302 auf, damit das abzutrennende Blatt nicht vom Röllchen zwischen den beiden Rampen 302 zu stark verformt wird.

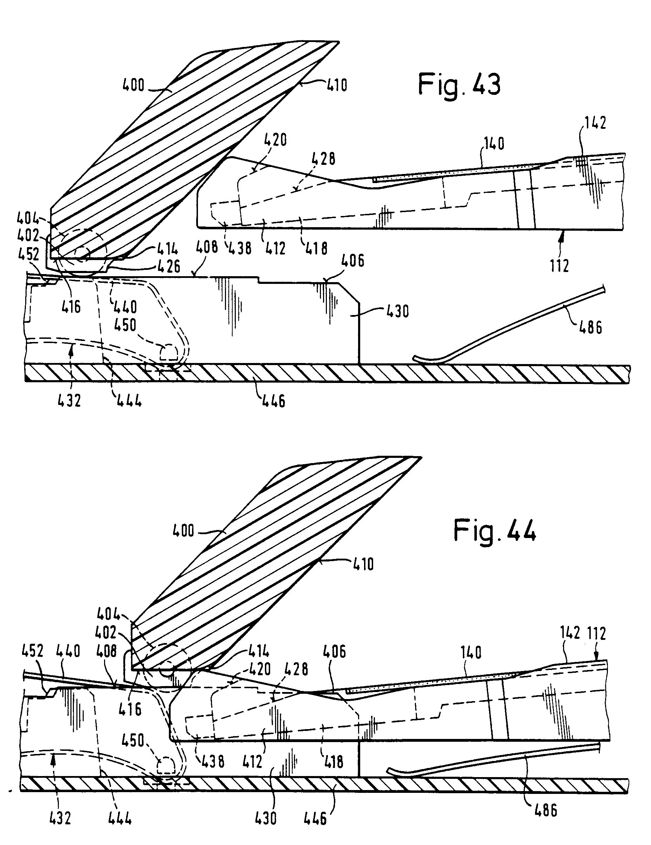

Fig. 43 bis 46 zeigen das andere Ende einer der Schienen nach Fig. 41, 42 im Zusammenwirken mit dem Separator 400, dessen Schuh 402, dem Röllchen 404 und dem Support 406 sowie der Sperrfläche 408. Die Schiene hat, wie in dem ersten Ausführungsbeispiel, ein dreizinkiges Ende, doch ist hier die Kontur der Zinken etwas anders ausgelegt.

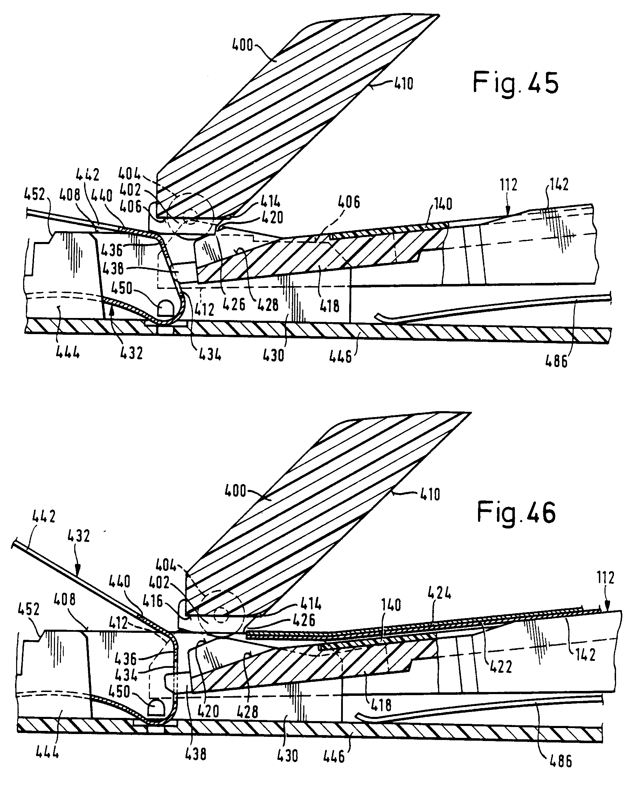

Fig. 43 läßt erkennen, wie nach Beginn des Schieberauszugs die Schrägfläche 410 des Separators auf die verdickten Zinken 412 der Schiene aufgelaufen ist. Von Fig. 43 bis 46 fortschreitend ändert sich die Schräglage der Schiene zwischen beispielsweise 5° auf beispielsweise 7°. Fig. 44 zeigt, wie der Separator mit einer Abrundung 414 der oberen Krümmung der Zinken 412 folgt. Nach Überlaufen der Abrundung 414 liegt die obere Krümmung der Zinken 412 an der ebenen Fläche 416 des Separators an, die jetzt auf den äußeren Zinken der Schiene reitet. Dabei nähert sich der Schuh 402 mit seinem Röllchen 404 dem mittleren Zinken 418 der Schiene, so daß das Röllchen auf dessen abgerundete Steuerfläche 420 auflaufen kann. Bei weiterem Schieberweg wird schließlich die Schiene in ihre tiefste Stellung gemäß Fig. 46 niedergedrückt.

In Fig. 46 sind zwei Blätter 422, 424 eingezeichnet Das Blatt 422 soll im Gehäuse verbleiben, während das Blatt 424 vom Separator bzw. dessen Schuh 402 mitgenommen werden soll. Man erkennt, daß der Schuh eine Mitnehmerkante 426 aufweist, die unter einem steileren Winkel verläuft als die Schrägfläche 410. Das Blatt 422 liegt auf dem Support 406 und kann nicht von der Mitnehmerkante erfaßt werden, da es vom Blatt 424 hinter der Stufe gehalten wird, die die Supportfläche 406 von der Sperrfläche 408 trennt. Es ist wesentlich, daß die Schiene weit genug "taucht", damit das Aufsetzen der Blattkanten auf den Support 406 nicht behindert wird.

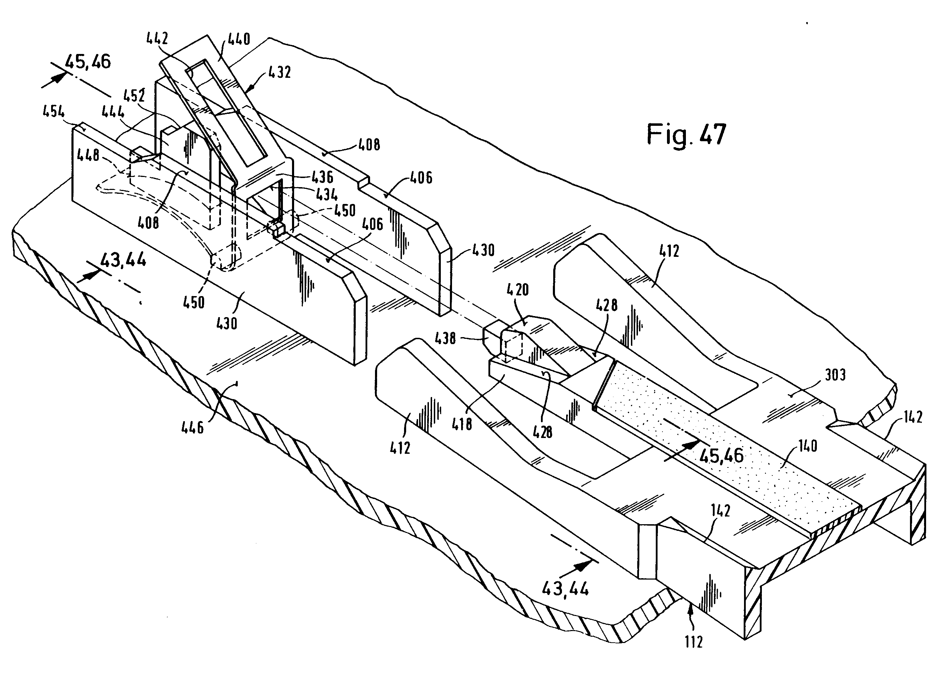

Die perspektivische Darstellung gemäß Fig. 47 läßt die Form die Zinken deutlich erkennen. Beidseits der Steuerfläche 420 ist ein Freiraum 428 vorgesehen, und zwar aus Sicherheitsgründen: Zwar hat das Röllchen 404 eine axiale Erstreckung, die gleich der Breite der mittleren Zinken 418 ist, doch hat der Schieber im Gehäuse notwendigerweise etwas Spiel, so daß ohne die Freiräume der Schuh 402 mit seiner Kante 426 auf die Steuerfläche stoßen könnte, bevor das Röllchen die Schiene wegdrückt; dies läßt sich deutlich der Fig. 45 entnehmen.

Oben wurde erläutert, daß dieses Ende der Schiene nach Art einer Schaukelbewegung sich unter stationär angeformten Haken einhängt, wenn der Schieber den Kippunkt des Systems Blattfeder/Schiene überlaufen hat. Eine solche Konstruktion stellt jedoch höchste Ansprüche an die Fertigungs- und Montagegenauigkeit, weil der verbleibende Restweg bei völlig gefülltem Blattwechsler zwischen der freibeweglichen Schiene, wenn der Schieber eingeschoben ist, und der Einhängeposition bei gezogenem Schieber nur extrem klein ist, beispielsweise wenige Zehntel mm beträgt.

Es ist deshalb bevorzugt, den Haken nicht stationär, sondern beweglich auszubilden, so daß er von der Schieberbewegung gesteuert eine Halteposition über der Schiene bzw. eine Freigabeposition einnehmen kann. Dabei ist erwünscht, daß der Haken erst dann in die Fangstellung geht, wenn die Schiene bereits niedergedrückt ist, so daß sie sich von unten einhängt.

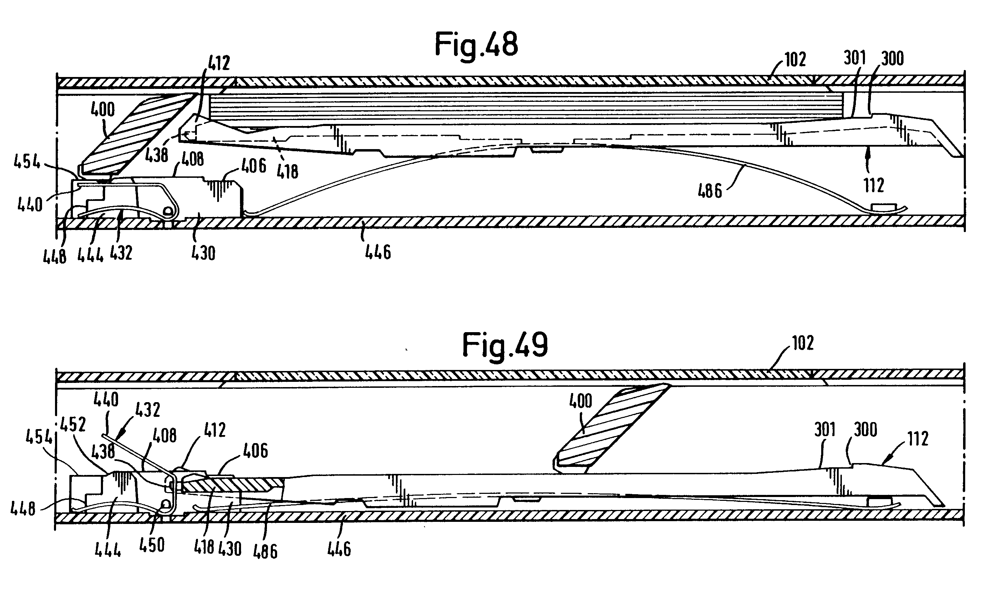

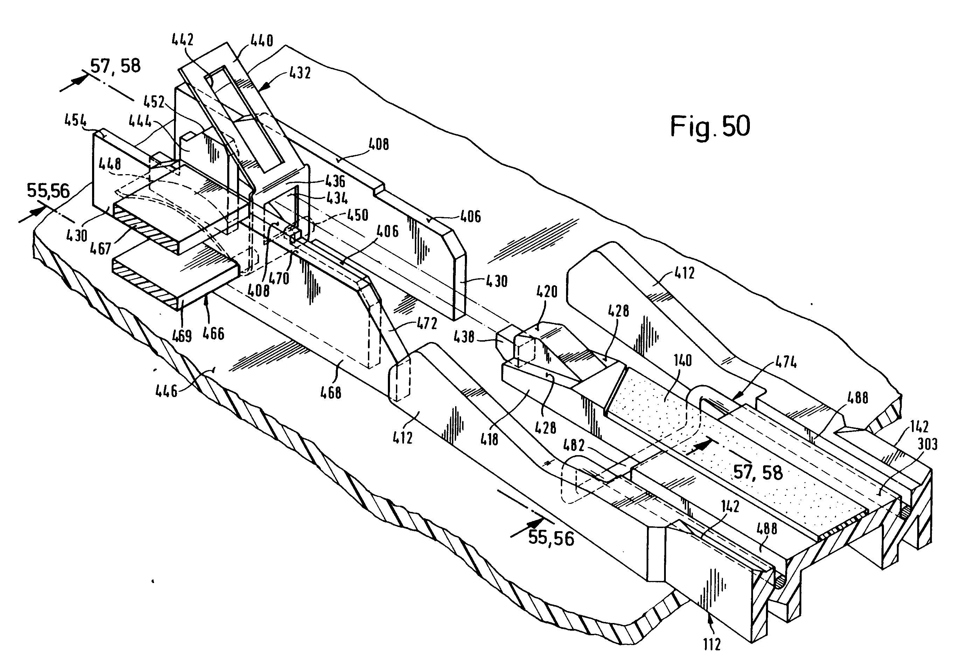

Dies wird durch die in Fig. 47, 48, 49 dargestellte Konstruktion erreicht. Es ist anzumerken, daß in Fig. 47 die Schiene und das Fangsystem auseinandergezogen gezeichnet sind; die wirkliche Lage der Teile ergibt sich aus Fig. 48 bzw. 49.

Zwischen den Rippen 430, die den Support und die Sperrfläche aufweisen, ist ein federvorgespannter Haltebügel 432 angeordnet. Es handelt sich um ein Stanz-Biegeteil aus Federblech mit einem ersten Fenster 434, dessen Steg 436 über den Fortsatz 438 der Schiene schwenkt, sobald der freie Steuerfortsatz 440 von dem Separator (genauer gesagt, von dessen Röllchen) freigegeben worden ist.

Der Steuerfortsatz ist von einem zweiten Fenster 442 durchbrochen, damit bei eingeschobenem Schieber der Fortsatz nicht auf den Mittelsteg 444 aufsitzt, der an den Gehäuseboden 446 angeformt ist. Der Mittelsteg hat zwei Funktionen. Zum einen ist der Haltebügel 432 durch Aufschnappen an der Endkante 448 verankert; der Haltebügel ist unter einem Zapfen 450 durchgeführt, der sich quer zur Bewegungsrichtung des Schiebers erstreckt. Die zweite Funktion des Mittelstegs 444 besteht darin, eine Führungsrampe 452 für das Röllchen 404 zu bilden. Bei eingeschobenem Schieber sollen sowohl das Röllchen als auch der Schuh nur einer geringen Federvorspannung ausgesetzt sein. Während des Wechselbetriebs jedoch wird der Schuh, der sich über eine Feder gegen den Separator abstützt, mit ziemlich hoher Vorspannung gegen die Sperrfläche 408 gedrückt. Deshalb ist die Sperrfläche 408 bei 454 niedriger, so daß der Schuh nicht aufsitzt. Bei Beginn der Schieberbewegung läuft zuerst das Röllchen auf die Rampe 452 auf und hebt den Schuh höher als das Niveau der Sperrfläche 408, auf die sich der Schuh dann absenkt, wenn das Röllchen vom Mittelsteg freikommt.

Die Wechselfunktion soll inaktivierbar sein, damit der Benutzer den gesamten Stapel mittels des Schiebers aus dem Gehäuse heraustransportieren kann. Es werden demgemäß. Mittel banötigt, die
- das Ende des untersten Blattes des Stapels vom Support abheben, damit es vom Schuh erfaßt werden kann, und
- die andere Endkante desselben Blattes aus den Haken 300 lösen.

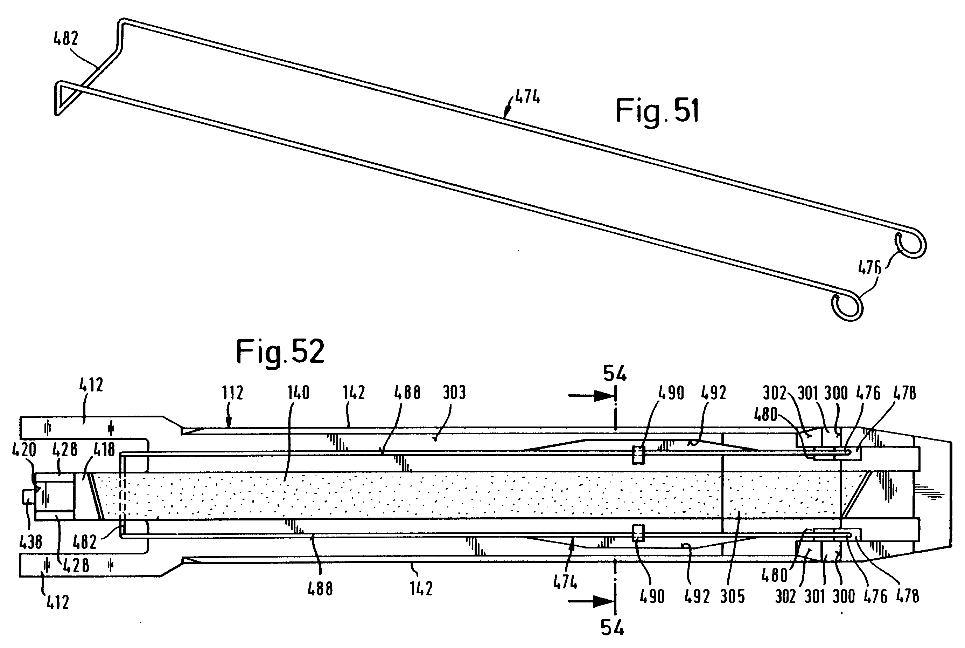

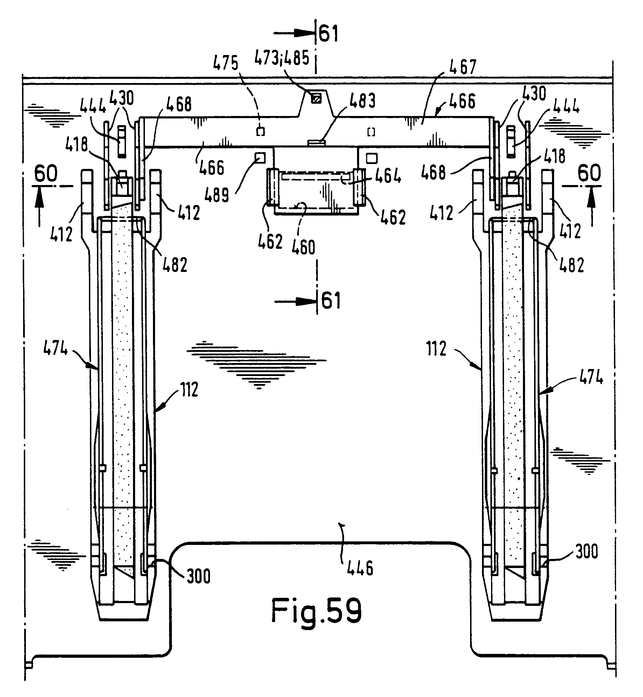

Diese Mittel sind in Fig. 48 bis 61 dargestellt.

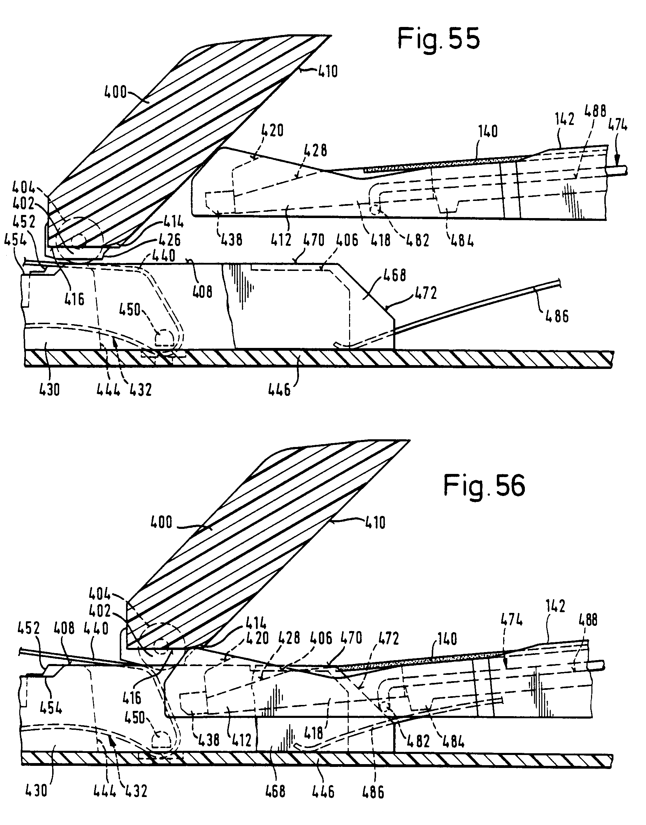

Der Gehäuseboden 446 weist einen Durchbruch 460 auf mit angeformten Führungsschienen 462, zwischen welche eine Taste 464 eingeschnappt ist. Die Taste ist um eine begrenzte Strecke in Richtung der Schieberbewegung verlagerbar und nimmt dabei einen an sie angeformten Quersteg 466 mit, welcher seinerseits ein Paar von Keilstegen 468 verlagert. Diese erstrecken sich neben die inneren Rippen 430 und parallel zu diesen, und wie Fig. 55 erkennen läßt, hat jeder Keilsteg 468 eine horizontale Oberkante 470 auf gleichem Niveau wie die Sperrfläche 408. Wird die Taste 464 in Richtung Gehäuseöffnung verlagert, so nimmt die Kante 470 die in Fig. 55 dargestellte Position ein, und man erkennt, daß das unterste Blatt sich nicht auf den Support 406 legen kann, sondern vom Schuh mitgenommen werden muß. Die Keilstege haben ferner eine Steuerkante 472, die hier unter einem Winkel von z.B. 45° verläuft. Ihre Funktion wird später erläutert.

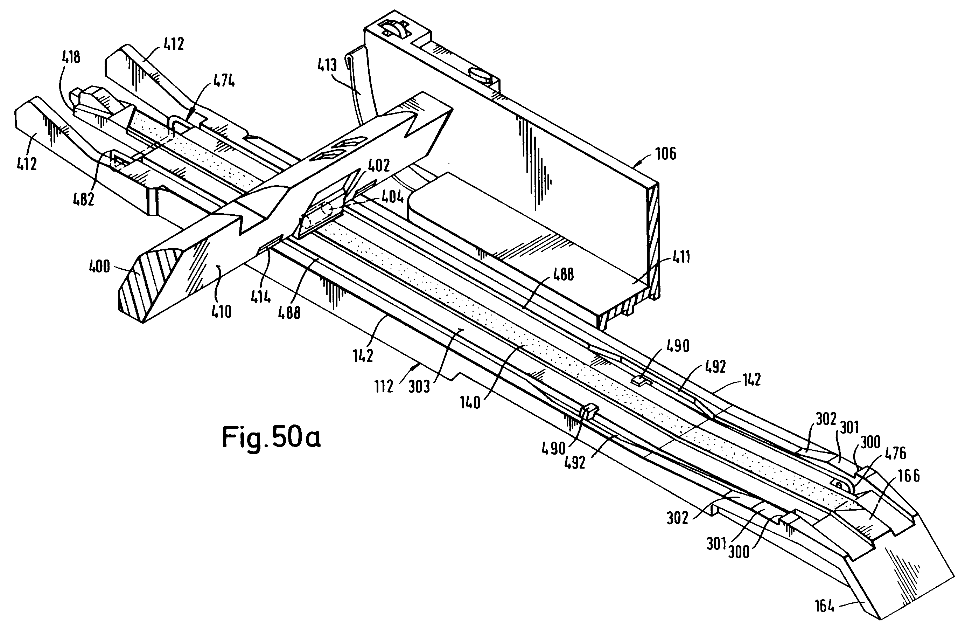

Fig. 50a läßt das Zusammenwirken des Separators, der mit ihm verbundenen Schuhe, der in diesen sitzenden Röllchen und der Schiene erkennen. Insbesondere ist an dem Fußteil 411 des Schieberholms eine Hebefeder 413 befestigt, die beim Rückschub des Separators das abgetrennte Einzelblatt vor einen Rückführspalt hebt.

Das Herausschieben des anderen Blattendes aus der Lage vor den Haken 300 erfordert einen Eingriff an den Schienen, deren Position bei eingeschobenem Schieber nicht vorhersagbar ist, da sie von der Zahl der Blätter abhängt, die in der Vorrichtung aufgenommen sind. Deshalb ist vorgesehen, daß dieser Eingriff dann erfolgt, wenn die Schiene nach Beginn des Schieberauszugs einen Weg durchläuft, der ihr durch den Separator unabhängig von der Zahl der Blätter aufgezwungen wird.

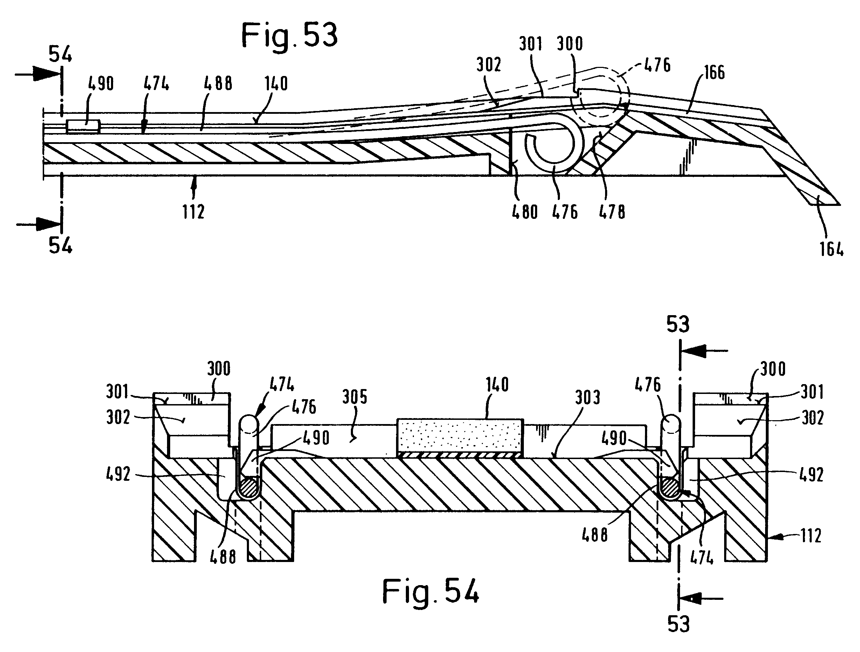

Jede Schiene trägt einen Steuerbügel 474, der aus einem Draht einstückig gebogen ist. Die beiden freien Enden des Drahtbügels sind mit Ösen 476 versehen, die mit einer Steuerschräge 478 der Schiene Zusammenwirken. Ein Verlagerung der Ösen nach links In Fig. 53 hat zur Folge, daß sich ein Blatt, welches sich normalerweise vor die Haken 300 legen würde, über diese hinweggeführt wird, so daß die Haken unwirksam bleiben. Zugleich wird die Feder vorgespannt (oder eine vorhandene Vorspannung wird vergrößert), so daß die Ösen 476 die Tendenz haben, in ihre eigezogene Position zurückzukehren, die in Fig. 53 mit ausgezogenen Linien dargestellt ist, und die durch den Anschlag 480 festgelegt ist.

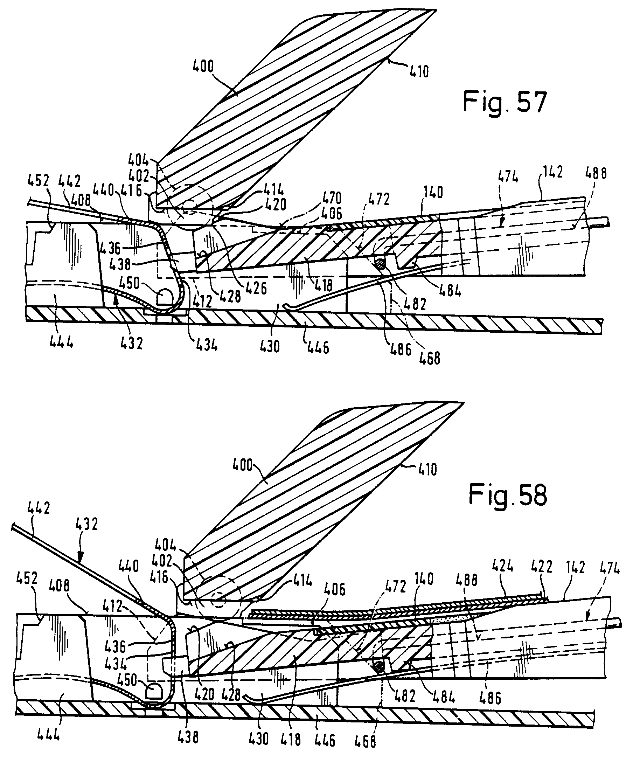

Das andere Ende 482 des Steuerbügels Ist unter den mittleren Zinken 418 der Schiene geführt und abgewinkelt. Dieser quer verlaufende Drahtabschnitt trifft, wenn der Separator das innere Schienenende niederdrückt, auf die Steuerkante 472 des Keilstegs. Dadurch wird der Steuerbügel mit fortschreitendem Niederdrücken des Schienenendes immer weiter nach links verlagert unter entsprechender Verlagerung der Ösen. Man erkennt in Fig 58, daß diese Verlagerung bereits abgeschlossen ist, bevor die Mitnehmerkante des Schuhs auf die Querkante des untersten Blattes des Stapels trifft. Ein an den Schienenkörper angeformter Quersteg 464 distanziert die Blattfeder 486, von der die Schiene getragen wird, von dem Steuerbügelende 482, so daß dieser nicht von der Feder 486 eingeklemmt werden Kann und freibeweglich bleibt, auch dann, wenn die Schiene vollständig niedergedrückt ist.

Der Steuerbügel wird an der Schiene durch einen Einschnappvorgang montiert. Die Schiene weist zwei parallele Rinnen 488 auf, in denen die Längsstreben des Bügels frei verschieblich sind. An einer Stelle sind die Rinnen von je einer Klaue 490 übergriffen, um die die freien Steuerbügelenden unter Biegung herumgeführt werden, und hinter denen sie wieder ihre gestreckte Form annehmen. Eine Erweiterung 492 der Rinne ermöglicht den Draht einfach durch Aufdrücken zu deformieren und an Ort und Stelle einzuschnappen.

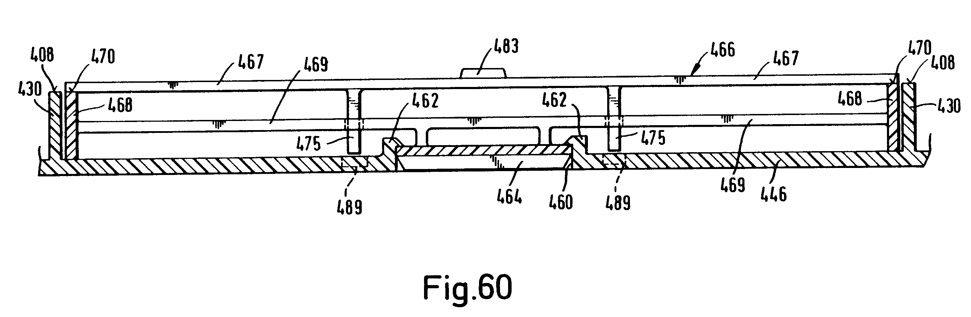

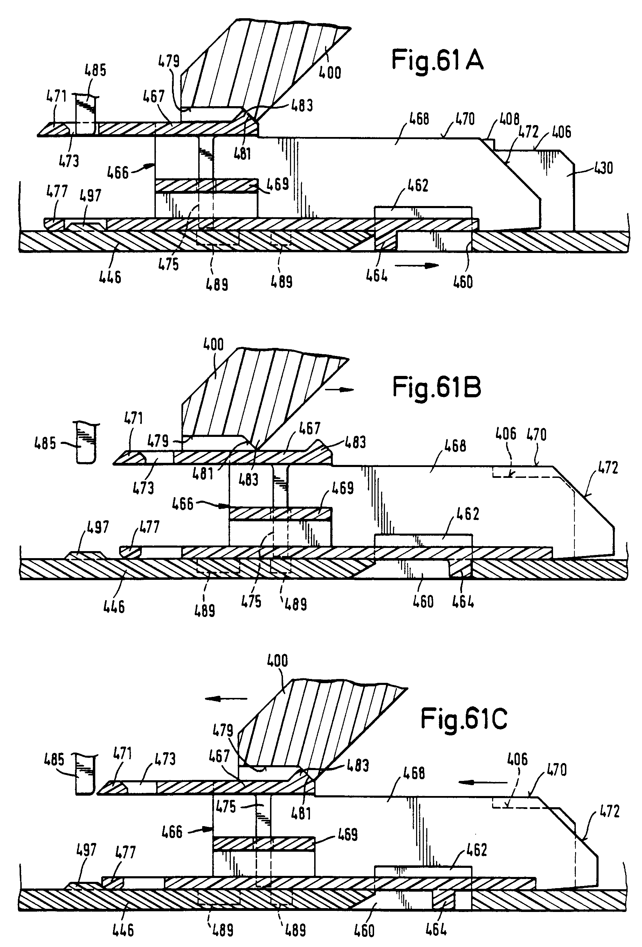

Es sind zusätzlich Mittel vorgesehen, die eine Fehlbedienung verhindern, das heißt eine Betätigung der Taste 464 bei -- teilweise -- gezogenem Schieber, und dafür sorgen, daß die Taste und alle mit ihr verbundenen Komponenten automatisch in die Ausgangslage rückverlagert werden. Diese Mittel sind in Fig. 60. bis 61C dargestellt, wobei Fig. 60 einen Querschnitt in Höhe der Taste 464 und Fig. 61B+C senkrecht dazu verlaufende Teilschnitte sind.

Der Quersteg 466 umfaßt einen oberen Balken 467, der in Richtung Taste 464 durchfedern kann, und einen darunterliegenden Führungsbalken 469, der mit der Taste und, über die Keilstege 468, mit dem oberen Balken verbunden ist. Vom letzteren erstrecken sich nach innen, also entgegen der Richtung der Keilstege, ein zentraler Sperrarm 471 mit einem Loch 473, sowie nach unten zwei Steuerstifte 475. Von der Taste 464 erstreckt sich nach hinten eine Rücksetzzunge 477, der ein an den Gehäuseboden angeformter Rücksetznocken 497 zugeordnet ist.

Fig. 61A zeigt die Startstellung mit eingeschobenem Schieber. Man erkennt, daß der Separator an seiner Unterseite einen Einschnitt 479 aufweist, der in einer Steuerschräge 481 endet und in den ein Steuernocken 483 ragt, der an den oberan Balken 467 angeformt ist. Wird, ausgehend von dieser Position, die Taste nach links in Fig. 61B zum Inaktivieren der Wechselfunktion verlagert, so wird der Steuernocken 483 von der Steuerschräge 481 nach unten gedrückt und nimmt dabei den mittleren Bereich des oberen Balkens 467 mit nach unten. Damit kommt das Loch 473 des Sperrarms 471 von einem starr an das Gehäuse angefonmten Sperrstift 485 frei, und auch die Steuerstifte 475 können nach unten in entsprechende Gehäusebodenvertiefungen einfedern. Die Rücksetzzunge überspringt den Rücksetznocken.- Ist der Schieber auch nur teilweise gezogen, bleibt die Taste gesperrt.- Der Separator kann die gezogene Taste unter erneuter Deformation des oberen Balkens überlaufen, da auch in dieser Position der Taste den Steuerstiften Bodenvertiefungen 489 gegenüberliegen. (Fig. 61C).- Beim Rückschub des Schiebers verlagert er die Taste zunächst um ein kleines Stück, wo die Steuerstifte gesperrt sind, so daß der Balken 467 nicht durchfedern kann, sondern die gesamte Baugruppe der Taste unter Auslenkung der Rücksetzzunge durch den Rücksetznocken in die Ausgangsstellung zurückkehrt.

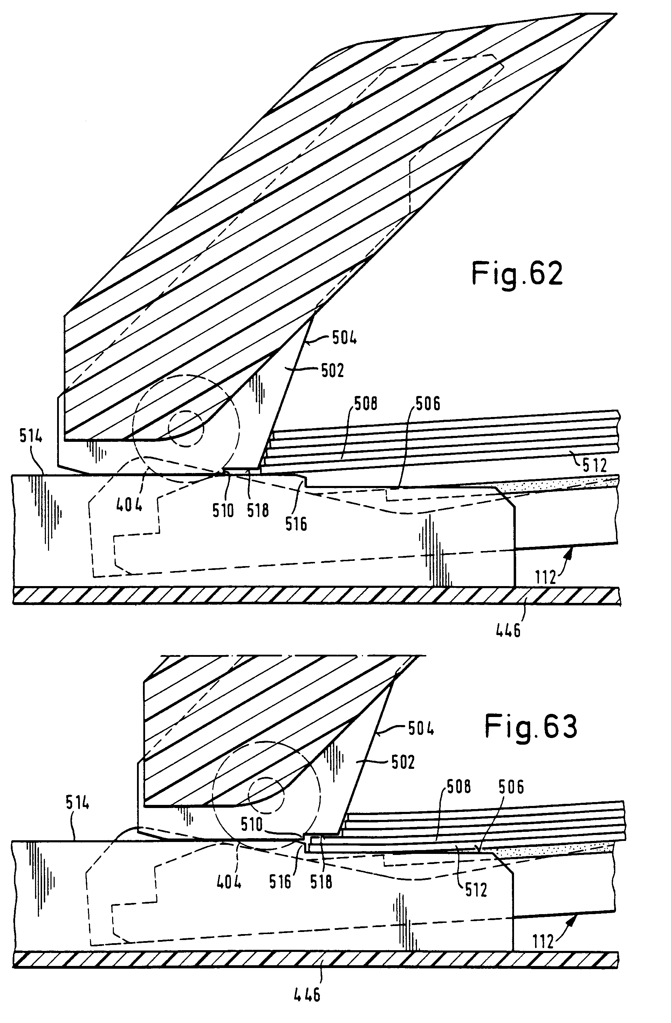

Fig. 62-64 zeigen eine abgewandelte Auführungsform der Stapelmitnehmerorgane, besonders geeignet für das Zusammenwirken mit dem hakenartigen Einzelblattmitnehmer 300. Da diese praktisch senkrecht zur Blattebene angreifen, wird maximale Trennkraft erzeugt. Diese kann jedoch nur zur Wirkung kommen, wenn das vom Einzelblatt zu trennende zweite Blatt mit wenigstens annähernd ebenso großer Maximaikraft erfaßt und verlagert wird. Das heißt, daß die am zweituntersten Blatt angreifende Endfläche des Schuhs ebenfalls senkrecht zur Blattebene verlaufen sollte.

Bei den bisher beschriebenen Konstruktionen verläuft diese Fläche schräg, und zwar deshalb, weil der auf die Stapelkanten vom Separator ausgeübte Druck in eine Abwärtsbewegung der die Blätter tragenden Schienen umzusetzen ist, damit das abzutrennende letzte (unterste) Blatt sicher auf dem Support und vor der Sperrfläche positioniert wird.

Um gleichwohl eine solche vorteilhafte Gestaltung der Mitnehmerfläche des Schuhs zu ermöglichen, wird die Konstruktion gemäß Fig. 62 bis 64 gewählt.

Der Schuh 502 hat eine Schrägfläche 504, längs der, wie bei den vorherigen Ausführungsformen, die Blattkanten dem Support 506 zugefördert werden. Für das zweitunterste Blatt 508 ist eine eigene, senkrecht zu der Supportebene verlaufende Mitnehmerfläche 510 vorgesehen, deren Höhe deutlich kleiner ist als eine Blattdicke, damit zu Beginn der Auszugsbewegung der gesamte Stapel einschließlich des abzutrennenden Blattes 512 längs der Sperrfläche 514 transportiert wird (Fig. 62).

Sobald die Mitnehmerfläche 510 die Stufe 516, welche die Sperrfläche vom Support trennt, überläuft, wird der gesamte Stapel um die Höhe dieser Stufe weiter abwärts verlagert, wobei das Blatt 508 das unterste Blatt 512 hinter der Stufe positioniert. Die Stufe 516 hat eine Höhe, die höher ist als die Dicke eines Blattes und kleiner als die Dicke von zwei Blättern. Am günstigsten ist es, wenn die Summe der Höhen von Stufe 516 und Mitnehmerfläche 510 gleich der Dicke von zwei Blättern ist. Die parallel zum Support verlaufende Schuhunterfläche 518 sorgt dafür, daß das Blatt 512 eben auf dem Support aufliegt und das Blatt 508 sicher der Mitnehmerfläche 510 präsentiert ist.

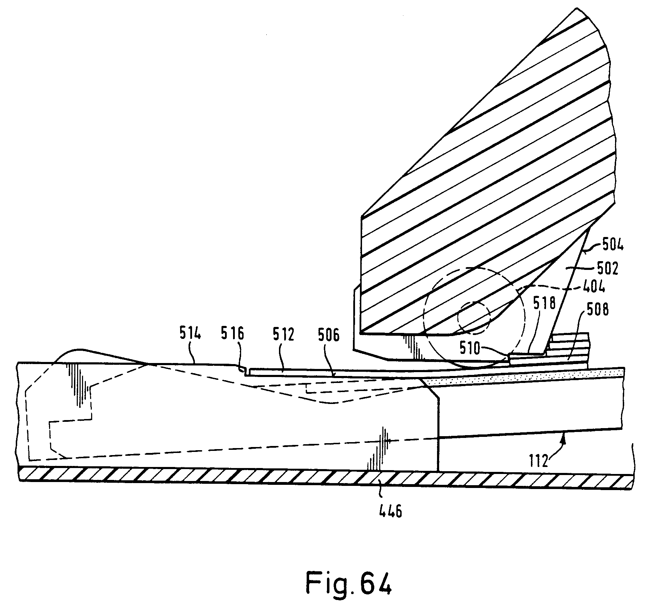

Wie Fig. 64 zeigt, sind die hintereinander liegenden unteren Kanten des Schuhs derart bezüglich des Röllchens gestaffelt, daß die Kante trotz maximal schräg stehender Schiene (etwa 7°) nicht auf dem Blatt 508 aufsitzend das Röllchen vom Blatt 512 abheben können, wodurch dessen Klemmfunktion beeinträchtigt würde.

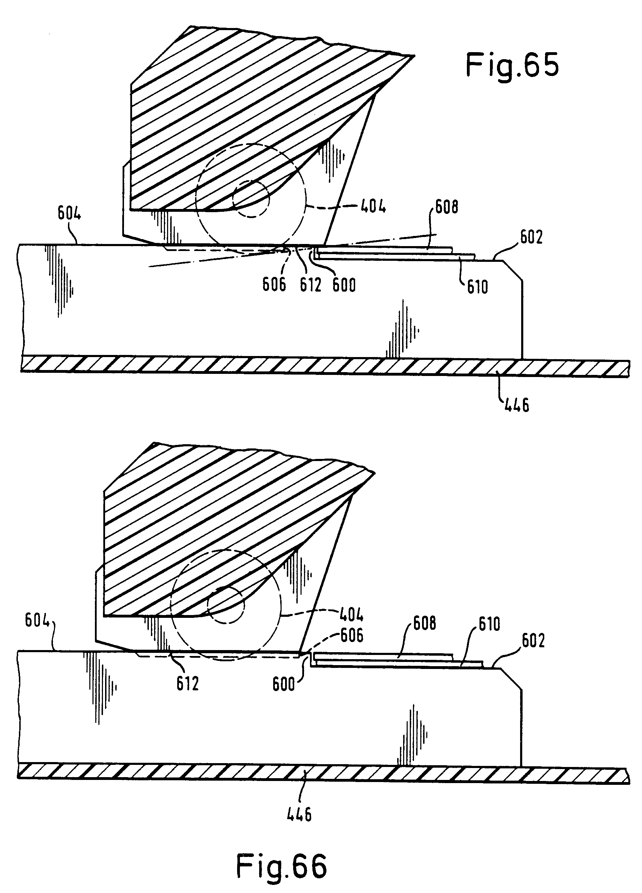

Eine weitere Abwandlung dieses Prinzips ist in Fig. 65 dargestellt. Die Stufe 600 zwischen Sperrfläche 604 und Support 602 hat eine Höhe, die etwas größer ist als zwei Blattdicken. Der Schuh hat wieder eine eigene Mitnehmerfläche 606 für das zweitunterste Blatt 608, die jedoch nicht auf der Sperrfläche 604 aufsitzt, sondern zwischen beide, die Sperrflächen tragenden Rippen herunterragt, so daß nur das unterste Blatt 610 auf dem Support 602 liegen bleibt, das Blatt 608 jedoch mitgenommen wird. Diese Konstruktion hat den Vorteil, daß alle Blattkanten bis zur Stufe 600 in Richtung Gehäuseboden gedrückt werden und beide untersten Blätter sicher hinter der Stufe 600 positioniert werden. Aus diesem Grund ist die Mitnehmerfläche gegenüber der Endkante der Schrägfläche zurückversetzt, da das Verlagern der Blätter 608, 610 hinter die Stufe 600 einen gewissen Hub benötigt. Die horizontale Überdachung 612 kalibriert den Durchlaß und hält Blatt 610 sicher auf dem Support.

Da beide Blätter 608, 610 gebremst werden, wird nicht nur das Blatt 610 mittels eines Hakens an seinem anderen Ende festgehalten, sondern auch Blatt 608, das aber danach auch wieder freikommen muß. Deshalb ist ein nur bremsender, jedoch nicht festhaltender Haken - etwa wie bei 126 in Fig. 1 gezeigt - geeignet.

Die in Fig. 66 dargestellte Konstruktion, bei der die Mitnehmerfläche für das zweitunterste Blatt unmittelbar an die Schrägfläche anschließt, ist aus den oben erörterten Gründen weniger gut geeignet, funktioniert jedoch bei relativ langsamer Betätigung des Wechslers auch.

## Patentansprüche

1. Vorrichtung für das zyklische Umschichten eines Stapels im wesentlichen rechteckiger Blätter mit einem ersten (100) und einem zweiten (104) Rahmenteil, von denen eines ein Sichtfenster (102) aufweist und die relativ zueinander hinundherverschieblich sind, und mit Mitteln (160) zum Abnehmen eines Blattes an einem Ende eines eingelegten Blattstapels beim Auseinanderziehen der Rahmenteile und zum Zufügen des Einzelblattes am anderen Stapelende beim Wiederzusammenschieben der Rahmenteile, sowie mit einer im ersten Rahmenteil angeordneten federvorgespannten und von der Rahmenteilbewegung gesteuerten Anpreßeinrichtung (112, 114) zum Anpressen des Stapels gegen das Sichtfenster bei zusammengeschobenen Rahmenteilen, wobei das zweite Rahmenteil einen Stapelmitnehmer (122) aufweist und wobei die Anpreßeinrichtung Einzelblatt-Haltemittel (126) aufweist, die die Querkante des abzutrennenden Einzelblatts erfassen und sie für den Abtrennvorgang in Eingriff mit der Anpreßeinrichtung halten, während das Einzelblatt vom Stapelmitnehmer überlaufen wird, dadurch **gekennzeichnet**, daß die Anpreßeinrichtung ein Paar von auf Federn (114) abgestützten, sich in Richtung des und im wesentlichen über den gesamten Hub der Rahmenteilbewegung erstreckenden Schienenelementen (112) umfaßt und daß jedes Schienenelement über die Einzelblatt-Haltemittel in Verlängerung des Schienenelements hinausragende Fortsätze aufweist, die das Schienenelement beim Einwärtshub des zweiten Rahmenteils unter dem Stapelmitnehmer hindurchführen.

2. Vorrichtung nach Anspruch 1, dadurch gekennzeichnet, daß die beiden Schienenelemente symmetrisch bezüglich der Mittelebene der Rahmenteile angeordnet und auf je einer eigenen Blattfeder (114) abgestützt sind, deren eines Ende an dem ersten Rahmenteil (100) festgelegt ist, während das andere Ende parallel zur Bewegungsrichtung der Rahmenteile beweglich ist, quer dazu jedoch durch Führungen (120) abgestützt ist und die zwischen den Enden auf das Sichtfenster zu gewölbt und etwa mittig mit dem zugehörigen Schienenelement verbunden ist.

3. Vorrichtung nach Anspruch 1 oder 2, dadurch gekennzeichnet, daß das erste Rahmenteil ein Gehäuse (100) mit einer Öffnung ist, durch die ein das zweite Rahmenteil bildender Schieber (104) parallel zur Sichtfensterebene herausziehbar und wiedereinschiebbar ist, und daß die Schienenelemente nahe der Gehäuseöffnung Mittel (164, 170) aufweisen, die das Einlegen von Blättern zwischen das Schienenelement und einen dem Sichtfenster gegenüberliegenden Gehäuseboden (110) sperren.

4. Vorrichtung nach Anspruch 3, dadurch gekennzeichnet, daß die Sperrmittel an die Schienenenden angeformt sind.

5. Vorrichtung nach Anspruch 3, dadurch gekennzeichnet, daß die Sperrmittel einen gegen den Gehäuseboden gerichteten Fortsatz (164) umfassen.

6. Vorrichtung nach Anspruch 5, dadurch gekennzeichnet, daß der Schieber einen die Schienenelemente überlaufenden, als Separator (122) dienenden Quersteg aufweist, der bei gezogenem Schieber auf den Schienenelementen nahe deren Enden aufsitzt, und daß in dieser Position der Fortsatz (164) bis nahe zum Gehäuseboden reicht.

7. Vorrichtung nach Anspruch 3, dadurch gekennzeichnet, daß die Sperrmittel (170) mit den Schienenelementen beweglich verbunden sind.

8. Vorrichtung nach Anspruch 3, dadurch gekennzeichnet, daß die Sperrmittel eine an das Schienenende angelenkte Klappe (170) umfassen, deren freies Ende am Gehäuse (100) geführt ist.

9. Vorrichtung nach Anspruch 8, dadurch gekennzeichnet, daß das freie Klappenende am Gehäuseboden in Richtung der Schieberbewegung gleitgeführt ist.

10. Vorrichtung nach Anspruch 3, dadurch gekennzeichnet, daß der Schieber den Blattstapel abstützende, dem Sichtfenster gegenüberliegende Flächenabschnitte (411) aufweist und die Sperrmittel (164) ein sichtfensterparalleles Niveau definieren, das vom Sichtfenster weiter entfernt ist als die Stapelabstützflächen des Schiebers (104).

11. Vorrichtung nach Anspruch 5, dadurch gekennzeichnet, daß die Fortsätze (164) schräg vorwärts-abwärts gerichtet sind.

12. Vorrichtung nach Anspruch 3, dadurch gekennzeichnet, daß an den Gehäuseboden Sperrelemente (174) zum Überleiten von Blattkanten über die Sperrmittel angeformt sind.

13. Vorrichtung nach Anspruch 1, dadurch gekennzeichnet, daß der Stapelmitnehmer (122) in der ausgezogenen Position der Rahmenteile eines der Schienenelementenden vom Sichtfenster wegdrückt, und daß das erste Rahmenteil (100) Mittel (432) aufweist, die mit dem Schienenelement, gesteuert von dem zweiten Rahmenteil, in Wirkverbindung treten, um auch dessen anderes Ende vom Sichtfenster wegzudrücken, so daß das Schienenelement eine Lage im wesentlichen parallel zur Sichtfensterebene einnimmt.

14. Vorrichtung nach Anspruch 13, dadurch gekennzeichnet, daß die Mittel (432) mit dem anderen Schienenelementende in Wirkverbindung treten.

15. Vorrichtung nach Anspruch 13 oder 14, dadurch gekennzeichnet, daß an dem ersten Rahmenteil Verankerungshaken (156) stationär angeordnet sind, unter die das andere Schienenelementende beim Auseinanderziehen verlagerbar ist und aus denen es beim Zusammenschieben lösbar ist.

16. Vorrichtung nach Anspruch 13, dadurch gekennzeichnet, daß die Mittel ein Niveau der dem Sichtfenster zugekehrten Seite des Schienenelements definieren, das unterhalb des Stapelmitnehmers liegt.

17. Vorrichtung nach Anspruch 13, bei der der Blattstapel auf sichtfensterparallelen Flächen (411) des zweiten Rahmenteils gegenüber dem Sichtfenster abgestützt ist, dadurch gekennzeichnet, daß die Oberseite der Schienenelemente bei auseinandergezogenen Rahmenteilen etwa auf dem Niveau der genannten Flächen liegt.

18. Vorrichtung nach Anspruch 15, dadurch gekennzeichnet, daß das Schienenelement und die es abstützende Feder derart ausgebildet sind, daß es beim Auseinanderziehen der Rahmenteile von dem Sichtfenster an einem Ende weggedrückt wird und dabei um einen Verbindungspunkt mit der Feder eine Kippbewegung ausführt, danach entgegen der Ausziehrichtung des zweiten Rahmenteils längsverlagert wird und beim Zusammenschieben diese Bewegungen in umgekehrter Reihenfolge ausführt.

19. Vorrichtung nach Anspruch 13, dadurch gekennzeichnet, daß die Mittel an dem ersten Rahmenteil verlagerbar angeordnete Verankerungshaken (432) umfassen die beim Auseinanderziehen über das Schienenelementende verlagert werden und beim Zusammenschieben in eine Freigabeposition verlagert werden.

20. Vorrichtung nach Anspruch 19, dadurch gekennzeichnet, daß die Verankerungshaken (432) in Auszugsrichtung des zweiten Rahmenteils verlagerbar sind.

21. Vorrichtung nach Anspruch 19, dadurch gekennzeichnet, daß die Verankerungshaken in eine ihrer Endlagen federvorgespannt sind.

22. Vorrichtung nach Anspruch 21, dadurch gekennzeichnet, daß die Verankerungshaken (432) Teil eines Federbügels (432) sind.

23. Vorrichtung nach Anspruch 21, dadurch gekennzeichnet, daß die Verankerungshaken (432) schwenkbeweglich sind.

24. Vorrichtung nach Anspruch 15 oder 18, dadurch gekennzeichnet, daß das Schienenelementende zunächst auf ein Niveau unterhalb des Verankerungshakens gedrückt wird und sich dann bis zur Wirkverbindung mit diesem hebt.

25. Vorrichtung nach Anspruch 1, dadurch gekennzeichnet, daß die Einzelblatt-Haltemittel mindestens einen Fortsatz (126) umfassen, der über die dem Blattstapel zugekehrte Seite des Schienenelements hinaussteht.

26. Vorrichtung nach Anspruch 25, gekennzeichnet durch ein Paar von symmetrisch auf dem Schienenelement angeordneten Fortsätzen (126).

27. Vorrichtung nach Anspruch 25, dadurch gekennzeichnet, daß jeder Fortsatz eine dem Blattstapel zugekehrte Schrägfläche aufweist.

28. Vorrichtung nach Anspruch 25, dadurch gekennzeichnet, daß jeder Fortsatz eine dem Blattstapel abgekehrte Schrägfläche aufweist.

29. Vorrichtung nach Anspruch 25, dadurch gekennzeichnet, daß jeder Fortsatz um ein die Dicke eines Blattes übersteigendes Maß über die Schienenelementseite hinaussteht.

30. Vorrichtung nach Anspruch 25, dadurch gekennzeichnet, daß jeder Fortsatz einstückig mit dem Schienenelement ausgebildet ist.

31. Vorrichtung nach Anspruch 25, dadurch gekennzeichnet, daß das zweite Rahmenteil einen als Reststapelhalter dienenden Quersteg (122) aufweist, der beim Auseinanderziehen der Rahmenteile die Fortsätze überläuft und Ausnehmungen für deren Durchlaß aufweist.

32. Vorrichtung nach Anspruch 25, dadurch gekennzeichnet, daß jeder Fortsatz einen sich im wesentlichen senkrecht zur Ebene des Einzelblattes erstreckenden Haken (300) umfaßt, dessen Höhe gleich groß oder kleiner ist als eine Blattdicke.

33. Vorrichtung nach Anspruch 32, dadurch gekennzeichnet, daß der Haken am Ende eines zur Einzelblattebene im wesentlichen parallelen Plateaus (301) ausgebildet ist.

34. Vorrichtung nach Anspruch 32 oder 33, dadurch gekennzeichnet, daß dem Haken eine ansteigende Rampe (302) vorgelagert ist.

35. Vorrichtung nach Anspruch 34, dadurch gekennzeichnet, daß die Rampe in der hakenseitigen Hälfte des Schienenelements vorgesehen ist.

36. Vorrichtung nach einem der Ansprüche 34 oder 35, dadurch gekennzeichnet, daß auf dem Schienenelement ein Haftbelagstreifen (140) angeordnet ist, der auf einer zu der Rampe parallelen Tragrampe (305) aufliegt.

37. Vorrichtung nach einem der Ansprüche 25 bis 36, dadurch gekennzeichnet, daß beidseits eines auf das Schienenelement aufgebrachten Haftstreifens (140) je ein Fortsatz (142) im Abstand von dem Belag vorgesehen ist.

38. Vorrichtung nach Anspruch 25, bei der an dem ersten Rahmenteil Blattniederhalter (161) auf seiner dem Schienenelement zugekehrten Wandung vorgesehen sind, zwischen die der mindestens eine Fortsatz (126, 300) paßt.

39. Vorrichtung nach Anspruch 1, dadurch gekennzeichnet, daß die Einzelblatt-Haltemittel eine reibungsschlüssig am Einzelblatt angreifende Bahn (140) auf dem Schienenelement umfassen, neben der das Einzelblatt von Distanzierungselementen (142) abgestützt ist, und daß das zweite Rahmenteil ein Anpreßelement (138) zum Andrücken des Einzelblattes an die Bahn beim Auseinanderziehen der Rahmenteile aufweist, während beim Zusammenschieben der Rahmenteile der Reststapel durch die Distanzierungselemente im Abstand von der Bahn gehalten ist.

40. Vorrichtung nach Anspruch 39, dadurch gekennzeichnet, daß die Bahn von einem Haftbelagstreifen (140) gebildet ist.

41. Vorrichtung nach Anspruch 39, dadurch gekennzeichnet, daß das Anpreßelement (138) an dem Reststapelmitnehmer (122) vorgesehen ist.

42. Vorrichtung nach Anspruch 39, dadurch gekennzeichnet, daß das Anpreßelement (138) sich federnd am Reststapelmitnehmer (122) abstützt.

43. Vorrichtung nach Anspruch 41, dadurch gekennzeichnet, daß das Anpreßelement eine zum Umlauf antreibbare Rolle (138) ist.

44. Vorrichtung nach Anspruch 43, dadurch gekennzeichnet, daß die Rolle (138) in einem Schuh (136) gelagert ist, der am Reststapelmitnehmer (122) gleitbeweglich geführt ist.

45. Vorrichtung nach einem der Ansprüche 39 bis 44, dadurch gekennzeichnet, daß die Distanzierungselemente von dem Schienenelement hochstehende Rippen (142) umfassen.

46. Vorrichtung nach Anspruch 45, dadurch gekennzeichnet, daß die Rippen (142) beidseits der Bahn angeordnet sind.

47. Vorrichtung nach Anspruch 46, dadurch gekennzeichnet, daß zwischen Bahn und Distanzrippen ein Abstand vorgesehen ist.

48. Vorrichtung nach Anspruch 39, dadurch gekennzeichnet, daß sich die Bahn und die Distanzierungselemente über einen erheblichen Teil der Schienenelementlänge erstrecken.

49. Vorrichtung nach Anspruch 39 oder 48, dadurch gekennzeichnet, daß am Schienenelementende, das bei zusammengeschobenen Rahmenteilen nahe dem Reststapelmitnehmer liegt, die Distanzierungselemente von diesem Ende weiter entfernt beginnen als die Bahn.

50. Vorrichtung nach Anspruch 40, dadurch gekennzeichnet, daß die Haftbelagstreifen (140) kürzer als das Schienenelement und an ihren Enden schräg abgeschnitten sind, das Schienenelement nahe dem schräügen Belagende einen Toleranzausgleichsfortsatz (166, 418) aufweist, und dieser eine Höhe besitzt, die quer zur Schienenerstreckung von einem Minimum entsprechend einem dünneren Belag zu einem Maximum entsprechend einem dickeren Belag ansteigt.

51. Vorrichtung nach Anspruch 1, dadurch gekennzeichnet, daß die Einzelblatt-Haltemittel ein relativ zum Einzelblatt verlagerbares Klammerelement (182, 192) umfassen, das an der vor der Abtrennung dem Reststapel zugewandten Seite des Einzelbattes angreift und es gegen das Schienenelement preßt, wobei Mittel für die Steuerung der Verlagerung des Klammerelementes in Abhängigkeit von der Relativbewegung der Rahmenteile vorgesehen sind.

52. Vorrichtung nach Anspruch 51, dadurch gekennzeichnet, daß das Klammerelement (182) in Erstreckungsrichtung des Schienenelements zwischen einer Preß- und einer Freigabeposition verlagerbar ist.

53. Vorrichtung nach Anspruch 51, dadurch gekennzeichnet, daß das Klammerelement (182) durch Auflaufen des zweiten Rahmenteils verlagerbar ist.

54. Vorrichtung nach Anspruch 51, dadurch gekennzeichnet, daß das Klammerelement (182) elastisch auslenkbare Arme (184, 188) aufweist.

55. Vorrichtung nach Anspruch 51, dadurch gekennzeichnet, daß das Klammerelement (190) durch Auflaufen des Reststapels steuerbar ist.

56. Vorrichtung nach Anspruch 51, dadurch gekennzeichnet, daß das Klammerelement von dem Einzelblatt in der äußeren Endstellung der Rahmenteile oder bei deren Zusammenschieben lösbar ist.

57. Vorrichtung nach Anspruch 51, dadurch gekennzeichnet, daß das Klammerelement (190) in eine seiner Endlagen federvorgespannt ist.

58. Vorrichtung nach Anspruch 51, dadurch gekennzeichnet, daß das Klammerelement (190) in die Anpreßposition verlagert wird, nachdem der Reststapelmitnehmer eine Querkante des Einzelblatts überlaufen hat.

59. Vorrichtung nach Anspruch 51, dadurch gekennzeichnet, daß das Klammerelement (190) an einem Einzelblattende angreift, das von dem Reststapelmitnehmer zuletzt überlaufen wird.

60. Vorrichtung nach Anspruch 59, gekennzeichnet durch Reststapelhebemittel, die ein Verlagern des Klammerelements über das Einzelblatt ermöglichen.

61. Vorrichtung nach Anspruch 1, dadurch gekennzeichnet, daß das Einzelblatt-Haltemittel ein Anschlagelement (194) umfaßt, das das Einzelblatt an seiner Querkante gegen vom Reststapelmitnehmer her übertragene Kräfte abstützt, und ein Klammerelement umfaßt, das sich auf die dem Restapel zugekehrte Seite des Einzelblattes, zwischen diesen und den Reststapel ragend, legt.

62. Vorrichtung nach Anspruch 61, dadurch gekennzeichnet, daß das Einzelblatt-Haltemittel durch Überlaufen des zweiten Rahmenteils mit dem Reststapel zwischen einer haltenden und einer Freigabeposition umsteuerbar ist.

63. Vorrichtung nach Anspruch 61 oder 62, dadurch gekennzeichnet, daß das Klammerelement das Einzelblatt solange festhält, bis die Rahmenteile vollständig auseinandergezogen sind.

64. Vorrichtung nach Anspruch 61, gekennzeichnet durch Reststapel-Hebemittel, die das Einführen des Klammerelements zwischen Einzelblatt und Reststapel ermöglichen.

65. Vorrichtung nach Anspruch 1, dadurch gekennzeichnet, daß das erste Rahmenteil ein erstes, stationäres Trennelement (128, 130) aufweist, das mit einem zweiten, am zweiten Rahmenteil angeordneten Trennelement (136) zu Beginn der Rahmenteilbewegung einen Durchlaßspalt für das Abtrennen des Einzelblatts vom Reststapel begrenzt, und daß das zweite Trennelement nach dem Abtrennvorgang auf das von dem Schienenelement abgestützte Einzelblatt aufläuft und im Zusammenwirken mit der Anpreßeinrichtung eine Sperre bildet, die den Durchlaß weiterer Blätter blockiert.

66. Vorrichtung nach Anspruch 65, dadurch gekennzeichnet, daß das zweite Rahmenteil einen Quersteg (122) aufweist, der als Stapelmitnehmer ausgebildet ist, und an dem das zweite Trennelement (136) vorgesehen ist.

67. Vorrichtung nach einem der Ansprüche 65 oder 66, dadurch gekennzeichnet, daß die beiden Trennelemente zumindest während des Abtrennvorgangs federnd aufeinander zu vorgespannt sind.

68. Vorrichtung nach Anspruch 66 oder 67, dadurch gekennzeichnet, daß an dem als Separator (122) ausgebildeten Quersteg Schuhe (136) verlagerbar angeordnet sind, die sich über Federn (131) gegen den Separator abstützen.

69. Vorrichtung nach einem der Ansprüche 65 bis 68, dadurch gekennzeichnet, daß das erste Trennelement (128) eine Stufe (134) mit einer Höhe umfaßt, die größer ist als eine Blattdicke und kleiner als zwei Blattdicken.

70. Vorrichtung nach Anspruch 69, dadurch gekennzeichnet, daß sich an die Stufe (134) in Richtung entgegen der Auszugsrichtung der Rahmenteile eine Sperrfläche (132) anschließt, auf der das zweite Trennelement (136) aufsetzbar ist.

71. Vorrichtung nach Anspruch 69 oder 70, dadurch gekennzeichnet, daß sich an die Stufe (134) in Richtung der Rahmenteilauszugsbewegung eine Positionierfläche (130) für das Einzelblatt anschließt.

72. Vorrichtung nach einem der Ansprüche 65 bis 71, dadurch gekennzeichnet, daß mindestens an einem der Trennelemente schräge Auflaufflächen (152) für die Rückführung des zweiten Rahmenteils vorgesehen sind.

73. Vorrichtung nach einem der Ansprüche 65 bis 72, dadurch gekennzeichnet, daß das erste Trennelement an Rippen ausgebildet ist, die sich in Richtung der Rahmenteilbewegung erstrecken.

74. Vorrichtung nach Anspruch 73, dadurch gekennzeichnet, daß mindestens ein Paar von kongruenten Rippen vorgesehen ist.

75. Vorrichtung nach einem der Ansprüche 65 bis 74, dadurch gekennzeichnet, daß jeweils zusammenwirkende erste und zweite Trennelemente beidseits einer sich in Auszugsrichtung der Rahmenteile erstreckenden Symmetrieebene vorgesehen sind.

76. Vorrichtung nach Anspruch 68, dadurch gekennzeichnet, daß in der zusammengeschobenen Rahmenteilposition der Schuh (136) mit einer Schrägfläche zusammenwirkt, die das zweite Rahmenteil bezüglich des ersten verriegelt.

77. Vorrichtung nach einem der Ansprüche 65 bis 76, dadurch gekennzeichnet, daß am zweiten Trennelement ein Röllchen (138) angeordnet ist, das über die Arbeitskante (145) des Trennelements um weniger als eine Blattdicke vorsteht.

78. Vorrichtung nach Anspruch 77, dadurch gekennzeichnet, daß das erste Trennelement (128) eine Ausnehmung aufweist, derart, daß das Röllchen bei zusammengeschobenen Rahmenteilen entlastet ist.

79. Vorrichtung nach einem der Ansprüche 65 bis 78, dadurch gekennzeichnet, daß das Schienenelement (112) in Rahmenteilbewegungsrichtung ausgefluchtet ist mit dem ersten und zweiten Trennelement.

80. Vorrichtung nach Anspruch 79, dadurch gekennzeichnet, daß das Schienenelement ein Ende aufweist, das kammartig mit dem ersten Trennelement (128) ineinandergreift.

81. Vorrichtung nach einem der Ansprüche 65 bis 80, dadurch gekennzeichnet, daß das zweite Trennelement (136) an einem quer verlaufenden Separatorsteg (122) des zweiten Rahmenteils angeordnet ist, der mit der Stapelhauptebene einen spitzen Winkel definierende Flächenabschnitte (148) besitzt, die beim Auseinanderziehen der Rahmenteile auf ein Ende des Schienenelements auflaufen und dieses in Richtung auf das erste Trennelement (128) verlagern.

82. Vorrichtung nach Anspruch 71 und 81, dadurch gekennzeichnet, daß das Schienenelementende soweit verlagerbar ist, daß das Einzelblatt auf der Positionierfläche (130) abgelegt wird.

83. Vorrichtung nach Anspruch 82, dadurch gekennzeichnet, daß das Schienenelementende soweit verlagerbar ist, daß das zweite Trennelement (136) auf das abgelegte Einzelblatt auflaufen kann.

84. Vorrichtung nach einem der Ansprüche 81 bis 83, dadurch gekennzeichnet, daß das Schienenelementende verdickte Steuerzinken (124) aufweist, auf die der Quersteg aufläuft.

85. Vorrichtung nach Anspruch 84, dadurch gekennzeichnet, daß das Schienenelementende eine mittlere Zinke (418) aufweist, auf die ein am zweiten Trennelement vorgesehenes Röllchen (138) aufläuft.

86. Vorrichtung nach Anspruch 84 und 85, dadurch gekennzeichnet, daß die verdickten Zinken ein erstes Niveau für das Schienenelementende definieren, von dem aus das Schienenelementende durch das auflaufende Röllchen in gleicher Richtung weiter verlagert wird.

87. Vorrichtung nach Anspruch 85 oder 86, dadurch gekennzeichnet, daß in Verlängerung des mittleren Zinkens auf dem Schienenelement ein Haftbelag (140) aufgebracht ist, auf dem das Röllchen abrollen kann.

88. Vorrichtung nach Anspruch 13 und einem von 65 bis 87, dadurch gekennzeichnet, daß die Wegdrückmittel (432) im Bereich des ersten Trennelements vorgesehen sind.

89. Vorrichtung nach einem der Ansprüche 65 bis 88, dadurch gekennzeichnet, daß das Schienenelement auf einer Blattfeder (114) abgestützt ist, die sich bis in den Bereich des ersten Trennelements erstreckt.

90. Vorrichtung nach einem der Ansprüche 65 bis 89, dadurch gekennzeichnet, daß das erste Trennelement (128) an einen dem Sichtfenster gegenüberliegenden Boden des ersten Rahmenteils angeformt ist.

91. Vorrichtung nach Anspruch 32, dadurch gekennzeichnet, daß Mittel zum Inaktivieren des Umschichtvorgangs vorgesehen sind, die die Querkante des Einzelblattes über den Haken (300) führen.

92. Vorrichtung nach Anspruch 91, dadurch gekennzeichnet, daß die Inaktivier-Mittel manuell aktivierbar sind.

93. Vorrichtung nach Anspruch 91 oder 92, dadurch gekennzeichnet, daß beim Umschichten das Einzelblatt einen Durchlaßspalt passiert, und daß die Mittel zum Inaktivieren Mittel (466) zum Blockieren des Spalts zumindest während einer Anfangsphase der relativen Rahmenteilbwegung umfassen.

94. Vorrichtung nach Anspruch 93, dadurch gekennzeichnet, daß die Mittel zum Inaktivieren gemeinsam betätigbar sind.

95. Vorrichtung nach einem der Ansprüche 91 bis 94, dadurch gekennzeichnet, daß das erste Rahmenteil ein Gehäuse mit dem Sichtfenster ist, aus dem ein das zweite Rahmenteil bildender Schieber herausziehbar und wieder einschiebbar ist.

96. Vorrichtung nach Anspruch 95, dadurch gekennzeichnet, daß der Reststapel-Mitnehmer von einer inneren Endwand des Schiebers gebildet ist.

97. Vorrichtung nach Anspruch 95, dadurch gekennzeichnet, daß der Haken an einem gehäuseöffnungsseitigen Ende des Schienenelements angeordnet ist.

98. Vorrichtung nach einem der Ansprüche 91 bis 97, dadurch gekennzeichnet, daß die Inaktivier-Mittel ein Leitorgan (474) umfassen, und daß der Haken und das Leitorgan relativ zueinander verlagerbar sind.

99. Vorrichtung nach Anspruch 98, dadurch gekennzeichnet, daß das Leitorgan relativ zum Haken verlagerbar ist.

100. Vorrichtung nach Anspruch 99, dadurch gekennzeichnet, daß der Haken stationär mit einem Blattabstützelement verbunden ist und daß das Leitorgan aus dem Blattabstützelement herausbewegbar ist.

101. Vorrichtung nach den Ansprüchen 98 bis 100, dadurch gekennzeichnet, daß das Leitorgan eine Führungsbahn (476) für die Einzelblattkante aufweist.

102. Vorrichtung nach einem der Ansprüche 98 bis 101, dadurch gekennzeichnet, daß das Leitorgan relativ zu dem Schienenelement verlagerbar ist.

103. Vorrichtung nach Anspruch 102, dadurch gekennzeichnet, daß das Leitorgan in Schienenlängsrichtung verlagerbar ist.

104. Vorrichtung nach Anspruch 95 und einem der Ansprüche 98 bis 103, dadurch gekennzeichnet, daß das Gehäuse einen dem Sichtfenster gegenüberliegenden Boden aufweist und daß das Leitorgan vom Boden aus aktivierbar ist.

105. Vorrichtung nach Anspruch 104, dadurch gekennzeichnet, daß das Leitorgan durch eine Bewegung des Schienenelements relativ zum Gehäuse in Wirkverbindung mit einem Aktivierungsorgan (472) bringbar ist.

106. Vorrichtung nach Anspurch 105, dadurch gekennzeichnet, daß das Aktivierungsorgan einen relativ zum Gehäuse verlagerbaren Nocken (472) umfaßt, auf den ein Abtastabschnitt (482) des Leitorgans auftrifft.

107. Vorrichtung nach einem der Ansprüche 105 oder 106 und nach Anspruch 93, dadurch gekennzeichnet, daß das Aktivierungsorgan (468) auch die Spaltblockiermittel aufweist.

108. Vorrichtung nach einem der Ansprüche 91 bis 107, dadurch gekennzeichnet, daß den beiden symmetrisch angeordneten Schienenelementen mit je einem Hakenabschnitt ein gemeinsames Aktivierungsorgan (466) zugeordnet ist.

109. Vorrichtrung nach einem der Ansprüche 104 bis 108, dadurch gekennzeichnet, daß der Gehäuseboden einen Durchbruch (460) aufweist, durch den ein Betätigungsorgan (464) für das Aktivierungsorgan nach außen ragt.

110. Vorrichtung nach Anspruch 109, dadurch gekennzeichnet, daß das Betätigungsorgan in Richtung der Schieberbewegung verschieblich ist.

111. Vorrichtung nach Anspruch 106, dadurch gekennzeichnet, daß der Nocken eine schräge Steuerfläche (472) aufweist, längs der das Leitorgan (474) gleitend in Richtung der Schieberbewegung verschoben wird.

112. Vorrichtung nach Anspruch 103, dadurch gekennzeichnet, daß das Leitorgan sich über einen wesentlichen Teil der Länge des Schienenelements erstreckt.

113. Vorrichtung nach einem der Ansprüche 98 bis 112, dadurch gekennzeichnet, daß das Leitorgan in eine seiner Endlagen federvorgespannt ist.

114. Vorrichtung nach Anspruch 113, dadurch gekennzeichnet, daß das Leitorgan in seine den Umschichtvorgang freigebende Endlage federvorgespannt ist.

115. Vorrichtung nach Anspruch 95 oder 98, dadurch gekennzeichnet, daß das Schienenelement eine Führungsrampe (478) aufweist, längs der das Leitorgan zwischen einer Inaktivierungs- und einer Fragebeeendlage geführt wird.

116. Vorrichtung nach Anspruch 98, dadurch gekennzeichnet, daß das Leitorgan einen Drahtbügel (474) umfaßt.

117. Vorrichtung nach Anspruch 116, dadurch gekennzeichnet, daß der Drahtbügel U-förmig und nahe dem Haken offen ist.

118. Vorrichtung nach Anspruch 95 und 117, dadurch gekennzeichnet, daß das Schienenelement zwei Haken (300) trägt und daß jedem Haken ein freies Drahtbügelenede (476) als Inaktivierungsmittel zugeordnet ist.

119. Vorrichtung nach einem der Ansprüche 116 bis 118, dadurch gekennzeichnet, daß das Schienenelement Längsrinnen (488) aufweist, in denen je einer von zwei parallelen Bügelschenkeln gleitbeweglich verlagerbar ist.

120. Vorrichtung nach Anspruch 92 und einem der Ansprüche 93 bis 119, dadurch gekennzeichnet, daß die Mittel nur aktivierbar sind, wenn die Rahmenteile in einer zusammengeschobenen Endlage sind.

121. Vorrichtung nach Anspruch 120, dadurch gekennzeichnet, daß das erste Rahmenteil ein relativ zu ihm bewegliches Aktivierungsorgan (466) und Sperrmittel (497) aufweist, die es in einer Umschicht-Freigabeposition arretieren, und daß die Sperrmittel durch Steuermittel (481) entsperrbar sind.

122. Vorrichtung nach Anspurch 121, dadurch gekennzeichnet, daß nach Betätigen des Aktivierungsorgans und Auseinanderziehen der Rahmenteile das Aktivierungsorgan vom zweiten Rahmenteil in seine Umschicht-Freigabeposition rückverlagerbar ist.

123. Vorrichtung nach Anspruch 121 oder 122, dadurch gekennzeichnet, daß die Steuermittel am zweiten Rahmenteil sind.

124. Vorrichtung nach Anspruch 121, 122 oder 123, dadurch gekennzeichnet, daß das Aktivierungsorgan einen Sperrabschnitt (477) umfaßt, der mit den Sperrmitteln in Arretiereingriff bringbar und aus diesem durch elastische Deformation beim Auflaufen auf das zweite Rahmenteil lösbar ist.

125. Vorrichtung nach Anspruch 124, dadurch gekennzeichnet, daß die elastische Deformation nur in bestimmten Relativlagen des Aktivierungsorgans bezüglich des ersten Rahmenteils zugelassen ist.

126. Vorrichtung nach einem der Ansprüche 124 oder 125, dadurch gekennzeichnet, daß die elastische Deformation nur zwischen zwei stabilen Endlagen der beteiligten Komponenten erfolgt.

127. Vorrichtung nach einem oder mehreren der vorangehenden Ansprüche, dadurch gekennzeichnet, daß sie für Blätter einer vorgegebenen Abmessung in Richtung quer zur Rahmenteilbewegungsrichtung ausgebildet ist und daß die beiden Schienenelemente schmaler sind als diese Abmessung.

128. Vorrichtung nach einem oder mehreren der vorangehenden Ansprüche, dadurch gekennzeichnet, daß die Schienenelemente die Blätter nahe ihren auszugsparallelen Kanten anpressen.

129. Vorrichtung nach einem oder mehreren der vorangehenden Ansprüche, dadurch gekennzeichnet, daß jedes Schienenelement aus Kunststoff besteht und auf einer metallischen Feder abgestützt ist.

130. Vorrichtung nach Anspruch 2, dadurch gekennzeichnet, daß das festgelegte Federende auf einen am Rahmenteilboden ausgebildeten Zapfen aufgesteckt ist.

131. Vorrichtung nach Anspruch 2, dadurch gekennzeichnet, daß das geführte Federende in einer Nut des Rahmenteilbodens geführt ist, die sich in Richtung der Rahmenteilbewegung erstreckt.

132. Vorrichtung nach einem oder mehreren der vorangehenden Ansprüche, dadurch gekennzeichnet, daß das Schienenelement auf seiner dem Sichtfenster abgekehrten Seite Versteifungsrippen aufweist.

133. Vorrichtung nach einem oder mehreren der vorangehenden Ansprüche, dadurch gekennzeichnet, daß das Schienenelement symmetrisch bezüglich seiner Längsmittelebene ausgebildet ist.

134. Vorrichtung nach Anspruch 3, dadurch gekennzeichnet, daß der Schieber einen Boden mit einem Durchbruch hat, durch den hindurch die im Gehäuse angeordnete Anpreßeinrichtung wirkt.

135. Vorrichtung nach Anspruch 134, dadurch gekennzeichnet, daß der Stapelmitnehmer eine Schrägfläche aufweist, die auf die Schienenelemente auflaufend dieses vom Sichtfenster wegdrückt.

136. Vorrichtung nach einem oder mehreren der vorangehenden Ansprüche, dadurch gekennzeichnet, daß das zweite Rahmenteil eine Griffmulde aufweist, die in einen Freiraum des ersten Rahmenteils einspringt.

137. Vorrichtung nach Anspruch 136, dadurch gekennzeichnet, daß die Griffmulde mittig bezüglich der Mittelebene ist, die sich in Richtung der Rahmenteilbewegung erstreckt.

138. Vorichtung nach Anspruch 137, dadurch gekennzeichnet, daß zwischen der Griffmulde und Seitenwandungen des ersten Rahmenteils ein Freiraum vorgesehen ist.

139. Vorrichtung nach Anspruch 138, dadurch gekennzeichnet, daß je ein Schienenelement beidseits der Mittelebene mit einem Ende in einen der Freiräume ragt.

140. Vorrichtung nach Anspruch 138 oder 139, dadurch gekennzeichnet, daß die Freiräume sich über die gesamte Höhe des zweiten Rahmenteils erstrecken.

141. Vorrichtung nach Anspruch 65 oder einem auf diesen rückbezogenen Anspruch, dadurch gekennzeichnet, daß das zweite Rahmenteil Stapelabstützflächen (411) aufweist, die gegenüber dem zweiten Trennelement (122) in Richtung der Auswärtsbewegung des zweiten Rahmenteils zurückspringen.

142. Vorrichtung nach Anspruch 141, dadurch gekennzeichnet, daß in Draufsicht auf das zweite Rahmenteil die Enden der Stapelauflageflächen in etwa bündig sind mit dem am weitesten auswärts ragenden Teil des zweiten Trennelements.

143. Vorrichtung nach einem oder mehreren der vorangehenden Ansprüche, dadurch gekennzeichnet, daß sie ein Transfersystem umfaßt zum Verlagern des abgezogenen Einzelblattes von einem Stapelende zum anderen Stapelende, und daß die Komponenten (162, 163, 164) des Transfersystems alternierend mit denen der Anpreßeinrichtung aktivierbar und inaktivierbar sind.

144. Vorrichtung nach Anspruch 143, dadurch gekennzeichnet, daß die Komponenten durch die Relativbewegung der Rahmenteile gesteuert aktiviert und inaktiviert werden.

145. Vorrichtung nach einem oder mehereren der vorangehenden Ansprüche, dadurch gekennzeichnet, daß sie gefederte Hebeorgane (162, 163, 163) umfaßt, die ein Transfersystem zum Verlagern eines abgezogenen Einzelblattes von einem Stapelende zum andern bilden.

146. Vorrichtung nach Anspruch 145, dadurch gekennzeichnet, daß paarweise und symmetrisch bezüglich der Rahmenteilbewegungsrichtung angeordnete gefederte Hebeorgane vorgesehen sind.

147. Vorrichtung nach Anspruch 144 oder 146, dadurch gekennzeichnet, daß die gefederten Hebeorgane seitlich neben den Schienenelementen angeordnet sind.

148. Vorrichtung nach Anspruch 147, dadurch gekennzeichnet, daß die gefederten Hebeorgange zwischen dem Paar von Schienenelementen angeordnet sind.

149. Vorrichtung nach einem der vorangehenden Ansprüche, dadurch gekennzeichnet, daß ein Einzelblatt-Positionierorgan (506) vorgesehen ist, an dem der Stapel (508), mit dem abzutrennenden Einzelblat (512) dem Positionierorgan zugekehrt, anliegt; daß der Stapel-Mitnehmer mit Mitnehmerflächen (504) an Querkanten der den Stapel bildenden Blätter angreift, welche Mitnehmerflächen von einer Endkante (510) begrenzt sind und einen von der Endkante ausgehenden, zur Ebene des abzutrennenden Einzelblattes im wesentlichen senkrechten Flächenabschnitt für die Mitnahme zumindest des dem abzutrennenden Einzelblatt unmittelbar benachbarten Blattes umfassen, und daß Mittel vorgesehen sind zum Vorbeiführen der Querkante des abzutrennenden Einzelblattes an der Mitnehmerflächen-Endkante und auf das Positionierorgan.

150. Vorrichtung nach Anspruch 149, dadurch gekennzeichnet, daß dem Positionierorgan eine Stufe (516) vorgelagert ist, deren Höhe größer ist als eine Blattdicke.

151. Vorrichtung nach Anspruch 150, dadurch gekennzeichnet, daß von der Stufe in Richtung entgegen dem Positionierorgan eine zu diesem im wesentlichen parallele Sperrfläche (514) ausgeht.

152. Vorrichtung nach Anspruch 149, dadurch gekennzeichnet, daß die Mitnehmerflächen eine Schrägfläche (504) umfassen, die zum Zuführen von Blättern zum Positionierorgan mit dessen Ebene einen spitzen Winkel einschließen.

153. Vorrichtung nach Anspruch 151 und 152, dadurch gekennzeichnet, daß die Schrägfläche in einem Abstand von der Sperrfläche (514) endet, der kleiner ist als eine Blattdicke.

154. Vorrichtung nach Anspruch 153, dadurch gekennzeichnet, daß die Schrägfläche bis zur Sperrfläche reicht.

155. Vorrichtung nach Anspruch 153 oder 154, dadurch gekennzeichnet, daß im Anschluß an die Schrägfläche sich der senkrechte Flächenabschnitt (606) in Richtung Positionierorgan erstreckt.

156. Vorrichtung nach einem der Ansprüche 149 bis 155, dadurch gekennzeichnet, daß die Endkante von dem Positionierorgan einen Abstand aufweist, der größer ist als eine Blattdicke und kleiner als zwei Blattdicken.

157. Vorrichtung nach einem der Ansprüche 153 bis 155, dadurch gekennzeichnet, daß der senkrechte Flächenabschnitt (510) gegenüber dem Ende der Schrägfläche um ein vorgegebenes Maß entgegen der Verlagerungsrichtung des Stapelmitnehmers versetzt ist.

158. Vorrichtung nach Anspruch 157, dadurch gekennzeichnet, daß sich vom Ende der Schrägfläche zum Beginn des senkrechten Flächenabschnitts eine Zwischenfläche (518) erstreckt, die im wesentlichen parallel zu der Sperrfläche (514) verläuft.

159. Vorrichtung nach Anspruch 151 oder einem auf diesen rückbezogenen Anspruch, dadurch gekennzeichnet, daß die Endkante näher dem Positionierorgan ist als das Niveau der Sperrfläche.

160. Vorrichtung nach Anspruch 159, dadurch gekennzeichnet, daß die Sperrfläche auf zwei kongruenten, beabstandeten Rippen ausgebildet ist und der senkrechte Flächenabschnitt zwischen den Rippen angeordnet ist.

161. Vorrichtung nach einem der Ansprüche 149 bis 160, dadurch gekennzeichnet, daß der Stapelmitnehmer und das Einzelblatt-Positionierorgang federnd aufeinander zu vorgespannt sind.

162. Vorrichtung nach Anspruch 161, dadurch gekennzeichnet, daß der Stapel-Mitnehmer einen Schuh (502) umfaßt, der sich über eine Feder an ihm abstützt, und daß der Schuh zumindest den senkrechten Flächenabschnitt aufweist.

163. Vorrichtung nach einem der Ansprüche 149 bis 162, dadurch gekennzeichnet, daß die Führungsmittel Steuerflächen umfassen, längs denen die Querkante des Einzelblattes beim Abtrennen an der Endkante in Richtung quer zu seiner Ebene verlagert wird.

164. Vorrichtung nach Anspruch 163, dadurch gekennzeichnet, daß die Steuerflächen gegenüber dem senkrechten Flächenabschnitt in Richtung der Blatterstreckung versetzt sind.

165. Vorrichtung nach einem der Ansprüche 149 bis 164, dadurch gekennzeichnet, daß die Führungsmittel mit dem Positionierorgan baulich vereinigt sind.

166. Vorrichtung nach Anspruch 2 und 65, dadurch gekennzeichnet, daß das bewegliche Federende von dem ersten Trennelement geführt ist.

## Claims

1. Device for the cyclic rearrangement of a pile of substantially rectangular sheets, with a first (100) and a second (104) frame part, one of which has a viewing window (102), and which frame parts are movable towards and away relative to one another, and with means (160) for removing a sheet from one end of an inserted pile of sheets as the frame parts are moved apart and adding the individual sheet to the other end of the pile as the frame parts are pushed back together again, and with a spring-biased pressing means (112, 114), arranged in the first frame part and controlled by the movement of the frame parts, for pressing the pile towards the viewing window when the frame parts are pushed together, the second frame part having a pile transporter (122) and the pressing means having means (126) for retaining the individual sheet which grasp the transverse edge of the individual sheet to be separated and hold it in engagement with the pressing means for the separating operation, while the individual sheet is passed over by the pile transporter, characterised in that the pressing means comprises a pair of rail elements (112) supported on springs (114) and extending in the direction of and substantially over the entire travel of the movement of the frame parts, and in that each rail element has projections, which project over the retaining means for the individual sheet in the extension of the rail element, and guide the rail element through under the pile transporter during the inward travel of the second frame part.

2. A device according to Claim 1, characterised in that the two rail elements are arranged symmetrically with respect to the central plane of the frame parts, each being supported on its own leaf spring (114), one end of which is fixed on the first frame part (100), while the other end is movable parallel to the direction of movement of the frame parts, but is supported transversely thereto by means of guide means (120) and which between the ends is arched towards the viewing window and is connected approximately centrally to the corresponding rail element.

3. A device according to Claim 1 or 2, characterised in that the first frame part is a housing (100) with an opening through which a slider member (104), forming the second frame part, can be withdrawn parallel to the plane of the viewing window and reinserted, and in that the rail elements have, near the housing opening, means (164, 170) which block the insertion of sheets between the rail element and a housing base (110) lying opposite the viewing window.

4. A device according to Claim 3, characterised in that the blocking means are integrally moulded on the ends of the rails.

5. A device according to Claim 3, characterised in that the blocking means comprise a projection (164) directed towards the housing base.

6. A device according to Claim 5, characterised in that the slider member has a transverse strut which passes over the rail elements and serves as a separator (122), and which, when the slider member is withdrawn, sits on the rail elements near their ends, and in that in this position the projection (164) reaches close to the housing base.

7. A device according to Claim 3, characterised in that the blocking means (170) are movably connected to the rail elements.

8. A device according to Claim 3, characterised in that the blocking means comprise a flap (170) which is linked to the rail end and the free end of which is guided on the housing (100).

9. A device according to Claim 8, characterised in that the free end of the flap is slidingly guided on the housing base in the direction of movement of the slider member.

10. A device according to Claim 3, characterised in that the slider member has surface portions (411) supporting the pile of sheets and lying opposite the viewing window, and the blocking means (164) define a level, parallel to the viewing window, which is further from the viewing window than are the pile support surfaces of the slider member (104).

11. A device according to Claim 5, characterised in that the projections (164) are orientated obliquely forwards and downwards.

12. A device according to Claim 3, characterised in that blocking elements (174) for leading the edges of sheets over the blocking means are integrally moulded on the housing base.

13. A device according to Claim 1, characterised in that the pile transporter (122) in the withdrawn position of the frame parts presses one of the rail element ends away from the viewing window, and in that the first frame part (100) has means (432) which enter into a working engagement with the rail element, under the control of the second frame part, in order also to press the other end of the rail element away from the viewing window, so that the rail element assumes a position substantially parallel to the plane of the viewing window.

14. A device according to Claim 13, characterised in that the means (432) enter into a working engagement with the other rail element end.

15. A device according to Claim 13 or 14, characterised in that on the first frame part there are fixedly arranged anchoring hooks (156) beneath which the other rail element end is displaceable during the outward movement, and from which it is releasable as the parts are pushed together.

16. A device according to Claim 13, characterised in that the means define a level of the side, facing towards the viewing window, of the rail element, which level lies below the pile transporter.

17. A device according to Claim 13, in which the pile of sheets is supported relative to the viewing window on surfaces (411), parallel to the viewing window, of the second frame part, characterised in that the upper side of the rail elements lies approximately on the level of the aforesaid surfaces when the frame parts are pulled apart.

18. A device according to Claim 15, characterised in that the rail element and the spring supporting it are so constructed that when the frame parts are pulled apart the rail element is pushed away from the viewing window at one end and thereby executes a tilting movement about a point of connection with the spring, is then displaced longitudinally in the opposite direction to that of the withdrawal of the second frame part, and, when the parts are pushed together, executes these movements in reverse order.

19. A device according to Claim 13, characterised in that the means comprise anchoring hooks (432) which are displaceably arranged on the first frame part and which, during the outward movement of the parts, are displaced over the rail element end and when the parts are pushed together are displaced into a release position.

20. A device according to Claim 19, characterised in that the anchoring hooks (432) are displaceable in the direction in which the second frame part is pulled out.

21. A device according to Claim 19, characterised in that the anchoring hooks are spring-biased into one of their end positions.

22. A device according to Claim 21, characterised in that the anchoring hooks (432) form part of a bent spring (432).

23. A device according to Claim 21, characterised in that the anchoring hooks (432) are pivotably movable.

24. A device according to Claim 15 or 18, characterised in that the rail element end is first pressed onto a level beneath the anchoring hook and then rises until it comes into a working engagement with the latter.

25. A device according to Claim 1, characterised in that the retaining means for the individual sheet comprise at least one projection (126) which projects beyond the side, facing the pile of sheets, of the rail element.

26. A device according to Claim 25, characterised by a pair of projections (126) arranged symmetrically on the rail element.

27. A device according to Claim 25, characterised in that each projection has an inclined surface facing towards the pile of sheets.

28. A device according to Claim 25, characterised in that each projection has an inclined surface facing away from the pile of sheets.

29. A device according to Claim 25, characterised in that each projection projects beyond the rail element side by an amount exceeding the thickness of a sheet.

30. A device according to Claim 25, characterised in that each projection is formed in one piece with the rail element.

31. A device according to Claim 25, characterised in that the second frame part has a transverse strut (122) which serves as a retaining means for the remainder of the pile and which, when the frame parts are pulled apart, passes over the projections and has cut-outs to allow the passage thereof.

32. A device according to Claim 25, characterised in that each projection comprises a hook (300) which extends substantially perpendicularly to the plane of the individual sheet and the height of which is equal to or less than the thickness of a sheet.

33. A device according to Claim 32, characterised in that the hook is formed at the end of a flat section (301) substantially parallel to the plane of the individual sheet.

34. A device according to Claim 32 or 33, characterised in that a rising ramp (302) is situated in front of the hook.

35. A device according to Claim 34, characterised in that the ramp is provided in the half of the rail element situated towards the hook.

36. A device according to either of Claims 34 and 35, characterised in that on the rail element there is arranged a retentive covering strip (140) which is borne on a support ramp (305) parallel to the ramp.

37. A device according to one of Claims 25 to 36, characterised in that on each side of a retentive strip (140) mounted on the rail element a projection (142) is provided which is spaced from the covering.

38. A device according to Claim 25, wherein on the first frame part sheet holding-down means (161) are provided on its wall facing towards the rail element, between which means the at least one projection (126, 300) fits.

39. A device according to Claim 1, characterised in that the retaining means for the individual sheet comprise a path (140), on the rail element, engaging frictionally with the individual sheet and near which the individual sheet is supported by spacing elements (142), and in that the second frame part has a pressing element (138) to press the individual sheet against the path when the frame parts are pulled apart, while when the frame parts are pushed together the remainder of the pile is held at a distance from the path by means of the spacing elements.

40. A device according to Claim 39, characterised in that the path is formed by a retentive covering strip (140).

41. A device according to Claim 39, characterised in that the pressing element (138) is provided on the transporter (122) for the remainder of the pile.

42. A device according to Claim 39, characterised in that the pressing element (138) bears resiliently on the transporter (122) for the remainder of the pile.

43. A device according to Claim 41, characterised in that the pressing element is a roller (138) that is rotatable.

44. A device according to Claim 43, characterised in that the roller (138) is mounted in a shoe (136) which is guided for sliding movement on the transporter (122) for the remainder of the pile.

45. A device according to one of Claims 39 to 44, characterised in that the spacing elements comprise ribs (142) standing up from the rail element.

46. A device according to Claim 45, characterised in that the ribs (142) are arranged on both sides of the path.

47. A device according to Claim 46, characterised in that a space is provided between the path and the spacing ribs.

48. A device according to Claim 39, characterised in that the path and the spacing elements extend over a considerable part of the length of the rail element.

49. A device according to Claim 39 or 48, characterised in that at the rail element end which, when the frame parts are pushed together, is situated near the transporter for the remainder of the pile, the spacing elements start further from this end than does the path.

50. A device according to Claim 40, characterised in that the retentive covering strips (140) are shorter than the rail element and are cut obliquely at their ends, the rail element has near the oblique end of the covering a tolerance compensating projection (166, 418), and the latter has a height which increases in a transverse direction with respect to the length of the rail from a minimum corresponding to a thinner covering to a maximum corresponding to a thicker covering.

51. A device according to Claim 1, characterised in that the retaining means for the individual sheet comprise a gripper element (182, 192) which is displaceable relative to the individual sheet and engages with that side of the individual sheet which, before the separation, faces towards the remainder of the pile, and presses the sheet against the rail element, means being provided for controlling the displacement of the gripping element in response to the relative movement of the frame parts.

52. A device according to Claim 51, characterised in that the gripping element (182) is displaceable, in the direction in which the rail element extends, between a pressing position and a release position.

53. A device according to Claim 51, characterised in that the gripping element (182) is displaceable by the second frame part's running onto it.

54. A device according to Claim 51, characterised in that the gripping element (182) has arms (184, 188) that are resiliently deflectable.

55. A device according to Claim 51, characterised in that the gripping element (190) is controllable by the remainder of the stack's running onto it.

56. A device according to Claim 51, characterised in that the gripping element is releasable from the individual sheet in the outer end position of the frame parts or on the latter being pushed together.

57. A device according to Claim 51, characterised in that the gripping element (190) is spring-biased into one of its end positions.

58. A device according to Claim 51, characterised in that the gripping element (190) is displaced into the pressing position after the transporter for the remainder of the pile has passed over a transverse edge of the individual sheet.

59. A device according to Claim 51, characterised in that the gripping element (190) engages with an end of the individual sheet that is passed over last by the transporter for the remainder of the pile.

60. A device according to Claim 59, characterised by means for lifting up the remainder of the pile which permit displacement of the gripping element over the individual sheet.

61. A device according to Claim 1, characterised in that the means for retaining the individual sheet comprises a stop element (194) which supports the individual sheet at its transverse edge against forces transmitted from the transporter for the remainder of the pile, and comprises a gripping element which bears on the side, facing towards the remainder of the pile, of the individual sheet, projecting between the latter and the remainder of the pile.

62. A device according to Claim 61, characterised in that the means for retaining the individual sheet is switchable between a retaining position and a release position by the passing over of the second frame part with the remainder of the pile.

63. A device according to Claim 61 or 62, characterised in that the gripping element holds the individual sheet firmly until the frame parts are fully pulled apart.

64. A device according to Claim 61, characterised by means for lifting up the remainder of the pile which permit the introduction of the gripping element between the individual sheet and the remainder of the pile.

65. A device according to Claim 1, characterised in that the first frame part has a first, stationary separating element (128, 130) which with a second separating element (136) arranged on the second frame part, at the beginning of the frame part movement, defines a through-slot for the separation of the individual sheet from the remainder of the pile, and in that the second separating element, after the separating operation, runs onto the individual sheet supported by the rail element, and in co-operation with the pressing means forms a blocking means which blocks the passage of further sheets.

66. A device according to Claim 65, characterised in that the second frame part has a transverse strut (122) which is in the form of a pile transporter, and on which the second separating element (136) is provided.

67. A device according to either of Claims 65 and 66, characterised in that the two separating elements are biased resiliently towards each other at least during the separating operation.

68. A device according to, Claim 66 or 67, characterised in that on the transverse strut constituting a separator (122) there are displaceably arranged shoes (136) which bear by way of springs (131) against the separator.

69. A device according to one of Claims 65 to 68, characterised in that the first separating element (128) comprises a step (134) having a height that is greater than the thickness of one sheet and less than the thickness of two sheets.

70. A device according to Claim 69, characterised in trot a blocking surface (132), onto which the second separating element (136) can be placed, adjoins the step (134) in the opposite direction to that of withdrawal of the frame parts.

71. A device according to Claim 69 or 70, characterised in that a positioning surface (130) for the individual sheet adjoins the step (134) in the direction of the withdrawal of the frame parts.

72. A device according to one of Claims 65 to 71, characterised in that, at least on one of the separating elements, inclined run-up surfaces (152) are provided for the return of the second frame part.

73. A device according to one of Claims 65 to 72, characterised in that the first separating element is formed on ribs which extend in the direction of movement of the frame parts.

74. A device according to Claim 73, characterised in that at least one pair of matching ribs is provided.

75. A device according to one of Claims 65 to 74, characterised in that first and second separating elements, which co-operate in each case, are provided on respective sides of a plane of symmetry extending in the direction of withdrawal of the frame parts.

76. A device according to Claim 68, characterised in that, in the position in which the frame parts are pushed together, the shoe (136) co-operates with an inclined surface which locks the second frame part with respect to the first.

77. A device according to one of Claims 65 to 76, characterised in that on the second separating element a small roller (138) is arranged which projects beyond the working edge (145) of the separating element by less than the thickness of a sheet.

78. A device according to Claim 77, characterised in that the first separating element (128) has a cut-out such that the small roller is freed from load when the frame parts are pushed together.

79. A device according to one of Claims 65 to 78, characterised in that the rail element (112) is flush with the first and second separating element in the direction of movement of the frame parts.

80. A device according to Claim 79, characterised in that the rail element has an end which inter-engages in a comb-like manner with the first separating element (128).

81. A device according to one of Claims 65 to 80, characterised in that the second separating element (136) is arranged on a transversely extending separator strut (122) of the second frame part which has surface portions (148) that define an acute angle with the principal plane of the pile and run onto one end of the rail element when the frame parts are pulled apart and displace the said end towards the first separating element (128).

82. A device according to Claim 71 and 81, characterised in that the end of the rail element is displaceable so far that the individual sheet is deposited on the positioning surface (130).

83. A device according to Claim 82, characterised in that the end of the rail element is displaceable so far that the second separating element (136) can run onto the deposited individual sheet.

84. A device according to one of Claims 81 to 83, characterised in that the end of the rail element has thickened control lugs (124) onto which the transverse strut runs.

85. A device according to Claim 84, characterised in that the end of the rail element has a central lug (418) onto which runs a small roller (138) provided on the second separating element.

86. A device according to Claim 84 and 85, characterised in that the thickened lugs define a first level for the rail element end from which the rail element end is displaced further in the same direction by the small roller running onto it.

87. A device according to Claim 85 or 86, characterised in that in the extension of the central lug there is mounted on the rail element a retentive covering (140) on which the small roller can roll along.

88. A device according to Claim 13 and one of Claims 65 to 87, characterised in that the means for pushing away (432) are provided in the region of the first separating element.

89. A device according to one of Claims 65 to 88, characterised in that the rail element is supported on a leaf spring (114) which extends into the region of the first separating element.

90. A device according to one of Claims 65 to 89, characterised in that the first separating element (128) is integrally moulded on a base, lying opposite the viewing window, of the first frame part.

91. A device according to Claim 32, characterised in that means to disable the rearrangement operation are provided which guide the transverse edge of the individual sheet over the hook (300).

92. A device according to Claim 91, characterised in that the disabling means can be actuated manually.

93. A device according to Claim 91 or 92, characterised in that during the rearrangement the individual sheet passes through a through-slot and in that the disabling means comprise means (466) for blocking the slot at least during an initial phase of the relative movement of the frame parts.

94. A device according to Claim 93, characterised in that the disabling means are arranged to be actuated together.

95. A device according to one of Claims 91 to 94, characterised in that the first frame part is a housing, with the viewing window, from which a slider member forming the second frame part can be withdrawn and re-inserted.

96. A device according to Claim 95, characterised in that the transporter for the remainder of the pile is formed by an inner end wall of the slider member.

97. A device according to Claim 95, characterised in that the hook is arranged on an end, situated on the housing opening side, of the rail element.

98. A device according to one of Claims 91 to 97, characterised in that the disabling means comprise a guide member (474), and in that the hook and the guide member are displaceable relative to each other.

99. A device according to Claim 98, characterised in that the guide member is displaceable relative to the hook.

100. A device according to Claim 99, characterised in that the hook is fixedly connected to a sheet support element and in that the guide member is movable out of the sheet support element.

101. A device according to Claims 98 to 100, characterised in that the guide member has a guide path (476) for the edge of the individual sheet.

102. A device according to one of Claims 98 to 101, characterised in that the guide member is displaceable relative to the rail element.

103. A device according to Claim 102, characterised in that the guide member is displaceable in the longitudinal direction of the rail.

104. A device according to Claim 95 and one of Claims 98 to 103, characterised in that the housing has a base lying opposite the viewing window and in that the guide member can be actuated from the base.

105. A device according to Claim 104, characterised in that the guide member can be brought, by means of a movement of the rail element relative to the housing, into a working engagement with an activating member (472).

106. A device according to Claim 105, characterised in that the activating member comprises a projection (472) which is displaceable relative to the housing and which is encountered by a feeler portion (482) of the guide member.

107. A device according to one of Claims 105 or 106 and according to Claim 93, characterised in that the activating member (468) also has the slot blocking means.

108. A device according to one of Claims 91 to 107, characterised in that a common activating member (466) is associated with the two symmetrically arranged rail elements, each with a hook portion.

109. A device according to one of Claims 104 to 108, characterised in that the housing base has an aperture (460) through which an operating member (464) for the activating member projects towards the outside.

110. A device according to Claim 109, characterised in that the operating member is slidably movable in the direction of movement of the slider member.

111. A device according to Claim 106, characterised in that the projection has an inclined control surface (472) along which the guide member (474) is slidably displaced in the direction of movement of the slider member.

112. A device according to Claim 103, characterised in that the guide member extends over a substantial part of the length of the rail element.

113. A device according to one of Claims 98 to 112, characterised in that the guide member is spring-biased into one of its end positions.

114. A device according to Claim 113, characterised in that the guide member is spring-biased into the end position in which it releases the rearrangement operation.

115. A device according to Claim 95 or 98, characterised in that the rail element has a guide ramp (478) along which the guide member is guided between a disabling and a releasing end position.

116. A device according to Claim 98, characterised in that the guide member comprises a bent wire (474).

117. A device according to Claim 116, characterised in that the bent wire is U-shaped and is open near the hook.

118. A device according to Claims 95 and 117, characterised in that the rail element carries two hooks (300) and in that with each hook there is associated a free end (476) of the bent wire as disabling means.

119. A device according to one of Claims 116 to 118, characterised in that the rail element has longitudinal channels (488) in each of which one of two parallel limbs of the bent wire are slidably displaceable.

120. A device according to Claim 92 and one of Claims 93 to 119, characterised in that the means can be actuated only when the frame parts are in an end position in which they are pushed together.

121. A device according to Claim 120, characterised in that the first frame part has an activating member (466) movable relative thereto and blocking means (497) which arrest it in a rearrangement release position, and in that the blocking means can be unblocked by means of control means (481).

122. A device according to Claim 121, characterised in that after the activating member has been actuated and the frame parts have been pulled apart, the activating member is movable back into its rearrangement release position by the second frame part.

123. A device according to Claim 121 or 122, characterised in that the control means are on the second frame part.

124. A device according to Claim 121, 122 or 123, characterised in that the activating member comprises a blocking portion (477) which can be brought into arresting engagement with the blocking means and released from this arresting engagement by resilient deformation on running onto the second frame part.

125. A device according to Claim 124, characterised in that the resilient deformation is allowed only in certain relative positions of the activating member relative to the first frame part.

126. A device according to either of Claims 124 and 125, characterised in that the resilient deformation takes place only between two stable end positions of the participating components.

127. A device according to one or more of the preceding Claims, characterised in that it is designed for sheets of a predetermined dimension in a transverse direction with respect to the direction of movement of the frame parts, and in that the two rail elements are narrower than this dimension.

128. A device according to one or more of the preceding Claims, characterised in that the rail elements press the sheets near their edges that are parallel to the withdrawal direction.

129. A device according to one or more of the preceding Claims, characterised in that each rail element is made of plastics material and is supported on a metallic spring.

130. A device according to Claim 2, characterised in that the fixed end of the spring is placed on a pin formed on the base of the frame part.

131. A device according to Claim 2, characterised in that the guided end of the spring is guided in a channel in the base of the frame part, which channel extends in the direction of movement of the frame parts.

132. A device according to one or more of the preceding Claims, characterised in that the rail element has stiffening ribs on its side remote from the viewing window.

133. A device according to one or more of the preceding Claims, characterised in that the rail element is formed symmetrically in shape in relation to its longitudinal central plane.

134. A device according to Claim 3, characterised in that the slider member has a base with an aperture through which acts the pressing device arranged in the housing.

135. A device according to Claim 134, characterised in that the pile transporter has an inclined surface which, running onto the rail elements, pushes the latter away from the viewing window.

136. A device according to one or more of the preceding Claims, characterised in that the second frame part has a grip recess portion which springs into a free space in the first frame part.

137. A device according to Claim 136, characterised in that the grip recess portion is central with respect to the central plane which extends in the direction of movement of the frame parts.

138. A device according to Claim 137, characterised in that a free space is provided between the grip recess portion and side walls of the first frame part.

139. A device according to Claim 138, characterised in that on each side of the central plane a rail element projects with a respective end into one of the free spaces.

140. A device according to Claim 138 or 139, characterised in that the free spaces extend over the full height of the second frame part.

141. A device according to Claim 65 or a claim referred back thereto, characterised in that the second frame part has pile support surfaces (411) which spring back with respect to the second separating element (122) in the direction of the outward movement of the second frame part.

142. A device according to Claim 141, characterised in that in a view from above onto the second frame part the ends of the pile support surfaces are approximately flush with that part of the second separating element which projects furthest outwards.

143. A device according to one or more of the preceding Claims, characterised in that it comprises a transfer system for displacing the withdrawn individual sheet from one end of the pile to the other end of the pile, and in that the components (162, 163, 164) of the transfer system are arranged to be alternately actuated and disabled by those of the pressing device.

144. A device according to Claim 143, characterised in that the components are actuated and disabled under the control of the relative movement of the frame parts.

145. A device according to one or more of the preceding Claims, characterised in that it comprises spring-loaded lifting members (162, 163, 163) which form a transfer system for displacing a withdrawn individual sheet from one end of the pile to the other.

146. A device according to Claim 145, characterised in that spring-loaded lifting members are provided which are arranged in pairs and symmetrically in relation to the direction of movement of the frame parts.

147. A device according to Claim 144 or 146, characterised in that the spring-loaded lifting members are arranged alongside the rail elements.

148. A device according to Claim 147, characterised in that the spring-loaded lifting members are arranged between the pair of rail elements.

149. A device according to one of the preceding Claims, characterised in that a positioning member (506) for the individual sheet is provided on which the pile (508) bears with the individual sheet (512) to be separated facing towards the positioning member; in that the pile transporter engages, by means of carrier surfaces (504), transverse edges of the sheets forming the pile, which carrier surfaces are defined by an end edge (510) and comprise a surface portion, extending from the end edge and substantially in a direction perpendicular to the plane of the individual sheet to be separated, for carrying along at least the sheet immediately adjacent to the individual sheet to be separated, and in that means are provided to guide the transverse edge of the individual sheet to be separated past the end edge of the carrier surfaces and onto the positioning member.

150. A device according to Claim 149, characterised in that in front of the positioning member there is arranged a step (516), the height of which is greater than the thickness of a sheet.

151. A device according to Claim 150, characterised in that from the step there extends in the opposite direction to the positioning member a blocking surface (514) substantially parallel to the latter.

152. A device according to Claim 149, characterised in that the carrier surfaces comprise an inclined surface (504), and the inclined surfaces, in order to feed sheets to the positioning member, enclose an acute angle with the plane of the latter.

153. A device according to Claims 151 and 152, characterised in that the inclined surface ends at a distance from the blocking surface (514) which is less than the thickness of a sheet.

154. A device according to Claim 153, characterised in that the inclined surface extends as far as the blocking surface.

155. A device according to Claim 153 or 154, characterised in that adjacent to the inclined surface the perpendicular surface portion (606) extends in the direction of the positioning member.

156. A device according to one of Claims 149 to 155, characterised in that the end edge is at a distance from the positioning member which is greater than the thickness of one sheet and less than the thickness of two sheets.

157. A device according to one of Claims 153 to 155, characterised in that the perpendicular surface portion (510) is off-set with respect to the end of the inclined surface by a predetermined amount in the opposite direction to the direction of displacement of the pile transporter.

158. A device according to Claim 157, characterised in that from the end of the inclined surface to the beginning of the perpendicular surface portion there extends an intermediate surface (518) which runs substantially parallel to the blocking surface (514).

159. A device according to Claim 151 or to a claim referred back thereto, characterised in that the end edge is nearer to the positioning member than is the level of the blocking surface.

160. A device according to Claim 159, characterised in that the blocking surface is formed on two matching, spaced ribs, and the perpendicular surface portion is arranged between the ribs.

161. A device according to one of Claims 149 to 160, characterised in that the pile transporter and the positioning member for the individual sheet are resiliently biased towards each other.

162. A device according to Claim 161, characterised in that the pile transporter comprises a shoe (502) which bears thereon by way of a spring, and in that the shoe has at least the perpendicular surface portion.

163. A device according to one of Claims 149 to 162, characterised in that the guide means comprise control surfaces along which the transverse edge of the individual sheet is displaced during separation at the end edge in a transverse direction with respect to its plane.

164. A device according to Claim 163, characterised in that the control surfaces are off-set with respect to the perpendicular surface portion in the direction in which the sheet extends.

165. A device according to one of Claims 149 to 164, characterised in that the guide means are constructionally combined with the positioning member.

166. A device according to Claims 2 and 65, characterised in that the movable end of the spring is guided by the first separating element.

## Revendications

1. Dispositif pour la modification cyclique de la distribution d'une pile de feuilles sensiblement rectangulaires avec une première (100) et une deuxième (104) parties de cadre, dont l'une présente une fenêtre d'observation (102) et qui sont déplaçables, dans un sens et dans l'autre, l'une par rapport à l'autre, et avec des moyens (160) pour prélever une feuille à une extrémité d'une pile de feuilles insérée lors de l'extraction des parties de cadre et pour adjoindre la feuille individuelle à l'autre extrémité de la pile, lors de l'assemblage des parties de cadre, ainsi qu'avec un dispositif de pressage (112, 114), précontraint par un ressort, disposé dans la première partie de cadre et commandé par le déplacement de la partie de cadre, en vue de presser la pile contre la fenêtre d'observation lorsque les parties de cadre sont assemblées, la deuxième partie de cadre présentant un élément d'entraînement de pile (122) et le dispositif de pressage présentant des moyens de fixation de feuilles individuelles (126), qui saisissent l'arête transversale de la feuille individuelle à séparer et la maintiennent en prise avec le dispositif de pressage pour le processus de séparation, tandis que la feuille individuelle est parcourue par l'élément d'entraînement de pile, caractérisé en ce que le dispositif de pressage comprend une paire d'éléments de glissière (112) soutenus sur des ressorts (114), s'étendant en direction de et sensiblement sur la totalité de la course du déplacement de la partie de cadre et en ce que chaque élément de glissière présente des appendices dépassant les moyens de maintien de feuilles individuelles dans le prolongement de l'élément de glissière, appendices guidant l'élément de glissière sous l'élément d'entraînement de pile lors de la course de pénétration de la deuxième partie de cadre.

2. Dispositif selon la revendication 1, caractérisé en ce que les deux éléments de glissière sont disposés symétriquement par rapport au plan médian des parties de cadre et appuyées chacun sur un ressort à lame (114) propre dont une extrémité est fixée sur la première partie de cadre (100), tandis que l'autre extrémité est déplaçable parallèlement à la direction de déplacement des parties de cadre, en étant cependant soutenus transversalement à cette direction, au moyen de guidages (120) et incurvés entre les extrémités en direction de la fenêtre d'observation et reliés à peu près au centre à l'élément de glissière afférent.

3. Dispositif selon la revendication 1 ou 2, caractérisé en ce que la première partie de cadre est un carter (100) avec une ouverture, à travers laquelle un curseur (104) formant la deuxième partie de cadre peut être extrait et réinséré, parallèlement au plan de la fenêtre d'observation, et en ce que les éléments de glissière présentent à proximité de l'ouverture de carter des moyens (164, 170) bloquant l'insertion de feuilles, entre l'élément de glissière et un fond de carter (110) placé en regard de la fenêtre d'observation.

4. Dispositif selon la revendication 3, caractérisé en ce que les moyens de blocage sont formés d'un seul tenant sur les extrémités de glissière.

5. Dispositif selon la revendication 3, caractérisé en ce que les moyens de blocage comprennent un appendice (164) orienté mers le fond de carter.

6. Dispositif selon la revendication 5, caractérisé en ce que le curseur présente une nervure transversale s'étendant sur les éléments de glissière et servant de séparateur (122) qui, lorsque le curseur est tiré, repose sur les éléments de glissière, près de leurs extrémités, et en ce que, dans cette position, l'appendice (164) arrive jusqu'à proximité du fond de carter.

7. Dispositif selon la revendication 3, caractérisé en ce que les moyens de blocage (170) sont reliés mobiles aux éléments de glissière.

8. Dispositif selon la revendication 3, caractérisé en ce que les moyens de blocage comprennent un volet (170) articulé à l'extrémité de glissière, dont l'extrémité libre est guidée sur le carter (100).

9. Dispositif selon la revendication 8, caractérisé en ce que l'extrémité libre de volet est guidée à coulissement sur le fond de carter, en direction du déplacement de curseur.

10. Dispositif selon la revendication 3, caractérisé en ce que le curseur présente des sections de surface (411) soutenant la pile de feuille, placées en regard de la fenêtre d'observation et en ce que les moyens de blocage (164) définissent un niveau parallèle à la fenêtre d'observation et plus éloigné de la fenêtre d'observation que le sont les faces d'appui de pile du curseur (104).

11. Dispositif selon la revendication 3, caractérisé en ce que les appendices (164) sont orientés obliquement, vers l'avant et vers le bas.

12. Dispositif selon la revendication 3, caractérisé en ce que, sur le fond de carter, sont formés, d'un seul tenant, des éléments de blocage (174) destinés à faire franchir les moyens de blocage aux arêtes de feuille.

13. Dispositif selon la revendication 1, caractérisé en ce que l'organe d'entraînement de pile (122), dans la position déployée des parties de cadre écarte l'une des extrémités d'élément de glissière de la fenêtre d'observation et en ce que la première partie de cadre (100) présente des moyens (432), entrant en liaison fonctionnelle avec l'élément de glissière, sous la commande de la deuxième partie de cadre, afin d'écarter également son autre extrémité de la fenêtre d'observation, de sorte que l'élément de glissière prenne une position sensiblement parallèle au plan de la fenêtre d'observation.

14. Dispositif selon la revendication 13, caractérisé en ce que les moyens (432) sont en liaison fonctionnelle avec l'autre extrémité d'élément de glissière.

15. Dispositif selon la revendication 13 ou 14, caractérisé en ce que sur la première partie de cadre sont disposés stationnaires, des crochets d'ancrage (156), sous lesquels l'autre extrémité d'élément de glissière peut être déplacée lors de l'extraction et crochets dont elle peut être désolidarisée lors de l'assemblage.

16. Dispositif selon la revendication 13, caractérisé en ce que les moyens définissent un niveau du côté tourné vers la fenêtre d'observation de l'élément de glissière, qui est situé au dessous de l'organe d'entraînement de pile.

17. Dispositif selon la revendication 13, dans lequel la pile de feuille prend appui sur des faces (411) parallèles à la fenêtre d'observation de la deuxième partie de cadre, par rapport à la fenêtre d'observation, caractérisé en ce que la face supérieure des éléments de glissière vient se situer à peu près au niveau des faces citées, lorsque les parties de cadre sont séparées.

18. Dispositif selon la revendication 15, caractérisé en ce que l'élément de glissière et le ressort le soutenant sont réalisés de telle façon que, lorsque les parties de cadre sont séparées, l'élément de glissière est écarté de la fenêtre d'observation à une extrémité et effectue alors, autour d'un point de liaison avec le ressort, un mouvement de basculement, puis est déplacé longitudinalement dans le sens opposée à la direction d'extraction de la deuxième partie de cadre et effectue ces mouvements dans l'ordre de succession inverse, lors de l'assemblage.

19. Dispositif selon la revendication 13, caractérisé en ce que les moyens comprennent des crochets d'ancrage (432) disposés déplaçables sur la première partie de cadre, qui, lors de l'extraction, sont déplacés au-dessus de l'extrémité de l'élément de glissière et, lors de l'assemblage, sont déplacés en une position de libération.

20. Dispositif selon la revendication 19, caractérisé en ce que les crochets d'ancrage (432) sont déplaçables dans la direction d'extraction de la deuxième partie de cadre.

21. Dispositif selon la revendication 19, caractérisé en ce que les crochets d'ancrage (432) sont précontraints par un ressort dans l'une de leurs positions finales.

22. Dispositif selon la revendication 21, caractérisé en ce que les crochets d'ancrage (432) font partie d'un étrier élastique (432).

23. Dispositif selon la revendication 21, caractérisé en ce que les crochets d'ancrage (432) sont susceptibles de pivoter.

24. Dispositif selon la revendication 15 ou 18, caractérisé en ce que l'extrémité d'élément de glissière est d'abord pressé à un niveau situé au-dessous du crochet d'ancrage, et se soulève ensuite jusqu'à ce qu'une liaison fonctionnelle soit établie avec celui-ci.

25. Dispositif selon la revendication 1, caractérisé en ce que les moyens de maintien de feuilles individuelles comprennent au moins un appendice (126) dépassant, du côté tourné vers la pile de feuilles, de l'élément de glissière.

26. Dispositif selon la revendication 25, caractérisé par une paire d'appendices (126), disposée symétriquement sur l'élément de glissière.

27. Dispositif selon la revendication 25, caractérisé en ce que chaque appendice présente une face oblique, tournée vers la pile de feuilles.

28. Dispositif selon la revendication 25, caractérisé en ce que chaque appendice présente une face oblique, opposée à la pile de feuilles.

29. Dispositif selon la revendication 25, caractérisé en ce que chaque appendice dépasse du côté de l'élément de glissière, d'une valeur supérieure à l'épaisseur d'une feuille.

30. Dispositif selon la revendication 25, caractérisé en ce que chaque appendice est réalisé d'un seul tenant avec l'élément de glissière.

31. Dispositif selon la revendication 25, caractérisé en ce que la deuxième partie de cadre présente une nervure transversale (22) servant de support d'empilage résiduel, passant sur les appendices lors de la séparation des parties de cadre et présentant des évidements pour permettre le passage des appendices.

32. Dispositif selon la revendication 25, caractérisé en ce que chaque appendice comprend un crochet (300) s'étendant sensiblement perpendiculairement au plan de la feuille individuelle, dont la hauteur est égale ou inférieure à l'épaisseur d'une feuille.

33. Dispositif selon la revendication 32, caractérisé en ce que le crochet est réalisé à l'extrémité d'un plateau (301) sensiblement parallèle au plan des feuilles individuelles.

34. Dispositif selon la revendication 32 ou 33, caractérisé en ce qu'une rampe (32) montante est placée devant le crochet.

35. Dispositif selon la revendication 34, caractérisé en ce que la rampe est prévue dans la moitié côté crochet de l'élément de glissière.

36. Dispositif selon l'une des revendications 34 ou 35, caractérisé en ce qu'une bande de garniture adhésive (140), reposant sur une rampe support (305) parallèle à la rampe, est disposée sur l'élément de glissière.

37. Dispositif selon l'une des revendications 25 à 36, caractérisé en ce que, de chaque côté d'une bande adhésive (140) montée sur l'élément de glissière, est prévu un appendice (142), placé à distance de la garniture.

38. Dispositif selon la revendication 25, dans lequel, sur la première partie de cadre, sont prévus des serre-flans pour feuilles (161), sur sa paroi tournée vers l'élément de glissière, entre lesquels vient s'ajuster le au moins un appendice (126, 300).

39. Dispositif selon la revendication 1, caractérisé en ce que les moyens de maintien de feuilles individuelles comprennent une bande (140) agissant sur la feuille individuel le par une liaison par friction et placée sur l'élément de glissière, à côté de laquelle la feuille individuelle est soutenue par des éléments d'écartement (142) et en ce que la deuxième partie de cadre présente un élément de pressage (138) destiné à presser la feuille individuelle sur la bande lors de la séparation des parties de cadre, tandis que, lors de l'assemblage des parties de cadre, la pile résiduelle est maintenue par les éléments d'écartement à distance de la bande.

40. Dispositif selon la revendication 39, caractérisé en ce que la bande est formée par des bandes de garniture adhésives (140).

41. Dispositif selon la revendication 39, caractérisé en ce que l'élément de pressage (138) est prévu sur l'élément d'entraînement de pile résiduelle (122).

42. Dispositif selon la revendication 39, caractérisé en ce que l'élément de pressage (138) prend appui élastiquement sur l'élément d'entraînement de pile résiduelle (122).

43. Dispositif selon la revendication 41, caractérisé en ce que l'élément de pressage est un galet (138) susceptible d'être entraîné en rotation.

44. Dispositif selon la revendication 43, caractérisé en ce que le galet (138) est monté dans un patin (136) guidé coulissant sur l'élément d'entraînement de pile résiduelle (122).

45. Dispositif selon l'une des revendications 39 à 44, caractérisé en ce que les éléments d'écartement comprennent des nervures (142) faisant saillie de l'élément de glissière.

46. Dispositif selon la revendication 45, caractérisé en ce que les nervures (142) sont disposées des deux côtés de la bande.

47. Dispositif selon la revendication 46, caractérisé en ce qu'un espace est prévu entre la bande et les nervures d'écartement.

48. Dispositif selon la revendication 39, caractérisé en ce que la bande et les éléments d'écartement s'étendant sur une partie notable de la longueur de l'élément de glissière.

49. Dispositif selon la revendications 39 ou 48, caractérisé en ce que sur l'extrémité de l'élément de glissière située près de l'élément d'entraînement des piles résiduelles lorsque les parties de cadre sont assemblées, les éléments d'écartement commencent plus à l'écart de cette extrémité que le fait la bande.

50. Dispositif selon la revendication 40, caractérisé en ce que les bandes de garniture adhésives (140) sont plus courtes que l'élément de glissière et que sur leurs extrémités elles sont découpées obliquement, l'élément de glissière présentant à proximité de l'extrémité oblique de garniture un appendice de compensation de tolérance (166, 418) et celui-ci ayant une hauteur qui, transversalement à l'étendue de la glissière monte depuis un minimum correspondant à une garniture mince jusqu'à un maximum correspondant à une garniture épaisse.

51. Dispositif selon la revendication 1, caractérisé en ce que les éléments de maintien de feuilles individuelles comprennent un élément de pince (182, 192) déplaçable par rapport à la feuille individuelle et agissant du côté, tourné vers la pile résiduelle, avant la séparation, de la feuille individuelle et la pressant contre l'élément de glissière, des moyens destinés à la commande du déplacement de l'élément de pince en fonction du déplacement relatif des parties de cadre étant prévus.

52. Dispositif selon la revendication 51, caractérisé en ce que l'élément de pince (182) est déplaçable dans la direction de l'étendue de l'élément de glissière, entre une position de pressage et une position de libération.

53. Dispositif selon la revendication 51, caractérisé en ce que l'élément de pince (182) est déplaçable par accostage de la pile résiduelle.

54. Dispositif selon la revendication 51, caractérisé en ce que l'élément de pince (182) présente des bras (184,188) à débattement élastique.

55. Dispositif selon la revendication 51, caractérisé en ce que l'élément de pince (190) est susceptible d'être commandé par l'accostage de la pile résiduelle.

56. Dispositif selon la revendication 51, caractérisé en ce que l'élément de pince est désolidarisable de la feuille individuelle dans la position finale extérieure des parties de cadre ou lors de leur assemblage.

57. Dispositif selon la revendication 51, caractérisé en ce que l'élément de pince (190) est précontraint par un ressort dans l'une de ses positions finales.

58. Dispositif selon la revendication 51, caractérisé en ce que l'élément de pince (190) est déplacé en position de pressage après que l'élément d'entraînement de pile résiduelle est passé sur une arête transversale de la feuille individuelle.

59. Dispositif selon la revendication 51, caractérisé en ce que l'élément de pince (190) agit sur une extrémité de feuille individuelle sur laquelle l'élément d'entraînement de pile résiduelle est passé en dernier.

60. Dispositif selon la revendication 59, caractérisé par des moyens de levage de pile résiduelle, permettant un déplacement de l'élément de pince sur la feuille individuelle.

61. Dispositif selon la revendication 1, caractérisé en ce que le moyen de maintien de feuilles individuelles comprend un élément de butée (194) qui soutient la feuille individuelle sur son arête transversale à l'encontre de forces transmises par l'élément d'entraînement de pile résiduelle et comprend un élément de pince qui se place du côté tourné vers la pile résiduelle de la feuille individuelle, faisant saillie entre celle-ci et la pile résiduelle.

62. Dispositif selon la revendication 61, caractérisé en ce que le moyen de maintien de feuilles individuelles est susceptible d'être commuté, entre une position de maintien et une position de libération, par passage de la deuxième partie de cadre avec la pile résiduelle.

63. Dispositif selon la revendication 61 ou 62, caractérisé en ce que l'élément de pince bloque la feuille individuelle jusqu'à ce que les parties de cadre soient entièrement séparées.

64. Dispositif selon la revendication 61, caractérisé par des moyens de levage de pile résiduelle permettant l'insertion de l'élément de pince entre la feuille individuelle et la pile résiduelle.

65. Dispositif selon la revendication 1, caractérisé en ce que la première partie de cadre présente un premier élément de séparation stationnaire (128, 130), délimitant avec un deuxième élément de séparation (136) disposé sur la deuxième partie de cadre, au début du mouvement de la partie de cadre, un interstice de passage pour la séparation entre la feuille individuelle et la pile résiduelle et en ce que le deuxième élément de séparation, après le processus de séparation, vient accoster sur la feuille individuelle soutenue par l'élément de glissière et forme en coopération avec le dispositif de pressage un verrou bloquant le passage d'autres feuilles.

66. Dispositif selon la revendication 65, caractérisé en ce que la deuxième partie de cadre présente une nervure transversale (122) réalisée sous forme d'élément d'entraînement de pile, et sur laquelle est prévu le deuxième élément de séparation (136).

67. Dispositif selon l'une des revendications 65 ou 66, caractérisé en ce que les deux éléments de séparation sont précontraints l'un contre l'autre élastiquement au moins pendant le processus de séparation.

68. Dispositif selon la revendication 66 ou 67, caractérisé en ce que sur la nervure transversale réalisée sous forme de séparateur (122) sont disposés déplaçables des patins (136) prenant appui contre le séparateur par l'intermédiaire de ressorts (131).

69. Dispositif selon l'une des revendications 65 à 68, caractérisé en ce que le premier élément de séparation (128) comprend un gradin (134) d'une hauteur supérieure à l'épaisseur d'une feuille et inférieure à l'épaisseur de deux feuilles.

70. Dispositif selon la revendication 69, caractérisé en ce que, sur le gradin (134), dans la direction opposée à la direction d'extraction des parties de cadre, se raccorde une face de blocage (132) sur laquelle le deuxième élément de séparation (136) peut se poser.

71. Dispositif selon la revendication 69 ou 70, caractérisé en ce qu'une surface de positionnement (130) destinée à la feuille individuelle se raccorde au gradin (134) dans la direction du déplacement d'extraction des parties de cadre.

72. Dispositif selon l'une des revendications 65 à 71, caractérisé en ce que des surfaces de franchissement (152) obliques sont prévues au moins sur l'un des éléments de séparation pour le rappel de la deuxième partie de cadre.

73. Dispositif selon l'une des revendications 65 à 72, caractérisé en ce que le premier élément de séparation est réalisé sur des nervures s'étendant en direction du déplacement de la partie de cadre.

74. Dispositif selon la revendication 73, caractérisé en ce qu'est prévue au moins une paire de nervures congruentes.

75. Dispositif selon l'une des revendications 65 à 74, caractérisé en ce que chaque fois des premier, deuxtème éléments de séparation coopérant sont prévus des deux côtés d'un plan de symétrie s'étendent dans la direction de l'extraction des parties de cadre.

76. Dispositif selon la revendication 68, caractérisé en ce que dans la position de parties de cadre assemblées, le patin (136) coopère avec une face oblique verrouillant la deuxième partie de cadre par rapport à la première.

77. Dispositif selon l'une des revendications 65 à 76, caractérisé en ce que sur le deuxième élément de séparation est disposé un galet (138) faisant saillie, d'une distance inférieure à l'épaisseur d'une feuille, au-dessus de l'arête de travail (145) de l'élément de séparation.

78. Dispositif selon la revendication 77, caractérisé en ce que le premier élément de séparation (128) présente un évidement de telle façon que le galet est déchargé lorsque les perties de cadre sont assemblées.

79. Dispositif selon l'une des revendications 65 à 78, caractérisé en ce que l'élément de glissière (112) est aligné par rapport au premier et au deuxième élément de séparation, dans la direction du déplacement des parties de cadre.

80. Dispositif selon la revendication 79, caractérisé en ce que l'élément de glissière présente une extrémité venant s'engager à la façon d'un peigne, dans le premier élément de séparation (128).

81. Dispositif selon l'une des revendications 65 à 80, caractérisé en ce que le deuxième élément de séparation (136) est disposé sur une nervure de séparateur (122) s'étendent transversalement de la deuxième partie de cadre comportant des sections de surface (148) définissant un angle aigu avec le plan principal d'empilement et venant accoster sur une extrémité d'élément de glissière lors de la séparation des parties de cadre et déplaçant cet élément de glissière en direction du premier élément de séparation (128).

82. Dispositif selon la revendication 71 et 81, caractérisé en ce que l'élément de glissière est déplaçable de façon à ce que la feuille individuelle soit déposée sur la surface de positionnement (130).

83. Dispositif selon la revendication 82, caractérisé en ce que l'extrémité d'élément de glissière est déplaçable jusqu'à ce que le deuxième élément de séparation (136), puisse accoster sur la feuille individuelle déposée.

84. Dispositif selon l'une des revendications 81 à 83, caractérisé en ce que l'extrémité d'élément de glissière présente des dents de commande épaissies (124), sur lesquelles vient accoster la nervure transversale.

85. Dispositif selon la revendication 84, caractérisé en ce que l'extrémité d'élément de glissière présente une dent médiane (418) sur laquelle vient accoster un galet (136) prévu sur le deuxième élément de séparation.

86. Dispositif selon la revendication 84 et 85, caractérisé en ce que les dents épaissies définissent un premier niveau pour l'extrémité d'élément de glissière, à partir duquel le déplacement de l'extrémité d'élément de glissière continue à s'effectuer dans la même direction au moyen du roulement du galet.

87. Dispositif selon la revendication 85 ou 86, caractérisé en ce que dans l'appendice de la dent médiane est montée sur l'élément de glissière, une garniture adhésive (140) sur laquelle le galet peut rouler.

88. Dispositif selon la revendication 13 et l'une des revendications 65 à 88, caractérisé en ce que les moyens d'écartement (432) sont prévus dans la zone du premier élément de séparation.

89. Dispositif selon l'une des revendications 65 à 88, caractérisé en ce que l'élément de glissière prend appui sur un ressort à lame (114) s'étendant jusque dans la zone du premier élément de séparation.

90. Dispositif selon l'une des revendications 65 à 89, caractérisé en ce que le premier élément de séparation (128) est formé sur un fond placé en regard de la fenêtre d'observation de la première partie de cadre.

91. Dispositif selon la revendication 32, caractérisé en ce que sont prévus des moyens destinés à désactiver le processus de modification de la distribution et guidant l'arête transversale de la feuille individuelle par l'intermédiaire du crochet (300).

92. Dispositif selon la revendication 91, caractérisé en ce que les moyens de désactivation peuvent être mis en oeuvre manuellement.

93. Dispositif selon la revendication 91 ou 92, caractérisé en ce que lors de la modification de la distribution la feuille individuelle passe dans un interstice de passage et en ce que les moyens de désactivation comprennent des moyens (436) destinés à bloquer l'interstice au moins pendant une phase initiale du mouvement relatif des parties de cadre.

94. Dispositif selon la revendication 93, caractérisé en ce que les moyens de désactivation peuvent être mis en oeuvre conjointement.

95. Dispositif selon l'une des revendications 91 à 94, caractérisé en ce que la première partie de cadre est un carter avec une fenêtre d'observation, d'où l'on peut extraire un curseur formant la deuxième partie de cadre, puis venir l'insérer.

96. Dispositif selon la revendication 95, caractérisé en ce que l'organe d'entraînement de pile résiduelle est formé par une paroi d'extrémité interne du curseur.

97. Dispositif selon la revendication 95, caractérisé en ce que le crochet est disposé sur une extrémité située côté ouverture de carter de l'élément de glissière.

98. Dispositif selon l'une des revendications 91 à 97, caractérisé en ce que les moyens de désactivation présentent un organe de guidage (474) et en ce que le crochet et l'organe de guidage sont déplaçables l'un par rapport à l'autre.

99. Dispositif selon la revendication 98, caractérisé en ce que l'organe de guidage est déplaçable par rapport au crochet.

100. Dispositif selon la revendication 99, caractérisé en ce que le crochet est relié stationnaire à un élément d'appui de feuille et en ce que l'organe de guidage peut être extrait de l'élément d'appui de feuilles

101. Dispositif selon les revendications 98 à 100, caractérisé en ce que l'organe de guidage présente une piste de guidage (476) pour l'arête de feuille individuelle.

102. Dispositif selon l'une des revendications 98 à 101, caractérisé en ce que l'organe de guidage est déplaçable par rapport à l'élément de glissière.

103. Dispositif selon la revendication 102, caractérisé en ce que l'organe de guidage est déplaçable dans la direction longitudinale de la glissière.

104. Dispositif selon la revendication 95 et l'une des revendications 98 à 103, caractérisé en ce que le carter présente un fond placé en regard de la fenêtre d'observation et en ce que l'organe de guidage peut être activé depuis le fond.

105. Dispositif selon la revendication 104, caractérisé en ce que l'organe de guidage peut être placé en liaison fonctionnelle avec un organe d'activation (472) au moyen d'un déplacement de glissière par rapport au carter.

106. Dispositif selon la revendication 105, caractérisé en ce que l'organe d'activation présente une came (472) déplaçable par rapport au carter et sur laquelle accoste une section d'exploration (482) de l'organe de guidage.

107. Dispositif selon l'une des revendications 105 ou 106 et selon la revendication 93, caractérisé en ce que l'organe d'activation (468) présente également le moyen de blocage d'interstice.

108. Dispositif selon l'une des revendications 91 à 107, caractérisé en ce qu'un organe d'activation commun (466) est associé aux deux éléments de glissière disposés symétriquement, comportant chacun une section de crochet.

109. Dispositif selon l'une des revendications 104 à 108, caractérisé en ce que le fond de carter présente un passage (460) à travers lequel un organe d'actionnement (466) destiné à l'organe d'activation fait saillie vers l'extérieur.

110. Dispositif selon la revendication 109, caractérisé en ce que l'organe d'actionnement est déplaçable dans la direction du mouvement du curseur.

111. Dispositif selon la revendication 106, caractérisé en ce que la came présente une surface de commande oblique (472) le long de laquelle l'organe de guidage (474) est déplacé en coulissant en direction du déplacement du curseur.

112. Dispositif selon la revendication 103, caractérisé en ce que l'organe de guidage s'étend sur une partie notable de la longueur de l'élément de glissière.

113. Dispositif selon l'une des revendications 98 à 112, caractérisé en ce que l'élément de guidage est précontraint élastiquement dans l'une de ses positions finales.

114. Dispositif selon la revendication 113, caractérisé en ce que l'organe de guidage est précontraint élastiquement dans sa position finale libérant le processus de modification de la distribution.

115. Dispositif selon la revendication 95 ou 98, caractérisé en ce que l'élément de glissière présente une rampe de guidage (478) le long de laquelle l'organe de guidage est guidé entre une position de désactivation et une position de libération.

116. Dispositif selon la revendication 98, caractérisé en ce que l'organe de guidage comprend un étrier en fil métallique.

117. Dispositif selon la revendication 116, caractérisé en ce que l'étrier en fil métallique est en forme de U et ouvert près du crochet.

118. Dispositif selon la revendication 95 et 117, caractérisé en ce que l'élément de glissière porte deux crochets (300) et en ce qu'à chaque crochet est associé une extrémité d'étrier en fil métallique (476) libre servant de moyen de désactivation.

119. Dispositif selon l'une des revendications 116 à 118, caractérisé en ce que l'élément de glissière comprend des goulottes longitudinales (498) dans lesquelles chaque fois l'une des deux branches d'étrier parallèles peut se déplacer en coulissant.

120. Dispositif selon la revendication 92 et l'une des revendications 93 à 119, caractérisé en ce que les moyens ne peuvent être activés que lorsque les parties de cadre sont dans une position finale assemblées.

121. Dispositif selon la revendication 120, caractérisé en ce que la première partie de cadre présente un organe d'activation (466) mobile par rapport à celle-ci et des moyens de blocage (497) le bloquant dans une position de libération de modification de la distribution et en ce que les moyens de blocage peuvent être débloqués par un moyen de commande (481).

122. Dispositif selon la revendication 121, caractérisé en ce qu'après actionnement de l'organe d'activation et séparation des partie de cadre, l'organe d'activation peut être rappelé par la deuxième partie de cadre, dans sa position de libération de modification de la distribution.

123. Dispositif selon la revendication 121 ou 122, caractérisé en ce que les moyens de commande sont prévus sur la deuxième partie de cadre.

124. Dispositif selon la revendication 121, 122 ou 123, caractérisé en ce que l'organe d'activation comprend une section de blocage (477) susceptible d'être placée à l'aide des moyens de blocage, en contact de blocage et susceptible d'en être désolidarisée par une déformation élastique lors du passage sur la deuxième partie de cadre.

125. Dispositif selon la revendication 124, caractérisé en ce que la déformation élastique n'est admise que dans des positions relatives déterminées de l'organe d'activation par rapport à la première partie de cadre.

126. Dispositif selon l'une des revendications 124 à 125, caractérisé en ce que la déformation élastique ne s'effectue qu'entre deux positions finales stables des composants concernés.

127. Dispositif selon l'une ou plusieurs des revendications précédentes, caractérisé en ce qu'il est réalisé, pour des feuilles de dimensions prédéterminées, dans la direction transversale au déplacement de la partie de cadre et en ce que les deux éléments de glissière sont plus étroits que ces dimensions.

128. Dispositif selon l'une ou plusieurs des revendications précédentes, caractérisé en ce que les éléments de glissière pressent les feuilles près de leurs arêtes parallèles à l'extraction.

129. Dispositif selon l'une ou plusieurs des revendications précédentes, caractérisé en ce que l'élément de glissière est réalisé en matière synthétique et prend appui sur un ressort métallique.

130. Dispositif selon la revendication 2, caractérisé en ce que l'extrémité de ressort fixée est enfichée sur un tourillon réalisé sur le fond de la partie de cadre.

131. Dispositif selon la revendication 2, caractérisé en ce que l'élément de ressort guidé, est guidé dans une rainure du fond de la partie de cadre qui s'étend dans la direction du déplacement de la partie de cadre.

132. Dispositif selon l'une ou plusieurs des revendications précédentes, caractérisé en ce que l'élément de glissière présente sur son côté opposé à la fenêtre d'observation des nervures de rigidification.

133. Dispositif selon l'une ou plusieurs des revendications précédentes, caractérisé en ce que l'élément de glissière est réalisé symétrique par rapport à son plan médian longitudinal.

134. Dispositif selon la revendication 3, caractérisé en ce que le curseur présente un fond avec un passage à travers lequel agit le dispositif de pressage disposé dans le carter.

135. Dispositif selon la revendication 134, caractérisé en ce que l'organe d'entraînement de pile présente une face oblique écartant les éléments de glissière de la fenêtre d'observation lorsque les éléments d'entraînement de piles passent dessus.

136. Dispositif selon l'une ou plusieurs des revendications précédentes, caractérisé en ce que la deuxième partie de cadre présente une auge de prise, ménagée dans un espace libre de la deuxième partie de cadre.

137. Dispositif selon la revendication 136, caractérisé en ce que l'auge de prise est disposée au centre par rapport au plan médian s'étendant en direction du déplacement de la partie de cadre.

138. Dispositif selon la revendication 137, caractérisé en ce qu'entre l'auge de prise et les parois latérales de la première partie de cade est prévu un espace libre.

139. Dispositif selon la revendication 138, caractérisé en ce que des deux côtés du plan médian est prévu un élément de glissière, avec une extrémité, dans l'un des espaces libres.

140. Dispositif selon la revendication 138 ou 139, caractérisé en ce que les espaces libres s'étendent sur toute la hauteur de la deuxième partie de cadre.

141. Dispositif selon la revendication 65 ou une revendication s'y référant, caractérisé en ce que la deuxième partie de cadre présente des faces d'appui de piles (411) en retrait par rapport au deuxième élément de séparation (122) dans la direction du mouvement de déploiement de la deuxième partie de cadre.

142. Dispositif selon la revendication 141, caractérisé en ce qu'en vue de dessus de la deuxième partie de cadre les extrémités des faces de pose de pile sont à peu près affleurées avec la partie la plus avancée vers l'extérieur du deuxième élément de séparation.

143. Dispositif selon l'une ou plusieurs des revendications précédentes, caractérisé en ce qu'il comprend un système de transfert pour déplacer la feuille individuelle extraite d'une extrémité de pile à l'autre extrémité de pile et en ce que les composants (162, 163, 164) du système de transfert peuvent être activés et désactivés en alternance par rapport à ceux du dispositif de pressage.

144. Dispositif selon la revendication 143, caractérisé en ce que les composants sont activés et désactivés de façon commandée par le mouvement relatif des parties de cadre.

145. Dispositif selon l'une ou plusieurs des revendications précédentes, caractérisé en ce qu'il comprend des organes de levage (162, 163, 163) élastiques, formant un système de transfert pour déplacer une feuille individuel le extraite d'une extrémité de pile à l'autre.

146. Dispositif selon la revendication 145, caractérisé en ce que des organes de levage élastiques sont prévus, disposés par paires et symétriquement par rapport à la direction de déplacement de la partie de cadre.

147. Dispositif selon la revendication 144 ou 146, caractérisé en ce que les organes de levage élastiques sont disposés latéralement à côté des éléments de glissière.

148. Dispositif selon la revendication 147, caractérisé en ce que les organes de levage élastiques sont disposés entre la paire d'éléments de glissière.

149. Dispositif selon l'une des revendications précédentes, caractérisé en ce qu'est prévu un organe de positionnement de feuille individuelle (506), sur lequel s'appuie la pile (508) avec la feuille individuelle séparée placée face à l'organe de positionnement en ce que l'organe d'entraînement de pile agit sur des arêtes transversales des feuilles formant la pile, à l'aide de faces d'entraînement (504) délimitées par une arête d'extrémité (510) et ayant une section de surface, partant de l'arête d'extrémité et sensiblement perpendiculaire au plan de la feuille individuelle à séparer et destinées à l'entraînement d'au moins la feuille directement voisine de la feuille à séparer et en ce que sont prévus des moyens pour faire passer l'arête transversale de la feuille individuelle à séparer sur l'arête d'extrémité de face d'entraînement et sur l'organe de positionnement.

150. Dispositif selon la revendication 149, caractérisé en ce que devant l'organe de positionnement est placé un gradin (516) dont la hauteur est supérieure à l'épaisseur d'une feuille.

151. Dispositif selon la revendication 150, caractérisé en ce qu'une face de blocage (514) sensiblement parallèle au gradin part de cet étagement, dans la direction opposée à l'organe de positionnement.

152. Dispositif selon la revendication 149, caractérisé en ce que les faces d'entraînement comprennent une face oblique (504) formant un angle aigu avec le plan de l'organe de positionnement pour permettre l'alimentation de feuilles.

153. Dispositif selon la revendication 151 ou 152, caractérisé en ce que la face oblique s'achève à une distance de la face de blocage (514) inférieure à l'épaisseur d'une feuille.

154. Dispositif selon la revendication 153, caractérisé en ce que la face oblique arrive jusqu'à la face de blocage.

155. Dispositif selon la revendication 153 ou 154, caractérisé en ce qu'en raccordement à la face oblique la section de surface (606) perpendiculaire s'étend en direction de l'organe de positionnement.

156. Dispositif selon l'une des revendications 149 à 155, caractérisé en ce que l'arête d'extrémité présente par rapport à l'organe de positionnement un espacement supérieur à l'épaisseur d'une feuille et inférieure à l'épaisseur de deux feuilles.

157. Dispositif selon l'une des revendications 153 à 155, caractérisé en ce que la section d'extrémité (510) perpendiculaire est décalée par rapport à l'extrémité de la face oblique, d'une valeur prédéterminée, dans la direction inverse de la direction de déplacement de l'organe d'entraînement de pile.

158. Dispositif selon la revendication 157, caractérisé en ce que depuis l'extrémité de la face oblique, jusqu'au début de la section de surface perpendiculaire s'étend une face intermédiaire (518), sensiblement parallèle à la face de blocage (514).

159. Dispositif selon la revendication 151 ou une revendication s'y référant, caractérisé en ce que l'arête d'extrémité est plus proche de l'organe de positionnement que l'est le niveau de la face de blocage.

160. Dispositif selon la revendication 159, caractérisé en ce que la face de blocage est réalisée sur deux nervures espacées congruentes et en ce que la section de surface perpendiculaire est disposée entre les nervures.

161. Dispositif selon l'une des revendications 149 à 160, caractérisé en ce que l'élément d'entraînement de pile et l'organe de positionnement de feuille individuelle sont précontraints élastiquement l'un sur l'autre.

162. Dispositif selon la revendication 161, caractérisé en ce que l'organe d'entraînement de pile comprend un patin (502) prenant appui par un ressort monté sur celui-ci, et en ce que le patin présente au moins la section de surface perpendiculaire.

163. Dispositif selon l'une des revendications 149 à 162, caractérisé en ce que les moyens de guidage comprennent des faces de commande le long desquelles l'arête transversale de la feuille individuelle est déplacée lors de la séparation sur l'arête transversale, dans une direction perpendiculaire par rapport à son plan.

164. Dispositif selon la revendication 163, caractérisé en ce que les faces de commande sont déplacées en direction de l'étendue des feuilles par rapport à la section de face perpendiculaire.

165. Dispositif selon l'une des revendications 149 à 164, caractérisé en ce que les moyens de guidage sont réunis structurellement à l'organe de positionnement.

166. Dispositif selon la revendication 2 et 65, caractérisé en ce que l'extrémité de ressort mobile est guidée par le premier élément de séparation.
